(19) **Europäisches Patentamt European Patent Office Office européen des brevets**

(11) **EP 4 697 728 A1**

(12) **EUROPEAN PATENT APPLICATION**
published in accordance with Art. 153(4) EPC

(43) Date of publication:
**18.02.2026 Bulletin 2026/08**

(21) Application number: **24838364.8**

(22) Date of filing: **29.03.2024**

(51) International Patent Classification (IPC):
*H04N 19/91* *(2014.01)*

(52) Cooperative Patent Classification (CPC):
**H04N 19/124; H04N 19/85; H04N 19/91**

(86) International application number:
**PCT/CN2024/084940**

(87) International publication number:
**WO 2025/011104 (16.01.2025 Gazette 2025/03)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **11.07.2023 CN 202310854045**
**18.08.2023 CN 202311052220**

(71) Applicant: **Huawei Technologies Co., Ltd.**
**Shenzhen, Guangdong 518129 (CN)**

(72) Inventors:
• **MAO, Jue**
**Shenzhen, Guangdong 518129 (CN)**
• **ZHAO, Yin**
**Shenzhen, Guangdong 518129 (CN)**

(74) Representative: **Eisenführ Speiser**
**Patentanwälte Rechtsanwälte PartGmbB**
**Gollierstraße 4**
**80339 München (DE)**

(54) **ENCODING METHOD AND APPARATUS AND DECODING METHOD AND APPARATUS**

(57) An encoding and decoding method and apparatus are provided. The method includes: obtaining a feature map of a to-be-encoded picture (1310); obtaining a probability distribution parameter map of the feature map (1320); obtaining a first matrix based on the probability distribution parameter map (1330); determining, from a plurality of intervals, a first interval corresponding to the first matrix, where the plurality of intervals do not overlap each other, and each interval corresponds to at least one scaling factor (1340); scaling, based on a first scaling factor corresponding to the first interval, the feature map and the probability distribution parameter map that correspond to the first matrix, to obtain a scaled probability distribution parameter map (1350); and performing entropy encoding on a scaled feature map based on the scaled probability distribution parameter map, and writing an entropy encoding result into a bitstream (1360). The method can reduce computational complexity of an adaptive quantization technology and a latent scaling technology while maintaining coding performance.

[FIG. 20]

**Description**

This application claims priorities to Chinese Patent Application No. 202310854045.4, filed with the China National Intellectual Property Administration on July 11, 2023 and entitled "DATA PROCESSING METHOD AND COMPUTING DEVICE", and to Chinese Patent Application No. 202311052220.4, filed with the China National Intellectual Property Administration on August 18, 2023 and entitled "ENCODING AND DECODING METHOD AND APPARATUS", both of which are incorporated herein by reference in their entireties.

TECHNICAL FIELD

This application relates to the field of video coding, and more specifically, to an encoding and decoding method and apparatus.

BACKGROUND

Data coding includes two parts: data encoding and data decoding. Data encoding is performed at a source side (or usually referred to as an encoder side), and usually includes processing (for example, compressing) original data to reduce an amount of data required for representing the original data (for more efficient storage and/or transmission). Data decoding is performed at a destination side (or usually referred to as a decoder side), and usually includes inverse processing relative to the encoder side to reconstruct the original data. "Coding" of data in embodiments of this application should be understood as "encoding" or "decoding" of the data. A combination of an encoding part and a decoding part is also referred to as a codec (encoding and decoding, CODEC).

An adaptive quantization technology and a latent scaling technology, for example, an adaptive sigma scale (adaptive sigma scale) module, a residual and variance scale (residual and variance scale, RVS) module, an inverse residual and variance scale (inverse residual and variance scale, Inv RVS) module, and a latent scale before synthesis (latent scaling before synthesis, LSBS) module, are used in data coding. These modules are mask map-based coding tools in JPEG AI. These tools can improve coding performance, but with higher implementation complexity. The adaptive sigma scale (adaptive sigma scale) module is used as an example. A variance tensor (sigma) of $C \times H \times W$ is averaged by using $N \times N$ blocks as a unit, to obtain sigma0 of $C \times H/N \times W/N$; and sigma0 is compared with a threshold T0, and mask0 of values 0/1 is output. When mask0[c,i,j] is 1, in an $N \times N$ region corresponding to mask0[c,i,j], all values of sigma are multiplied by a scaling value scale0, and this process is repeated m times.

Therefore, how to reduce computational complexity of the adaptive quantization technology and the latent scaling technology while maintaining coding performance is a technical problem that needs to be urgently resolved.

SUMMARY

This application provides an encoding and decoding method and apparatus. The method can reduce computational complexity of an adaptive quantization technology and a latent scaling technology while maintaining coding performance.

According to a first aspect, an encoding method is provided. The method includes: obtaining a probability distribution parameter map of a feature map; obtaining a first matrix based on the probability distribution parameter map; determining, from a plurality of intervals, a first interval corresponding to the first matrix, where the plurality of intervals do not overlap each other, and each interval corresponds to at least one scaling factor; scaling, based on a first scaling factor corresponding to the first interval, an eigenvalue that is in the feature map and that corresponds to the first matrix, to obtain a scaled feature map; scaling, based on the first scaling factor corresponding to the first interval, a probability distribution parameter that is in the probability distribution parameter map and that corresponds to the first matrix, to obtain a scaled probability distribution parameter map; and performing entropy encoding on the scaled feature map based on the scaled probability distribution parameter map, and writing an entropy encoding result into a bitstream.

In the foregoing technical solution, threshold intervals are set to intervals that do not overlap each other, so that when the feature map or the probability distribution parameter map is scaled, scaling does not need to be repeated for multiple times. In this way, algorithm complexity can be reduced without compromising coding performance.

In a possible implementation, the plurality of intervals are split based on a plurality of thresholds, a quantity of the plurality of thresholds is m, a quantity of the plurality of intervals is m+1, and m is an integer greater than 1.

In a possible implementation, a first value of the first matrix is compared with at least one of the plurality of thresholds, and the first interval corresponding to the first value is determined from the plurality of intervals.

In a possible implementation, the method further includes: writing the quantity m of the plurality of thresholds and a value of each threshold into the bitstream.

In a possible implementation, the method further includes: writing the first scaling factor into the bitstream.

In a possible implementation, the first scaling factor corresponding to the first interval is multiplied by the eigenvalue that is in the feature map and that corresponds to the first matrix, to obtain the scaled feature map.

In a possible implementation, the first scaling factor corresponding to the first interval is multiplied by the probability distribution parameter that is in the probability distribution parameter map and that corresponds to the first matrix, to obtain the scaled probability distribution parameter map.

In a possible implementation, the probability distribution parameter in the probability distribution parameter map is a Gaussian distribution parameter, and the first value of the first matrix is an average value or a largest value of Gaussian distribution parameters included in the probability distribution parameter map.

In a possible implementation, the method is applied to an adaptive sigma scale module or a residual and variance scale module.

In a possible implementation, the feature map is a residual feature map, and the eigenvalue that is in the feature map and that corresponds to the first matrix is a residual eigenvalue.

According to a second aspect, a decoding method is provided. The method includes: decoding a bitstream to obtain a probability distribution parameter map; obtaining a first matrix based on the probability distribution parameter map; determining, from a plurality of intervals, a first interval corresponding to the first matrix, where the plurality of intervals do not overlap each other, and each interval corresponds to at least one scaling factor; scaling, based on a first scaling factor corresponding to the first interval, a probability distribution parameter that is in the probability distribution parameter map and that corresponds to the first matrix, to obtain a scaled probability distribution parameter map; and decoding the bitstream based on the scaled probability distribution parameter map, to obtain a feature map.

In a possible implementation, the method further includes: decoding the bitstream to obtain a quantity m of a plurality of thresholds and a value of each threshold, where the plurality of intervals are split based on the plurality of thresholds, a quantity of the plurality of intervals is m+1, and m is an integer greater than 1.

In a possible implementation, a first value of the first matrix is compared with at least one of the plurality of thresholds, and the first interval corresponding to the first value is determined from the plurality of intervals.

In a possible implementation, the method further includes: decoding the bitstream to obtain the first scaling factor.

In a possible implementation, the first scaling factor corresponding to the first interval is multiplied by the probability distribution parameter that is in the probability distribution parameter map and that corresponds to the first matrix, to obtain the scaled probability distribution parameter map.

In a possible implementation, the probability distribution parameter in the probability distribution parameter map is a Gaussian distribution parameter, and the first value of the first matrix is an average value or a largest value of Gaussian distribution parameters included in the probability distribution parameter map.

In a possible implementation, the method further includes: dividing the feature map by the first scaling factor corresponding to the first interval, to obtain a feature map before scaling.

In a possible implementation, the method is applied to an adaptive sigma scale module or an inverse residual and variance scale module.

In a possible implementation, the feature map is a residual feature map, and the residual feature map includes a residual eigenvalue.

In a possible implementation, the feature map includes an eigenvalue, the method is applied to a latent scale module, the first interval corresponds to the first scaling factor and a second scaling factor, and the method further includes: obtaining a predicted map and a residual map of the feature map; scaling, based on the first scaling factor corresponding to the first interval, a predicted eigenvalue that is in the predicted map and that corresponds to the first matrix, to obtain a scaled predicted feature map; scaling, based on the second scaling factor corresponding to the first interval, a residual eigenvalue that is in the residual map and that corresponds to the first matrix, to obtain a scaled residual feature map; and updating the feature map based on the scaled predicted map and the scaled residual map, to obtain an updated feature map.

According to a third aspect, a data processing method is provided. The method includes: obtaining a first matrix; determining, from a plurality of intervals, a first interval corresponding to the first matrix, where the plurality of intervals do not overlap, and each interval corresponds to at least one scaling factor; and scaling, based on a first scaling factor corresponding to the first interval, an element included in the first matrix, to obtain a second matrix.

With reference to the third aspect, in an implementation of the third aspect, the method is applied to an adaptive sigma scale module, the first matrix is a first variance map, and variances included in the first matrix are separately multiplied by the first scaling factor to obtain a second variance map.

With reference to the third aspect, in an implementation of the third aspect, the method is applied to a residual and variance scale module, the first matrix is a first residual map, and residuals included in the first matrix are separately multiplied by the first scaling factor to obtain a second residual map.

With reference to the third aspect, in an implementation of the third aspect, the method is applied to an inverse residual and variance scale module, the first matrix is a first residual map, and residuals included in the first matrix are separately divided by the first scaling factor to obtain a second residual map.

With reference to the third aspect, in an implementation of the third aspect, the method is applied to a latent scale before synthesis module, the first matrix is a first feature map, and residuals included in the first residual map are separately multiplied by a second scaling factor corresponding to the first interval, to obtain a fourth feature map; and a second feature map is obtained based on the first feature map, a third feature map, and the fourth feature map.

According to a fourth aspect, an encoding method is provided. The method includes: obtaining a feature map of a to-be-encoded picture; obtaining a probability distribution parameter of the feature map; obtaining a first matrix based on the probability distribution parameter; determining, from a plurality of intervals, a first interval corresponding to the first matrix, where the plurality of intervals do not overlap each other, and each interval corresponds to at least one scaling factor; scaling, based on a first scaling factor corresponding to the first interval, the feature map and the probability distribution parameter that correspond to the first matrix, to obtain a scaled feature map and a scaled probability distribution parameter; and performing entropy encoding on the scaled feature map based on the scaled probability distribution parameter, and writing an entropy encoding result into a bitstream.

With reference to the fourth aspect, in an implementation of the fourth aspect, the probability distribution parameter of the feature map is obtained based on hyperprior information, and the hyperprior information is written into the bitstream.

With reference to the fourth aspect, in an implementation of the fourth aspect, the plurality of intervals are split based on a plurality of thresholds, a quantity of the plurality of thresholds is m, a quantity of the plurality of intervals is m+1, and m is an integer greater than 1.

With reference to the fourth aspect, in an implementation of the fourth aspect, determining, from the plurality of intervals, the first interval corresponding to the first matrix includes: comparing a first value of the first matrix with at least one of the plurality of thresholds, to determine, from the plurality of intervals, the first interval corresponding to first data.

With reference to the fourth aspect, in an implementation of the fourth aspect, the quantity m of the plurality of thresholds and a value of each threshold are written into the bitstream.

With reference to the fourth aspect, in an implementation of the fourth aspect, the first scaling factor is written into the bitstream.

With reference to the fourth aspect, in an implementation of the fourth aspect, scaling, based on the first scaling factor corresponding to the first interval, the feature map corresponding to the first matrix, to obtain the scaled feature map includes: multiplying the first scaling factor corresponding to the first interval by the feature map corresponding to the first matrix, to obtain the scaled feature map.

With reference to the fourth aspect, in an implementation of the fourth aspect, scaling, based on the first scaling factor corresponding to the first interval, the probability distribution parameter corresponding to the first matrix, to obtain the scaled probability distribution parameter includes:
multiplying the first scaling factor corresponding to the first interval by the probability distribution parameter, to obtain the scaled probability distribution parameter.

With reference to the fourth aspect, in an implementation of the fourth aspect, the probability distribution parameter is a Gaussian distribution parameter, and the first value of the first matrix is an average value or a largest value of Gaussian distribution parameters.

With reference to the fourth aspect, in an implementation of the fourth aspect, the method is applied to an adaptive sigma scale module or a residual and variance scale module.

With reference to the fourth aspect, in an implementation of the fourth aspect, the feature map corresponding to the first matrix is a residual feature map.

According to a fifth aspect, a decoding method is provided. The method includes: decoding a bitstream to obtain a probability distribution parameter; obtaining a first matrix based on the probability distribution parameter; determining, from a plurality of intervals, a first interval corresponding to the first matrix, where the plurality of intervals do not overlap each other, and each interval corresponds to at least one scaling factor; scaling, based on a first scaling factor corresponding to the first interval, the probability distribution parameter corresponding to the first matrix, to obtain a scaled probability distribution parameter; and decoding the bitstream based on the scaled probability distribution parameter, to obtain a scaled feature map.

With reference to the fifth aspect, in an implementation of the fifth aspect, decoding the bitstream to obtain the probability distribution parameter includes: decoding the bitstream to obtain hyperprior information; and obtaining the probability distribution parameter based on the hyperprior information.

With reference to the fifth aspect, in an implementation of the fifth aspect, the method further includes: dividing the first scaling factor corresponding to the first interval by the feature map, to obtain the scaled feature map.

If the scaled feature map at an encoder side means a zoom-in operation on the feature map, the scaled feature map at a decoder side means a zoom-out operation on the feature map. On the contrary, if the scaled feature map at the encoder side means a zoom-out operation on the feature map, the scaled feature map at the decoder side means a zoom-in operation on the feature map.

With reference to the fifth aspect, in an implementation of the fifth aspect, decoding the bitstream to obtain a quantity m of a plurality of thresholds and a value of each threshold, where the plurality of intervals are split based on the plurality of thresholds, and a quantity of the plurality of intervals is m+1.

With reference to the fifth aspect, in an implementation of the fifth aspect, determining, from the plurality of intervals, the first interval corresponding to the first matrix includes: comparing a first value of the first matrix with at least one of the plurality of thresholds, to determine, from the plurality of intervals, the first interval corresponding to first data.

With reference to the fifth aspect, in an implementation of the fifth aspect, the first scaling factor is obtained by decoding the bitstream.

With reference to the fifth aspect, in an implementation of the fifth aspect, scaling, based on the first scaling factor corresponding to the first interval, the probability distribution parameter corresponding to the first matrix, to obtain the scaled probability distribution parameter includes: multiplying the first scaling factor corresponding to the first interval by the probability distribution parameter, to obtain the scaled probability distribution parameter.

With reference to the fifth aspect, in an implementation of the fifth aspect, the probability distribution parameter is a Gaussian distribution parameter, and the first value of the first matrix is an average value or a largest value of Gaussian distribution parameters.

With reference to the fifth aspect, in an implementation of the fifth aspect, the method is applied to an adaptive sigma scale module or an inverse residual and variance scale module or a latent scale module.

With reference to the fifth aspect, in an implementation of the fifth aspect, the feature map corresponding to the first matrix is a residual feature map.

According to a sixth aspect, an encoding method is provided. The method includes: obtaining a feature map of a to-be-encoded picture; obtaining a probability distribution parameter of the feature map; obtaining a first matrix based on the probability distribution parameter; determining, from a plurality of intervals, a first interval corresponding to the first matrix, where the plurality of intervals do not overlap each other, and each interval corresponds to at least one scaling factor; scaling, based on a first scaling factor corresponding to the first interval, the feature map corresponding to the first matrix, to obtain a scaled feature map; and performing entropy encoding on the scaled feature map based on the probability distribution parameter, and writing an entropy encoding result into a bitstream.

According to a seventh aspect, an encoding method is provided. The method includes: obtaining a feature map of a to-be-encoded picture; obtaining a probability distribution parameter of the feature map; obtaining a first matrix based on the probability distribution parameter; determining, from a plurality of intervals, a first interval corresponding to the first matrix, where the plurality of intervals do not overlap each other, and each interval corresponds to at least one scaling factor; scaling, based on a first scaling factor corresponding to the first interval, the probability distribution parameter corresponding to the first matrix, to obtain a scaled probability distribution parameter; and performing entropy encoding on the feature map based on the scaled probability distribution parameter, and writing an entropy encoding result into a bitstream.

According to an eighth aspect, an encoding apparatus is provided, including a transceiver unit and a processing unit. The processing unit is configured to: obtain a feature map of a to-be-encoded picture, and obtain a probability distribution parameter map of the feature map; and further configured to: obtain a first matrix based on the probability distribution parameter map; determine, from a plurality of intervals, a first interval corresponding to the first matrix, where the plurality of intervals do not overlap each other, and each interval corresponds to at least one scaling factor; scale, based on a first scaling factor corresponding to the first interval, an eigenvalue that is in the feature map and that corresponds to the first matrix, to obtain a scaled feature map; scale, based on the first scaling factor corresponding to the first interval, a probability distribution parameter that is in the probability distribution parameter map and that corresponds to the first matrix, to obtain a scaled probability distribution parameter map; and perform entropy encoding on the scaled feature map based on the scaled probability distribution parameter map, and write an entropy encoding result into a bitstream; and the transceiver unit is configured to send the bitstream.

In a possible implementation, the plurality of intervals are split based on a plurality of thresholds, a quantity of the plurality of thresholds is m, a quantity of the plurality of intervals is m+1, and m is an integer greater than 1.

In a possible implementation, the processing unit is specifically configured to: compare a first value of the first matrix with at least one of the plurality of thresholds, to determine, from the plurality of intervals, the first interval corresponding to the first value.

In a possible implementation, the processing unit is further configured to write the quantity m of the plurality of thresholds and a value of each threshold into the bitstream.

In a possible implementation, the processing unit is further configured to write the first scaling factor into the bitstream.

In a possible implementation, the processing unit is specifically configured to multiply the first scaling factor corresponding to the first interval by the eigenvalue that is in the feature map and that corresponds to the first matrix, to obtain the scaled feature map.

In a possible implementation, the processing unit is specifically configured to multiply the first scaling factor corresponding to the first interval by the probability distribution parameter that is in the probability distribution parameter map and that corresponds to the first matrix, to obtain the scaled probability distribution parameter map.

In a possible implementation, the probability distribution parameter in the probability distribution parameter map is a Gaussian distribution parameter, and the first value of the first matrix is an average value or a largest value of Gaussian distribution parameters included in the probability distribution parameter map.

In a possible implementation, the apparatus is applied to an adaptive sigma scale module or a residual and variance scale module.

In a possible implementation, the feature map is a residual feature map, and the eigenvalue that is in the feature map and that corresponds to the first matrix is a residual eigenvalue.

According to a ninth aspect, a decoding apparatus is provided, including a transceiver unit and a processing unit. The transceiver unit is configured to obtain a bitstream; and the processing unit is configured to decode the bitstream to obtain a probability distribution parameter map; and further configured to: obtain a first matrix based on the probability distribution parameter map; determine, from a plurality of intervals, a first interval corresponding to the first matrix, where the plurality of intervals do not overlap each other, and each interval corresponds to at least one scaling factor; scale, based on a first scaling factor corresponding to the first interval, a probability distribution parameter that is in the probability distribution parameter map and that corresponds to the first matrix, to obtain a scaled probability distribution parameter map; and decode the bitstream based on the scaled probability distribution parameter map, to obtain a feature map.

In a possible implementation, the processing unit is further configured to decode the bitstream to obtain a quantity m of a plurality of thresholds and a value of each threshold, where the plurality of intervals are split based on the plurality of thresholds, a quantity of the plurality of intervals is m+1, and m is an integer greater than 1.

In a possible implementation, the processing unit is specifically configured to: compare a first value of the first matrix with at least one of the plurality of thresholds, to determine, from the plurality of intervals, the first interval corresponding to the first value.

In a possible implementation, the processing unit is further configured to decode the bitstream to obtain the first scaling factor.

In a possible implementation, the processing unit is specifically configured to: multiply the first scaling factor corresponding to the first interval by the probability distribution parameter that is in the probability distribution parameter map and that corresponds to the first matrix, to obtain the scaled probability distribution parameter map.

In a possible implementation, the probability distribution parameter in the probability distribution parameter map is a Gaussian distribution parameter, and the first value of the first matrix is an average value or a largest value of Gaussian distribution parameters included in the probability distribution parameter map.

In a possible implementation, the processing unit is further configured to divide the feature map by the first scaling factor corresponding to the first interval, to obtain a feature map before scaling.

In a possible implementation, the apparatus is applied to an adaptive sigma scale module or an inverse residual and variance scale module.

In a possible implementation, the feature map is a residual feature map, and the residual feature map includes a residual eigenvalue.

In a possible implementation, the feature map includes an eigenvalue, the apparatus is applied to a latent scale module, and the first interval corresponds to the first scaling factor and a second scaling factor; the processing unit is further configured to obtain a predicted map and a residual map of the feature map; the processing unit is further configured to scale, based on the first scaling factor corresponding to the first interval, a predicted eigenvalue that is in the predicted map and that corresponds to the first matrix, to obtain a scaled predicted feature map; the processing unit is further configured to scale, based on the second scaling factor corresponding to the first interval, a residual eigenvalue that is in the residual map and that corresponds to the first matrix, to obtain a scaled residual feature map; and the processing unit is further configured to update the feature map based on the scaled predicted map and the scaled residual map, to obtain an updated feature map.

According to a tenth aspect, an embodiment of this application further provides an encoding apparatus. The apparatus includes at least one processor. When the at least one processor executes program code or instructions, the method according to any one of the first aspect, the third aspect, the fourth aspect, the sixth aspect, or the seventh aspect or the possible implementations of the first aspect, the third aspect, the fourth aspect, the sixth aspect, or the seventh aspect is implemented.

Optionally, the apparatus may further include at least one memory, and the at least one memory is configured to store the program code or the instructions.

According to an eleventh aspect, an embodiment of this application further provides a decoding apparatus. The apparatus includes at least one processor. When the at least one processor executes program code or instructions, the method according to any one of the second aspect, the fifth aspect, or the possible implementations of the second aspect and the fifth aspect is implemented.

Optionally, the apparatus may further include at least one memory, and the at least one memory is configured to store the program code or the instructions.

According to a twelfth aspect, an embodiment of this application further provides a chip, including an input interface, an output interface, and at least one processor. Optionally, the chip further includes a memory. The at least one processor is configured to execute code in the memory. When the at least one processor executes the code, the chip implements the method according to any one of the first aspect to the seventh aspect or the possible implementations of the first aspect to the seventh aspect.

Optionally, the chip may be an integrated circuit.

According to a thirteenth aspect, an embodiment of this application further provides a computer-readable storage medium, configured to store a computer program. The computer program is configured to implement the method according to any one of the first aspect to the seventh aspect or the possible implementations of the first aspect to the seventh aspect.

According to a fourteenth aspect, an embodiment of this application further provides a computer program product including instructions. When the instructions are run on a computer, the computer is enabled to implement the method according to any one of the first aspect to the seventh aspect or the possible implementations of the first aspect to the seventh aspect.

According to a fifteenth aspect, an embodiment of this application further provides a computer-readable storage medium. The computer-readable storage medium stores a video bitstream obtained by one or more processors by performing the method according to any one of the first aspect to the seventh aspect or the possible implementations of the first aspect to the seventh aspect.

The encoding apparatus, the decoding apparatus, the computer storage medium, the computer program product, and the chip provided in embodiments are all configured to perform the encoding method and the decoding method provided above. Therefore, for beneficial effect that can be achieved by the encoding apparatus, the decoding apparatus, the computer storage medium, the computer program product, and the chip, refer to the beneficial effect of the encoding method and the decoding method provided above. Details are not described herein again.

BRIEF DESCRIPTION OF DRAWINGS

FIG. 1 is an example block diagram of a coding system according to an embodiment of this application;
FIG. 2 is an example block diagram of a video coding system according to an embodiment of this application;
FIG. 3 is an example block diagram of a video encoder according to an embodiment of this application;
FIG. 4 is a block diagram of a hybrid architecture video encoder;
FIG. 5 is an example block diagram of a video decoder according to an embodiment of this application;
FIG. 6 is an example diagram of a candidate picture block according to an embodiment of this application;
FIG. 7 is a block diagram of a hybrid architecture video decoder;
FIG. 8 shows a structure of a JPEG AI encoder;
FIG. 9 shows a structure of a JPEG AI decoder;
FIG. 10 is an example block diagram of a video coding device according to an embodiment of this application;
FIG. 11 is an example block diagram of an apparatus according to an embodiment of this application;
FIG. 12 is a block diagram of a hybrid architecture video encoder applied to an embodiment of this application;
FIG. 13 is a block diagram of a hybrid architecture video decoder applied to an embodiment of this application;
FIG. 14 is a specific procedure of decoding;
FIG. 15 is a diagram of a calculation procedure of an existing adaptive sigma scale module during scaling;
FIG. 16 is a diagram of a calculation procedure of an existing Inv RVS module during scaling;
FIG. 17 is a diagram of a calculation procedure of an existing LSBS module during scaling;
FIG. 18 is a specific procedure of encoding;

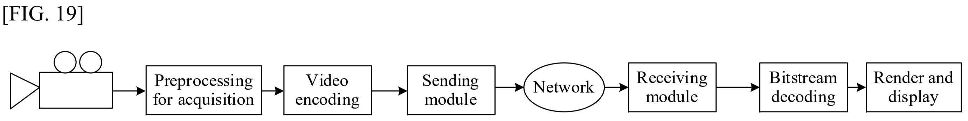

FIG. 19 is a diagram of a system architecture according to this application;
FIG. 20 is a schematic flowchart of an encoding method according to an embodiment of this application;
FIG. 21 is a diagram of m+1 intervals obtained through splitting based on m thresholds according to an embodiment of this application;
FIG. 22 is a flowchart of an adaptive sigma scale (Adpt. Sigma Scale) module;
FIG. 23 is a schematic flowchart of a decoding method according to an embodiment of this application;
FIG. 24 is a flowchart of latent scaling before synthesis (Latent Scaling Before Synthesis-LSBS);
FIG. 25 is a diagram of an encoding apparatus 1600 according to an embodiment of this application;
FIG. 26 is a diagram of a decoding apparatus 1700 according to an embodiment of this application; and
FIG. 27 is a diagram of a structure of a chip 2300 according to an embodiment of this application.

DESCRIPTION OF EMBODIMENTS

The following describes technical solutions of this application with reference to accompanying drawings.

Each aspect, embodiment, or feature is presented in this application with reference to a system including a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments of this application, terms such as "example" or "for example" are for representing giving an example, an illustration, or a description. Any embodiment or design scheme described as an "example" in this application should not be explained as being more preferred or having more advantages than another embodiment or design scheme. Exactly, the term "example" is for presenting a concept in a specific manner.

In embodiments of this application, "relevant (corresponding, relevant)" and "corresponding (corresponding)" may sometimes be mixed. It should be noted that meanings to be expressed by the two are consistent when a difference between them is not emphasized.

The service scenario described in embodiments of this application is intended to describe the technical solutions in embodiments of this application more clearly, and does not constitute a limitation on the technical solutions provided in embodiments of this application. A person of ordinary skill in the art may learn that, with evolution of network architectures and emergence of new service scenarios, the technical solutions provided in embodiments of this application are also applicable to a similar technical problem.

Reference to "one embodiment", "some embodiments", or the like described in this specification means that a specific feature, structure, or characteristic described with reference to the embodiment is included in one or more embodiments of this application. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

In this application, "at least one" means one or more, and "a plurality of" means two or more. The term "and/or" describes an association relationship for describing associated objects and represents that three relationships may exist. For example, A and/or B may represent the following cases: Only A exists, both A and B exist, and only B exists, where A and B may be singular or plural. The character "/" generally indicates an "or" relationship between the associated objects. "At least one item (piece) of the following" or a similar expression thereof means any combination of these items, including a singular item (piece) or any combination of plural items (pieces). For example, at least one item (piece) of a, b, or c may indicate: a, b, c, a and b, a and c, b and c, or a, b, and c, where a, b, and c may be singular or plural.

Data coding includes two parts: data encoding and data decoding. Data encoding is performed at a source side (or usually referred to as an encoder side), and usually includes processing (for example, compressing) original data to reduce an amount of data required for representing the original data (for more efficient storage and/or transmission). Data decoding is performed at a destination side (or usually referred to as a decoder side), and usually includes inverse processing relative to the encoder side to reconstruct the original data. "Coding" of data in embodiments of this application should be understood as "encoding" or "decoding" of the data. A combination of an encoding part and a decoding part is also referred to as a codec (encoding and decoding, CODEC).

Video compression coding technologies are widely used in fields such as multimedia services, broadcast, video communication, and storage. H.264/AVC, jointly developed by ITU-T and ISO/IEC, is the most widely used video coding standard. The joint collaborative team on video coding JCT-VC (Joint Collaborative Team on Video Coding) released the high efficiency video coding HEVC (High Efficiency Video Coding) standard in 2013. HEVC incorporates numerous new technologies in intra and inter coding, achieving compression efficiency approximately 50% higher than that of H.264/AVC. HEVC has been widely used in the market in recent years. In 2018, the JVET (Joint Video Expert Team) initiated the development of the VVC (Versatile Video Coding) standard, further improving compression efficiency for applications such as 4K/8K, HDR high dynamic range videos, and 360-degree panoramic videos. It is foreseeable that the VVC standard will be deployed in various products and services related to video pictures in the near future. In each of these standards, a hybrid architecture coding scheme based on block splitting, transform, and quantization is used, and continuous technical iteration is performed by using specific modules such as block splitting, prediction, transform, entropy encoding, and loop filtering modules, to continuously improve compression efficiency.

In a case of lossless data coding, the original data can be reconstructed. In other words, reconstructed original data has same quality as the original data (it is assumed that no transmission loss or other data loss occurs during storage or transmission). In a case of lossy data coding, further compression is performed through, for example, quantization, to reduce an amount of data required for representing the original data, and the original data cannot be fully reconstructed at the decoder side. In other words, quality of reconstructed original data is lower or worse than quality of the original data.

Embodiments of this application may be applied to video data, other data having a compression/decompression requirement, and the like. The following describes embodiments of this application by using coding of the video data (which is briefly referred to as video coding) as an example. For other types of data (for example, picture data, audio data, integer data, and other data having a compression/decompression requirement), refer to the following descriptions. Details are not described in embodiments of this application. It should be noted that, compared with video coding, in a process of coding data such as the audio data and the integer data, the data does not need to be partitioned into blocks, but the data may be directly coded.

Video coding typically refers to processing of a sequence of pictures, where the sequence of pictures forms a video or a video sequence. In the field of video coding, the terms "picture (picture)", "frame (frame)", and "image (image)" may be used as synonyms.

Several video coding standards are used for "lossy hybrid video encoding and decoding" (that is, spatial prediction and temporal prediction in pixel domain are combined with 2D transform coding for applying quantization in a transform domain). Each picture of a video sequence is typically partitioned into a set of non-overlapping blocks, and coding is typically performed at a block level. To be specific, at an encoder side, a video is usually processed, that is, encoded, at a block (video block) level. For example, a prediction block is generated through spatial (intra) prediction and temporal (inter) prediction, the prediction block is subtracted from a current block (block being processed or to be processed) to obtain a residual block, and the residual block is transformed in the transform domain and quantized to reduce an amount of data that is to be transmitted (compressed). At a decoder side, an inverse processing part relative to the encoder side is applied to an encoded block or a compressed block to reconstruct the current block for representation. Furthermore, the encoder needs to repeat the decoder processing loop such that the encoder and the decoder generate identical prediction (for example, intra prediction and inter prediction) and/or reconstructed pixels for processing, that is, coding, the subsequent blocks.

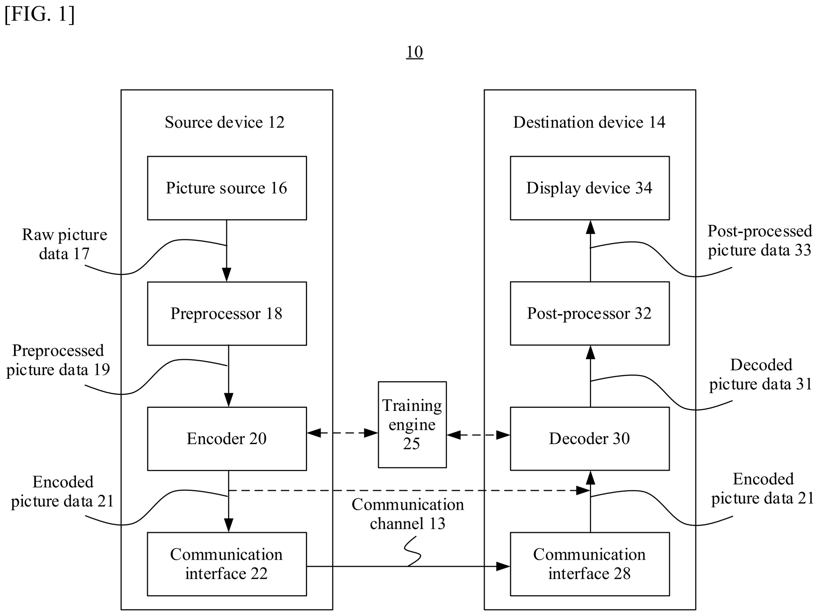

In the following embodiments of a coding system 10, an encoder 20 and a decoder 30 are described based on FIG. 1 to FIG. 4.

FIG. 1 is an example block diagram of a coding system 10 according to an embodiment of this application, for example, a video coding system 10 (or referred to as a coding system 10 for short). A video encoder 20 (also referred to as an encoder 20 for short) and a video decoder 30 (also referred to as a decoder 30 for short) of the video coding system 10 represent devices that may be configured to perform technologies according to various examples described in embodiments of this application.

As shown in FIG. 1, the coding system 10 includes a source device 12. The source device 12 is configured to provide encoded picture data 21 such as an encoded picture to a destination device 14 configured to decode the encoded picture data 21.

The source device 12 includes an encoder 20, and may additionally, that is, optionally, include a picture source 16, a preprocessor (or preprocessing unit) 18, for example, a picture preprocessor, and a communication interface (or communication unit) 22.

The picture source 16 may include or be any type of picture capturing device configured to capture a real-world picture and the like, and/or any type of picture generation device, for example, a computer graphics processing unit configured to generate a computer animated picture, or any type of device configured to obtain and/or provide a real-world picture, a computer generated picture (for example, screen content, a virtual reality (virtual reality, VR) picture, and/or any combination thereof (for example, an augmented reality (augmented reality, AR) picture)). The picture source may be any type of memory or storage storing any of the aforementioned pictures.

In order to distinguish processing performed by the preprocessor (or preprocessing unit) 18, a picture (or picture data) 17 may also be referred to as an original picture (or original picture data) 17.

The preprocessor 18 is configured to receive the original picture data 17, and preprocess the original picture data 17, to obtain a preprocessed picture (or preprocessed picture data) 19. For example, preprocessing performed by the preprocessor 18 may include trimming, color format conversion (for example, conversion from RGB to YCbCr), color correction, or de-noising. It may be understood that the preprocessing unit 18 may be optional component.

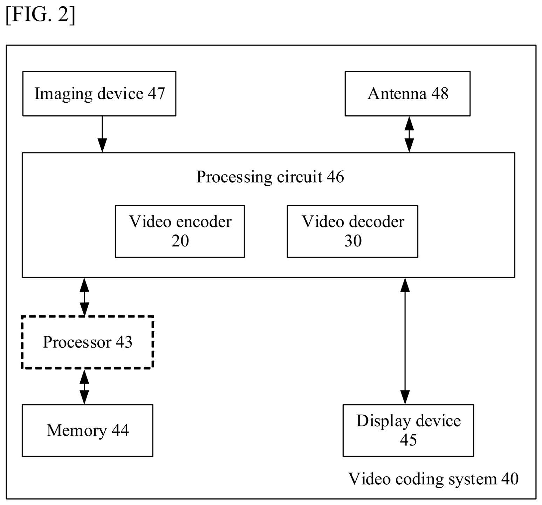

The video encoder (or encoder) 20 is configured to receive the preprocessed picture data 19 and provide the encoded picture data 21 (where further descriptions are provided below based on FIG. 2 and the like).

The communication interface 22 of the source device 12 may be configured to receive the encoded picture data 21 and send, through a communication channel 13, the encoded picture data 21 (or any further processed version thereof) to another device, for example, the destination device 14 or any other device, for storage or direct reconstruction.

The destination device 14 includes the decoder 30, and may additionally, that is, optionally, include a communication interface (or communication unit) 28, a post-processor (or post-processing unit) 32, and a display device 34.

The communication interface 28 of the destination device 14 is configured to: directly receive the encoded picture data 21 (or any further processed version thereof) from the source device 12 or any other source device such as a storage device, and provide the encoded picture data 21 for the decoder 30. For example, the storage device is an encoded picture data storage device.

The communication interface 22 and the communication interface 28 may be configured to send or receive the encoded picture data (or encoded data) 21 via a direct communication link between the source device 12 and the destination device 14, for example, a direct wired or wireless connection, or via any type of network, for example, a wired network, a wireless network, or any combination thereof, or any type of private and public networks, or any type of combination thereof.

The communication interface 22 may be, for example, configured to package the encoded picture data 21 into an appropriate format, for example, packets, and/or process the encoded picture data using any type of transmission encoding or processing for transmission via a communication link or communication network.

The communication interface 28, forming the counterpart of the communication interface 22, may be, for example, configured to receive the transmitted data and process the transmission data using any type of corresponding transmission decoding or processing and/or de-packaging to obtain the encoded picture data 21.

Both the communication interface 22 and the communication interface 28 may be configured as unidirectional communication interfaces as indicated by an arrow for the communication channel 13 in FIG. 1a pointing from the source device 12 to the destination device 14, or bi-directional communication interfaces, and may be configured, for example, to send and receive messages, for example, to set up a connection, to acknowledge and exchange any other information related to the communication link and/or data transmission, for example, encoded picture data transmission.

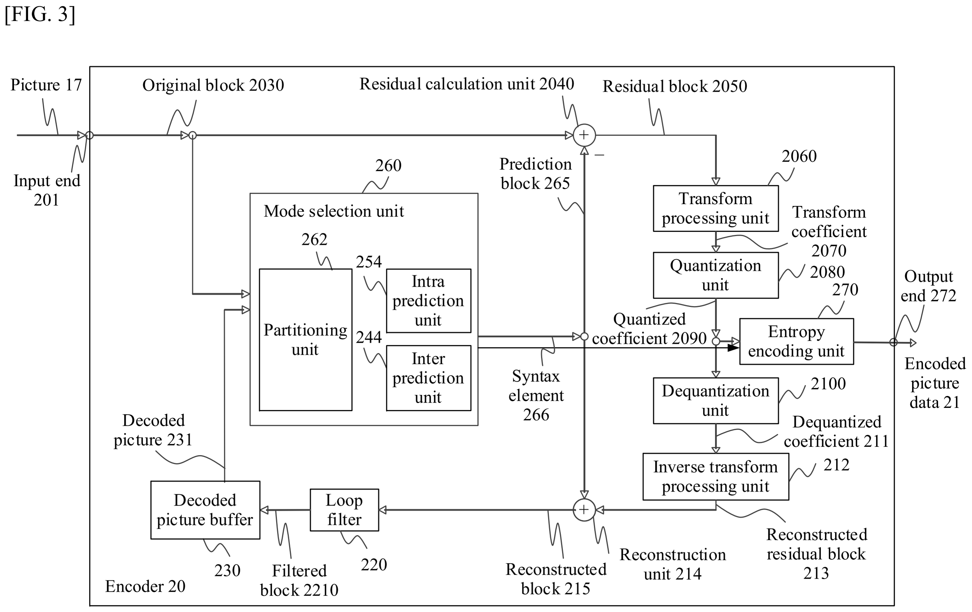

The video decoder (or decoder) 30 is configured to receive the encoded picture data 21 and provide decoded picture data (or decoded picture data) 31 (where further descriptions are provided below based on FIG. 3 and the like).

The post-processor 32 is configured to post-process the decoded picture data 31 (also called reconstructed picture data), for example, a decoded picture, to obtain post-processed picture data 33, for example, a post-processed picture. Post-processing performed by the post-processing unit 32 may include, for example, color format conversion (for example, conversion from YCbCr to RGB), color correction, trimming, re-sampling, or any other processing for generating the decoded picture data 31 for display by, for example, the display device 34.

The display device 34 is configured to receive the post-processed picture data 33 for displaying the picture to a user, a viewer, or the like. The display device 34 may be or include any type of display for representing the reconstructed picture, for example, an integrated or external display or monitor. For example, the display may include a liquid crystal display (liquid crystal display, LCD), an organic light emitting diode (organic light emitting diode, OLED) display, a plasma display, a projector, a micro LED display, a liquid crystal on silicon (liquid crystal on silicon, LCoS) display, a digital light processor (digital light processor, DLP), or any type of other display.

The coding system 10 further includes a training engine 25. The training engine 25 is configured to train the encoder 20 (especially an entropy encoding unit 270 in the encoder 20) or the decoder 30 (especially an entropy decoding unit 304 in the decoder 30), to perform entropy encoding on a to-be-encoded picture block based on estimated probability distribution obtained through estimation. For detailed descriptions of the training engine 25, refer to the following method embodiments.

As shown in FIG. 1, the source device 12 and the destination device 14 are separate devices. However, device embodiments may include both the source device 12 and the destination device 14, or include functions of both the source device 12 and the destination device 14, that is, include both the source device 12 or corresponding functions thereof and the destination device 14 or corresponding functions thereof. In such embodiments, the source device 12 or corresponding functions and the destination device 14 or corresponding functions may be implemented using the same hardware and/or software or by separate hardware and/or software or any combination thereof.

Based on the description, it is clear for a skilled person that existence and (accurate) division of different units or functions of the source device 12 and/or the destination device 14 shown in FIG. 1 may vary depending on an actual device and application.

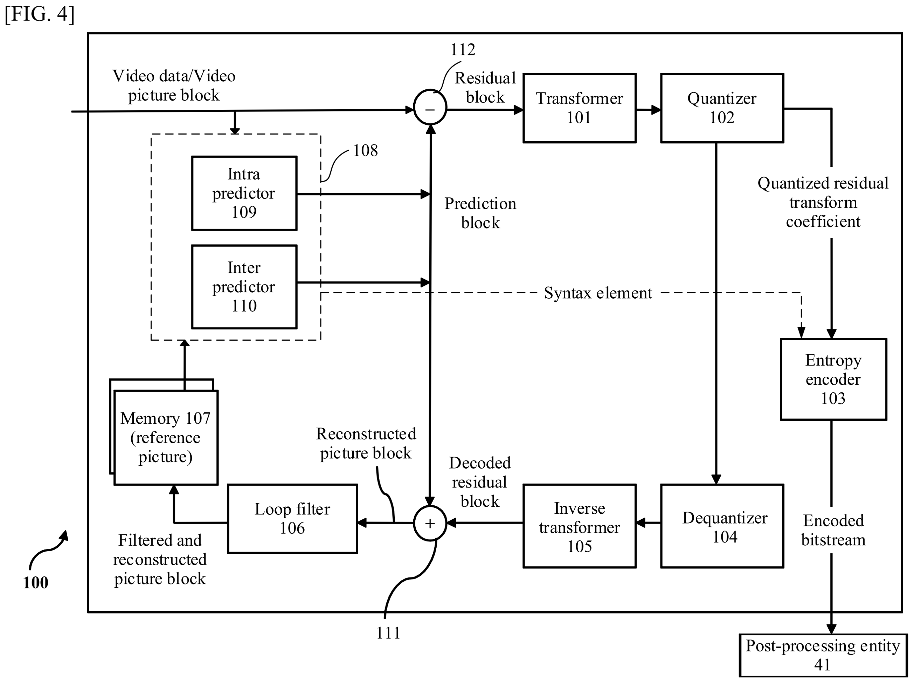

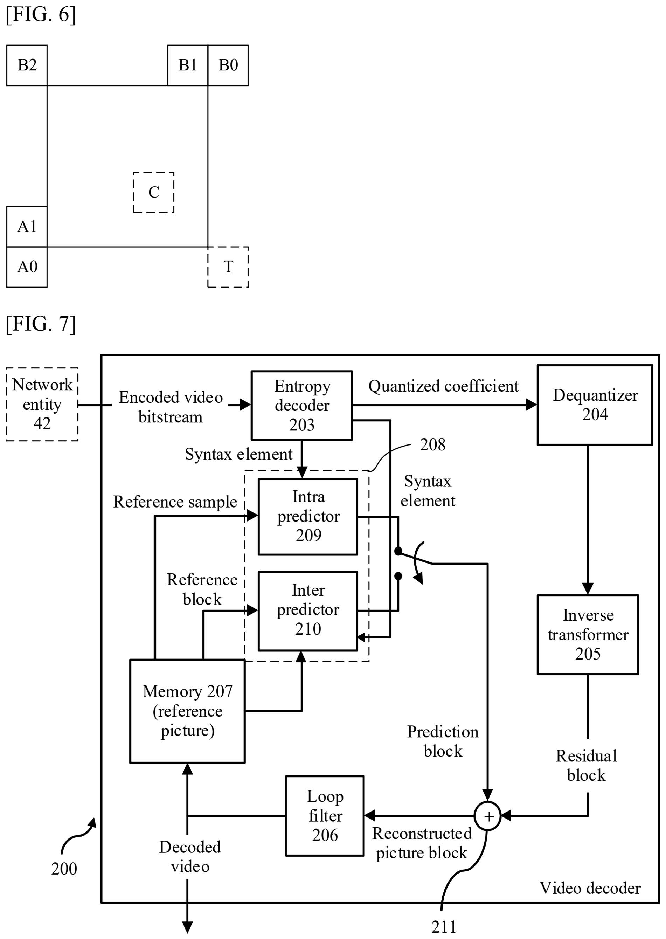

FIG. 2 is an example block diagram of a video coding system 40 according to an embodiment of this application. The encoder 20 (for example, the video encoder 20) or the decoder 30 (for example, the video decoder 30) or both the encoder 20 and the decoder 30 may be implemented by a processing circuit of the video coding system 40 shown in FIG. 2, for example, one or more microprocessors, a digital signal processor (digital signal processor, DSP), an application-specific integrated circuit (application-specific integrated circuit, ASIC), a field-programmable gate array (field-programmable gate array, FPGA), discrete logic, hardware, a video coding dedicated processor or any combination thereof. FIG. 3 is an example block diagram of a video encoder according to an embodiment of this application, and FIG. 4 is an example block diagram of a video decoder according to an embodiment of this application. The encoder 20 may be implemented by the processing circuit 46 to embody various modules discussed with reference to the encoder 20 in FIG. 3 and/or any other encoder system or subsystem described in this specification. The decoder 30 may be implemented by the processing circuit 46 to embody various modules discussed with reference to the decoder 30 in FIG. 4 and/or any other decoder system or subsystem described in this specification. The processing circuit 46 may be configured to perform the various operations as discussed later. As shown in FIG. 6, if some technologies are implemented in software, a device may store instructions for the software in an appropriate non-transitory computer-readable storage medium and may execute the instructions in hardware by using one or more processors to perform the technologies in embodiments of this application.

Either of the video encoder 20 and the video decoder 30 may be integrated as part of a combined encoder/decoder (encoder/decoder, CODEC) in a single device, as shown in FIG. 2.

The source device 12 and the destination device 14 may include any one of various devices, including any type of handheld or stationary devices, for example, notebook or laptop computers, mobile phones, smart phones, tablets or tablet computers, cameras, desktop computers, set-top boxes, televisions, display devices, digital media players, video gaming consoles, video streaming devices (such as content service servers or content delivery servers), broadcast receiver devices, broadcast transmitter devices, monitor devices, or the like and may use no or any type of operating system. The source device 12 and the destination device 14 may alternatively be devices in a cloud computing scenario, for example, virtual machines in the cloud computing scenario. In some cases, the source device 12 and the destination device 14 may be equipped with components for wireless communication. Therefore, the source device 12 and the destination device 14 may be wireless communication devices.

A virtual scenario application (application, APP), such as a virtual reality (virtual reality, VR) application, an augmented reality (augmented reality, AR) application, or a mixed reality (mixed reality, MR) application may be installed on each of the source device 12 and the destination device 14, and the VR application, the AR application, or the MR application may be run based on a user operation (for example, tapping, touching, sliding, shaking, or voice control). The source device 12 and the destination device 14 may capture pictures/videos of any object in an environment via a camera and/or a sensor, and then display a virtual object on a display device based on the captured pictures/videos. The virtual object may be a virtual object (namely, an object in a virtual environment) in a VR scenario, an AR scenario, or an MR scenario.

It should be noted that, in this embodiment of this application, the virtual scenario applications in the source device 12 and the destination device 14 may be built-in applications of the source device 12 and the destination device 14, or may be applications that are provided by a third-party service provider and that are installed by a user. This is not specifically limited herein.

In addition, real-time video transmission applications, like live broadcast applications, may be installed on the source device 12 and the destination device 14. The source device 12 and the destination device 14 may capture pictures/videos via the camera, and then display the captured pictures/videos on the display device.

In some cases, the video coding system 10 shown in FIG. 2 is merely an example and the technologies provided in embodiments of this application are applicable to video coding settings (for example, video encoding or video decoding). These settings do not necessarily include any data communication between an encoding device and a decoding device. In other examples, data is retrieved from a local memory, sent via a network, or the like. A video encoding device may encode data and store encoded data into the memory, and/or a video decoding device may retrieve data from the memory and decode the data. In some examples, encoding and decoding are performed by devices that do not communicate with each other, but simply encode data into a memory and/or retrieve data from the memory and decode the data.

FIG. 2 is the example block diagram of the video coding system 40 according to this embodiment of this application. As shown in FIG. 2, the video coding system 40 may include an imaging device 47, the video encoder 20, and the video decoder 30 (and/or a video encoder/decoder implemented by the processing circuit 46), an antenna 48, one or more processors 43, one or more memories 44, and/or a display device 45.

As shown in FIG. 2, the imaging device 47, the antenna 48, the processing circuit 46, the video encoder 20, the video decoder 30, the processor 43, the memory 44, and/or the display device 45 can communicate with each other. The video coding system 40 may include only the video encoder 20 or only the video decoder 30 in different examples.

In some examples, the antenna 48 may be configured to transmit or receive an encoded bitstream of video data. Further, in some examples, the display device 45 may be configured to present the video data. The processing circuit 46 may include application-specific integrated circuit (application-specific integrated circuit, ASIC) logic, a graphics processing unit, a general-purpose processor, or the like. The video coding system 40 may also include the optional processor 43. The optional processor 43 may similarly include application-specific integrated circuit (application-specific integrated circuit, ASIC) logic, a graphics processing unit, a general-purpose processor, or the like. In addition, the memory 44 may be a memory of any type, for example, a volatile memory (for example, a static random access memory (static random access memory, SRAM) or a dynamic random access memory (dynamic random access memory, DRAM)) or a nonvolatile memory (for example, a flash memory). In a non-limitative example, the memory 44 may be implemented by a cache memory. In other examples, the processing circuit 46 may include a memory (for example, a cache) for implementing a picture buffer.

In some examples, the video encoder 20 implemented by using the logic circuit may include a picture buffer (which is implemented by, for example, the processing circuit 46 or the memory 44) and a graphics processing unit (which is implemented by, for example, the processing circuit 46). The graphics processing unit may be communicatively coupled to the picture buffer. The graphics processing unit may be included in the video encoder 20 implemented by the processing circuit 46, to embody various modules discussed with reference to FIG. 3 and/or any other encoder system or subsystem described in this specification. The logic circuit may be configured to perform various operations described in this specification.

In some examples, the video decoder 30 may be implemented by the processing circuit 46 in a similar manner, to embody various modules discussed with reference to the video decoder 30 in FIG. 4 and/or any other decoder system or subsystem described in this specification. In some examples, the video decoder 30 implemented by using the logic circuit may include a picture buffer (which is implemented by the processing circuit 46 or the memory 44) and a graphics processing unit (which is implemented by, for example, the processing circuit 46). The graphics processing unit may be communicatively coupled to the picture buffer. The graphics processing unit may be included in the video decoder 30 implemented by the processing circuit 46, to embody various modules discussed with reference to FIG. 4 and/or any other decoder system or subsystem described in this specification.

In some examples, the antenna 48 may be configured to receive an encoded bitstream of video data. As described, the encoded bitstream may include data, an indicator, an index value, mode selection data, or the like related to video frame encoding described in this specification, for example, data related to coding partitioning (for example, a transform coefficient or a quantized transform coefficient, an optional indicator (as described), and/or data defining the coding partitioning). The video coding system 40 may further include the video decoder 30 that is coupled to the antenna 48 and that is configured to decode the encoded bitstream. The display device 45 is configured to present a video frame.

It should be understood that in this embodiment of this application, for the example described with reference to the video encoder 20, the video decoder 30 may be configured to perform a reverse process. With regard to a signaling syntax element, the video decoder 30 may be configured to receive and parse such a syntax element and correspondingly decode related video data. In some examples, the video encoder 20 may entropy encode the syntax element into an encoded video bitstream. In such examples, the video decoder 30 may parse such syntax element and decode the associated video data accordingly.

For ease of description, embodiments of this application are described with reference to versatile video coding (versatile video coding, VVC) reference software or high-efficiency video coding (high-efficiency video coding, HEVC) developed by the joint collaboration team on video coding (joint collaboration team on video coding, JCT-VC) of the ITU-T video coding experts group (video coding experts group, VCEG) and the ISO/IEC motion picture experts group (motion picture experts group, MPEG). A person of ordinary skill in the art understands that embodiments of this application are not limited to the HEVC or the VVC.

Encoder and encoding method

As shown in FIG. 3, the video encoder 20 includes an input end (or an input interface) 201, a residual calculation unit 2040, a transform processing unit 2060, a quantization unit 2080, a dequantization unit 2100, an inverse transform processing unit 212, a reconstruction unit 214, a loop filter 220, a decoded picture buffer (decoded picture buffer, DPB) 230, a mode selection unit 260, an entropy encoding unit 270, and an output end (or output interface) 272. The mode selection unit 260 may include an inter prediction unit 244, an intra prediction unit 254 and a partitioning unit 262. The inter prediction unit 244 may include a motion estimation unit and a motion compensation unit (not shown). The video encoder 20 shown in FIG. 3 may also be referred to as a hybrid video encoder or a video encoder based on a hybrid video codec.

Refer to FIG. 3. The inter prediction unit is a trained target model (also referred to as a neural network), and the neural network is used to process an input picture, picture region, or picture block, to generate a predictor of the input picture block. For example, a neural network for inter prediction is used to receive an input picture, picture region, or picture block, and generate a predictor of the input picture, picture region, or picture block.

The residual calculation unit 2040, the transform processing unit 2060, the quantization unit 2080, and the mode selection unit 260 form a forward signal path of the encoder 20, and the dequantization unit 2100, the inverse transform processing unit 212, the reconstruction unit 214, a buffer 216, the loop filter 220, the decoded picture buffer (decoded picture buffer, DPB) 230, the inter prediction unit 244, and the intra prediction unit 254 form a backward signal path of the encoder. The backward signal path of the encoder 20 corresponds to a signal path of a decoder (refer to the decoder 30 in FIG. 3). The dequantization unit 210, the inverse transform processing unit 212, the reconstruction unit 214, the loop filter 220, the decoded picture buffer 230, the inter prediction unit 244, and the intra prediction unit 254 further form a "built-in decoder" of the video encoder 20.

Picture and picture partitioning (picture and block)

The encoder 20 may be configured to receive, for example, via the input end 201, a picture (or picture data) 17, for example, a picture in a sequence of pictures forming a video or video sequence. The received picture or picture data may also be a preprocessed picture (or preprocessed picture data) 19. For ease of simplicity, the picture 17 is used in the following descriptions. The picture 17 may also be referred to as a current picture or a to-be-encoded picture (in particular in video coding to distinguish the current picture from other pictures, for example, previously encoded and/or decoded pictures of a same video sequence, namely, a video sequence that also includes the current picture).

A (digital) picture is or may be considered as a two-dimensional array or matrix including samples with intensity values. A sample in the array may also be referred to as a pixel (pixel or pel) (a short form of a picture element). A quantity of samples in horizontal and vertical direction (or axis) of the array or picture defines the size and/or resolution of the picture. For representation of color, three color components are usually employed, to be specific, the picture may be represented as or include three sample arrays. In an RBG format or color space, a picture includes corresponding red, green and blue sample arrays. However, in video coding, each pixel is typically represented in a luminance and chrominance format or color space, for example, YCbCr, which includes a luminance component indicated by Y (or sometimes represented by L) and two chrominance components indicated by Cb and Cr. The luminance (luma) component Y represents brightness or gray level intensity (where for example, brightness and gray level intensity are the same in a gray-scale picture), and the two chrominance (chrominance, chroma for short) components Cb and Cr represent chrominance or color information components. Accordingly, a picture in YCbCr format includes a luminance sample array of luminance sample values (Y), and two chrominance sample arrays of chrominance values (Cb and Cr). Pictures in RGB format may be converted or transformed into YCbCr format and vice versa, the process is also known as color transformation or conversion. If a picture is monochrome, the picture may include only a luminance sample array. Accordingly, a picture may be, for example, a luminance sample array in a monochrome format or a luminance sample array and two corresponding chrominance sample arrays in 4:2:0, 4:2:2, and 4:4:4 color formats.

In an embodiment, an embodiment of the video encoder 20 may include a picture partitioning unit (not shown in FIG. 2) configured to partition the picture 17 into a plurality of (usually non-overlapping) picture blocks 2030. These blocks may also be referred to as root blocks, macro blocks (H.264/AVC), coding tree blocks (coding tree block, CTB), or coding tree units (coding tree unit, CTU) in the H.265/HEVC and VVC standards. The partitioning unit may be configured to: use a same block size for all pictures of a video sequence and a corresponding grid defining the block size, or to change the block size between pictures or subsets or groups of pictures, and partition each picture into the corresponding blocks.

In other embodiments, the video encoder may be configured to directly receive the block 2030 of the picture 17, for example, one, several or all blocks forming the picture 17. The picture block 2030 may also be referred to as a current picture block or a to-be-encoded picture block.

Like the picture 17, the picture block 2030 is also or may be considered as a two-dimensional array or matrix including samples with intensity values (samples values), although of a smaller dimension than the picture 17. In other words, the block 2030 may include one sample array (for example, a luminance array in the case of a monochrome picture 17, or a luminance or chrominance array in the case of a color picture), three sample arrays (for example, one luminance array and two chrominance arrays in the case of a color picture 17), or any other quantity and/or type of arrays based on a used color format. Quantities of samples of the block 2030 in the horizontal and vertical directions (or axes) define the size of the block 2030. Accordingly, a block may be an array of M×N (M columns×N rows) samples, an array of M×N transform coefficients, or the like.

In an embodiment, the video encoder 20 shown in FIG. 3 is configured to encode the picture 17 block by block, for example, encode and predict each block 2030.

In an embodiment, the video encoder 20 shown in FIG. 3 may be further configured to partition and/or encode the picture by using slices (also referred to as video slices), where the picture may be partitioned or encoded by using one or more slices (typically non-overlapping). Each slice may include one or more blocks (for example, coding tree units CTUs) or one or more groups of blocks (for example, tiles (tiles) in the H.265/HEVC/VVC standard and bricks (bricks) in the VVC standard).

In an embodiment, the video encoder 20 shown in FIG. 3 may be further configured to partition and/or encode the picture by using slices/tile groups (also referred to as video tile groups) and/or tiles (also referred to as video tiles). The picture may be partitioned or encoded by using one or more slices/tile groups (typically non-overlapping), and each slice/tile group may include, for example, one or more blocks (for example, CTUs) or one or more tiles. Each tile may be of a rectangular shape or another shape, and may include one or more complete or fractional blocks (for example, CTUs).

Residual calculation

The residual calculation unit 2040 is configured to calculate a residual block 2050 based on the picture block (or an original block) 2030 and a prediction block 265 (where the prediction block 265 is described in detail subsequently), for example, obtain the residual block 2050 in the pixel domain by subtracting a sample value of the prediction block 265 from a sample value of the picture block 2030 sample-wisely (pixel-wisely).

Transform

The transform processing unit 2060 may be configured to apply a transform, for example, a discrete cosine transform (discrete cosine transform, DCT) or discrete sine transform (discrete sine transform, DST), on the sample values of the residual block 2050 to obtain transform coefficients 2070 in the transform domain. The transform coefficients 2070 may also be referred to as transform residual coefficients and represent the residual block 2050 in the transform domain.

The transform processing unit 2060 may be configured to apply integer approximations of DCT/DST, such as transforms specified in HEVC/H.265. Compared with an orthogonal DCT transform, such integer approximations are usually scaled based on a factor. To preserve a norm of a residual block that is processed through forward transform and inverse transform, an additional scaling factor is applied as a part of the transform process. The scaling factor is usually selected based on some constraints, for example, the scaling factor being a power of 2 for a shift operation, a bit depth of the transform coefficient, and a tradeoff between accuracy and implementation costs. A specific scaling factor is, for example, specified for an inverse transform, for example, by the inverse transform processing unit 212 at the encoder side 20 (and the corresponding inverse transform, for example, by the inverse transform processing unit 312 at the decoder side 30), and a corresponding scaling factor for the forward transform, for example, by the transform processing unit 2060 at the encoder side 20 may be specified accordingly.

In an embodiment, the video encoder 20 (correspondingly, the transform processing unit 2060) may be configured to output a transform parameter like one or more transform types, for example, directly output the transform parameter or output the transform parameter after the transform parameter is encoded or compressed by the entropy encoding unit 270, so that, for example, the video decoder 30 may receive and use the transform parameter for decoding.

Quantification

The quantization unit 2080 may be configured to quantize the transform coefficients 2070 to obtain quantized transform coefficients 2090, for example, by applying scalar quantization or vector quantization. The quantized transform coefficient 2090 may also be referred to as a quantized residual coefficient 2090.

A quantization process may reduce a bit depth related to some or all of the transform coefficients 2070. For example, an n-bit transform coefficient may be rounded down to an m-bit transform coefficient during quantization, where n is greater than m. A quantization degree may be modified by adjusting a quantization parameter (quantization parameter, QP). For example, for the scalar quantization, different scales may be used to implement finer or coarser quantization. A smaller quantization step size corresponds to finer quantization, and a larger quantization step size corresponds to coarser quantization. An appropriate quantization step size may be indicated by a quantization parameter (quantization parameter, QP). For example, the quantization parameter may be an index to a predefined set of appropriate quantization step sizes. For example, a smaller quantization parameter may correspond to finer quantization (a smaller quantization step size) and a larger quantization parameter may correspond to coarser quantization (a larger quantization step size), or vice versa. The quantization may include division by a quantization step size, and corresponding dequantization performed by the dequantization unit 2100 or the like may include multiplication by the quantization step size. Embodiments according to some standards such as the HEVC, may be configured to use a quantization parameter to determine the quantization step size. Generally, the quantization step size may be calculated based on a quantization parameter by using a fixed point approximation of an equation including division. Additional scaling factors may be introduced for quantization and dequantization to restore the norm of the residual block, where the norm of the residual block may be modified because of a scale used in the fixed point approximation of the equation for the quantization step size and the quantization parameter. In one example implementation, the scaling of the inverse transform and dequantization might be combined. Alternatively, customized quantization tables may be used and signaled from the encoder to the decoder, for example, in a bitstream. The quantization is a lossy operation, where the loss increases with increasing of the quantization step size.

In an embodiment, the video encoder 20 (correspondingly, the quantization unit 2080) may be configured to output a quantization parameter (quantization parameter, QP), for example, directly output the quantization parameter or output the quantization parameter after the quantization parameter is encoded or compressed by the entropy encoding unit 270, so that, for example, the video decoder 30 may receive and use the quantization parameter for decoding.

Dequantization

The dequantization unit 2100 is configured to apply the dequantization of the quantization unit 2080 on the quantized coefficients to obtain dequantized coefficients 2110, for example, by applying the dequantization scheme of the quantization scheme applied by the quantization unit 2080 based on or using the same quantization step size as the quantization unit 2080. The dequantized coefficients 2110 may also be referred to as dequantized residual coefficients 2110 and correspond, although typically not identical to the transform coefficients due to the loss by quantization, to the transform coefficients 2070.

Inverse transform

The inverse transform processing unit 212 is configured to apply the inverse transform of the transform applied by the transform processing unit 2060, for example, an inverse discrete cosine transform (discrete cosine transform, DCT) or an inverse discrete sine transform (discrete sine transform, DST), to obtain a reconstructed residual block 213 (or corresponding dequantized coefficients 213) in the pixel domain. The reconstructed residual block 213 may also be referred to as a transform block 213.

Reconstruction

The reconstruction unit 214 (for example, a summator 214) is configured to add the transform block 213 (that is, the reconstructed residual block 213) to the prediction block 265 to obtain a reconstructed block 215 in the pixel domain, for example, add a sample value of the reconstructed residual block 213 and a sample value of the prediction block 265.

Filtering

A loop filter unit 220 (or "loop filter" 220 for short), is configured to filter the reconstructed block 215 to obtain a filtered block 221, or in general, to filter reconstructed samples to obtain filtered sample values. The loop filter unit is, for example, configured to smooth pixel transitions, or otherwise improve the video quality. The loop filter unit 220 may include one or more loop filters such as a deblocking filter, a sample-adaptive offset (sample-adaptive offset, SAO) filter or one or more other filters, for example, an adaptive loop filter (adaptive loop filter, ALF), a noise suppression filter (noise suppression filter, NSF), or any combination thereof. In an example, the loop filter unit 220 may include a deblocking filter, a SAO filter and an ALF. A sequence of a filtering process may be the deblocking filter, the SAO filter, and the ALF. For another example, a process referred to as luminance mapping with chrominance scaling (luma mapping with chroma scaling, LMCS) (that is, an adaptive in-loop reshaper) is added. This process is performed before deblocking. In another example, a deblocking filter process may be also applied to internal sub-block edges, for example, affine sub-block edges, ATMVP sub-block edges, sub-block transform (sub-block transform, SBT) edges, and intra sub-partition (intra sub-partition, ISP) edges. Although the loop filter unit 220 is shown as the loop filter in FIG. 2, in another configuration, the loop filter unit 220 may be implemented as a post loop filter. The filtered block 221 may also be referred to as a filtered reconstructed block 221.

In an embodiment, the video encoder 20 (correspondingly, the loop filter unit 220) may be configured to output loop filter parameters (such as a SAO filter parameter, an ALF parameter, or an LMCS parameter), for example, directly output the loop filter parameters or output the loop filter parameters after entropy encoding is performed on the loop filter parameters by the entropy encoding unit 270, so that, for example, the decoder 30 may receive and use a same loop filter parameter or different loop filter parameters for decoding.

Decoded picture buffer

The decoded picture buffer (decoded picture buffer, DPB) 230 may be a memory that stores reference pictures, or in general reference picture data, for encoding video data by the video encoder 20. The DPB 230 may be formed by any one of a variety of memory devices, such as a dynamic random access memory (dynamic random access memory, DRAM), including a synchronous DRAM (synchronous DRAM, SDRAM), a magnetoresistive RAM (magnetoresistive RAM, MRAM), a resistive RAM (resistive RAM, RRAM), or another type of storage device. The decoded picture buffer 230 may be configured to store one or more filtered blocks 221. The decoded picture buffer 230 may be further configured to store other previously filtered blocks, for example, previously reconstructed and filtered blocks 221, of a same current picture or different pictures such as previously reconstructed pictures, and may provide complete previously reconstructed, that is, decoded, pictures (and corresponding reference blocks and samples) and/or a partially reconstructed current picture (and corresponding reference blocks and samples), for example, for inter prediction. The decoded picture buffer 230 may be further configured to store one or more unfiltered reconstructed blocks 215, or generally store unfiltered reconstructed samples, for example, the reconstructed block 215 that is not filtered by the loop filter unit 220, or a reconstructed block or a reconstructed sample on which no any other processing is performed.

Mode selection (partitioning and prediction)

The mode selection unit 260 includes the partitioning unit 262, the inter prediction unit 244, and the intra prediction unit 254, and is configured to receive or obtain original picture data such as the original block 2030 (the current block 2030 of the current picture 17) and the reconstructed picture data, for example, a filtered and/or unfiltered reconstructed sample or reconstructed block of a same picture (the current picture) and/or one or more previously decoded pictures, from the decoded picture buffer 230 or another buffer (for example, a column buffer, not shown in FIG. 2). The reconstructed picture data is used as reference picture data for prediction, for example, inter prediction or intra prediction, to obtain a prediction block 265 or a predictor 265.

The mode selection unit 260 may be configured to determine or select partitioning for a current block (including non-partitioning) and a prediction mode (for example, an intra or inter prediction mode) and generate a corresponding prediction block 265, which is used for calculation of the residual block 2050 and for reconstruction of the reconstructed block 215.

In an embodiment, the mode selection unit 260 may be configured to select partitioning and prediction modes (for example, from prediction modes supported by or available to the mode selection unit 260). The prediction mode provides best matching or a minimum residual (the minimum residual means better compression for transmission or storage), provides minimum signaling overheads (the minimum signaling overheads mean better compression for transmission or storage), or considers or balances both the minimum residual and the minimum signaling overheads. The mode selection unit 260 may be configured to determine the partitioning and prediction mode based on rate distortion optimization (rate distortion Optimization, RDO), that is, select the prediction mode which provides a minimum rate distortion. The terms "best", "lowest", "optimal" and the like in the specification do not necessarily mean "best", "lowest", "optimal" in general, but may also refer to situations in which termination or selection criteria are met. For example, values that exceed or fall below a threshold or other restrictions may result in "suboptimal selections" but reduce complexity and processing time.

In other words, the partitioning unit 262 may be configured to partition a picture of a video sequence into a sequence of coding tree units (coding tree units, CTUs), and the CTU may be further partitioned into smaller block partitions or sub-blocks (which form the blocks again), for example, iteratively using quad-tree partitioning (quad-tree partitioning, QT), binary-tree partitioning (binary-tree partitioning, BT), triple-tree partitioning (triple-tree partitioning, TT), or any combination thereof, and to perform, for example, prediction for each of the block partitions or sub-blocks, where mode selection includes selection of a tree structure of the partitioned block and prediction modes applied to each of the block partitions or sub-blocks.

In the following partitioning (for example, by partitioning unit 262) and prediction processing (for example, by the inter prediction unit 244 and intra prediction unit 254) performed by the video encoder 20 will be explained in more detail.

Partitioning

The partitioning unit 262 may partition (or split) a picture block (or a CTU) into smaller partitions, for example, square or rectangular small blocks. For a picture that has three sample arrays, a CTU includes a block of $N \times N$ luminance samples and two corresponding blocks of chrominance samples. A maximum allowed size of a luminance block in the CTU is specified to be $128 \times 128$ in the developing versatile video coding (versatile video coding, VVC) standard, but may be specified to be a value different from $128 \times 128$ in the future, for example, $256 \times 256$. The CTUs of a picture may be clustered/grouped as slices/tile groups, tiles or bricks. A tile covers a rectangular region of a picture, and a tile may be divided into one or more bricks. A brick includes a plurality of CTU rows in a tile. A tile that is not partitioned into a plurality of bricks may be referred to as a brick. However, a brick is a true subset of a tile and is not referred to as a tile. Two modes of tile groups, namely, a raster-scan slice/tile group mode and a rectangular slice mode, are supported in VVC. In the raster-scan tile group mode, a slice/tile group includes a sequence of tiles in tile raster scan of a picture. In the rectangular slice mode, a slice includes a plurality of bricks of a picture that collectively form a rectangular region of the picture. The bricks within a rectangular slice are in an order of brick raster scan of the slice. These smaller blocks (which may also be referred to as sub-blocks) may be further partitioned into even smaller partitions. This is also referred to as tree partitioning or hierarchical tree partitioning. A root block, for example, at a root tree level 0 (a hierarchy level 0, and a depth 0) may be recursively partitioned into two or more blocks at a next lower tree level, for example, nodes at a tree level 1 (a hierarchy level 1, and a depth 1). These blocks may be partitioned into two or more blocks at a next lower level again, for example, a tree level 2 (a hierarchy level 2 and a depth 2), until partitioning is terminated (because a termination criterion is fulfilled, for example, a maximum tree depth or minimum block size is reached). Blocks which are not further partitioned are also referred to as leaf-blocks or leaf nodes of the tree. A tree using partitioning into two partitions is referred to as a binary-tree (binary-tree, BT), a tree using partitioning into three partitions is referred to as a ternary-tree (ternary-tree, TT), and a tree using partitioning into four partitions is referred to as a quad-tree (quad-tree, QT).

For example, a coding tree unit (CTU) may be or include a CTB of luminance samples, two corresponding CTBs of chrominance samples of a picture that has three sample arrays, a CTB of samples of a monochrome picture, or a CTB of samples of a picture that is coded by using three separate color planes and syntax structures (for coding the samples). Correspondingly, a coding tree block (CTB) may be a block of $N \times N$ samples. N may be set to a specific value to split a component into CTBs. This is partitioning. A coding unit (coding unit, CU) may be or include a coding block of luminance samples, two corresponding coding blocks of chrominance samples of a picture that has three sample arrays, a coding block of samples of a monochrome picture, or a coding block of samples of a picture that is coded by using three separate color planes and syntax structures (for coding the samples). Correspondingly, a coding block (CB) may be a block of $M \times N$ samples. M and N may be set to specific values to split a CTB into coding blocks. This is partitioning.

For example, in an embodiment, a coding tree unit (CTU) may be split into a plurality of CUs by using a quad-tree structure represented as a coding tree and according to HEVC. The decision whether to code a picture region using inter-picture (temporal) or intra-picture (spatial) prediction is made at the leaf CU level. Each leaf CU can be further split into one, two or four PUs according to the PU splitting type. Inside one PU, the same prediction process is applied and the relevant information is transmitted to the decoder on a PU basis. After the residual block is obtained by applying the prediction process based on the PU splitting type, a leaf CU can be partitioned into transform units (TUs) based on another quad-tree structure similar to a coding tree for the CU.

For example, in an embodiment, according to a developing latest video coding standard (referred to as versatile video coding (VVC)), a combined quad-tree with a nested multi-type tree (such as a binary-tree and a ternary-tree) is used to split a segmentation structure for partitioning a coding tree unit. In a coding tree structure in a coding tree unit, a CU may be square or rectangular. For example, the coding tree unit (CTU) is first partitioned by a quad-tree structure. Then, quadtree leaf nodes are further partitioned by a multi-type tree structure. There are four splitting types in the multi-type tree structure: vertical binary-tree splitting (SPLIT_BT_VER), horizontal binary-tree splitting (SPLIT_BT_HOR), vertical ternary-tree splitting (SPLIT_TT_VER), and horizontal ternary-tree splitting (SPLIT_TT_HOR). Leaf nodes of the multi-type tree are referred to as coding units (CUs). Such segmentation is used for prediction and transform processing without any other partitioning, unless the CU is excessively large for a maximum transform length. This means that, in most cases, the CU, the PU, and the TU have a same block size in the quad-tree with a nested multi-type tree coding block structure. An exception occurs when a maximum supported transform length is smaller than a width or height of a color component of the CU. A unique signaling mechanism of partition splitting information in the quad-tree with the nested multi-type tree coding structure is formulated in the VVC. In the signaling mechanism, a coding tree unit (CTU) is treated as the root of a quad-tree and is first partitioned by a quad-tree structure. Each quadtree leaf node (when sufficiently large to allow it) is then further partitioned by a multi-type tree structure. In the multi-type tree structure, a first flag (mtt_split_cu_flag) indicates whether to further partition the node; and when the node is further partitioned, first, a second flag (mtt_split_cu_vertical_flag) indicates a split direction, and then a third flag (mtt_split_cu_binary_flag) indicates whether the split is binary-tree split or ternary-tree split. Based on values of mtt_split_cu_vertical_flag and mtt_split_cu_binary_flag, the decoder may derive a multi-type tree split mode (MttSplitMode) of the CU according to a predefined rule or table. It should be noted, for a specific design, for example, a 64×64 luminance block and 32×32 chrominance pipeline design in a VVC hardware decoder, TT split is not allowed when a width or a height of a luminance coding block is greater than 64. TT split is also not allowed when a width or a height of a chrominance coding block is greater than 32. In the pipeline design, a picture is split into a plurality of virtual pipeline data units (virtual pipeline data units, VPDUs), and the VPDUs are defined as non-overlapping units in the picture. In the hardware decoder, consecutive VPDUs are simultaneously processed in a plurality of pipeline stages. A VPDU size is roughly proportional to a buffer size in most pipeline stages. Therefore, a small VPDU size needs to be kept. In most hardware decoders, the VPDU size may be set to a maximum transform block (transform block, TB) size. However, in VVC, ternary-tree (TT) and binary-tree (BT) partition may cause an increase in the VPDU size.

In addition, it should be noted that, when a portion of a tree node block exceeds the bottom or right picture boundary, the tree node block is forced to be split until the all samples of every coded CU are located inside the picture boundaries.

For example, an intra sub-partition (intra sub-partitions, ISP) tool may split a luminance intra prediction block vertically or horizontally into two or four sub-partitions based on a block size.

In an example, the mode selection unit 260 of the video encoder 20 may be configured to perform any combination of the partitioning techniques described above.

As described above, the video encoder 20 is configured to determine or select the best or an optimum prediction mode from a set of (pre-determined) prediction modes. The set of prediction modes may include, for example, an intra prediction mode and/or an inter prediction mode.

Intra prediction

A set of intra prediction modes may include 35 different intra prediction modes, for example, non-directional modes such as a DC (or average) mode and a planar mode, or directional modes such as those defined in HEVC, or may include 67 different intra prediction modes, for example, non-directional modes such as a DC (or average) mode and a planar mode, or directional modes such as those defined in VVC. As an example, several conventional angular intra prediction modes are adaptively replaced with wide-angle intra prediction modes for the non-square blocks, for example, as defined in VVC. As another example, to avoid division operations for DC prediction, only the longer side is used to compute the average for non-square blocks. In addition, the results of intra prediction of planar mode may be further modified by using a position dependent intra prediction combination (position dependent intra prediction combination, PDPC) method.

The intra prediction unit 254 is configured to use reconstructed samples of neighboring blocks of a same current picture in the intra prediction mode in the set of intra prediction modes, to generate an intra prediction block 265.

The intra prediction unit 254 (or in general the mode selection unit 260) is further configured to output intra prediction parameters (or in general information indicating the selected intra prediction mode for the block) to the entropy encoding unit 270 in form of syntax elements 266 for inclusion into the encoded picture data 21, so that the video decoder 30 may perform an operation, for example, receive and use a prediction parameter for decoding.

Intra prediction modes in HEVC include a direct current prediction mode, a planar prediction mode, and 33 angle prediction modes. That is, there are 35 candidate prediction modes in total. A current block may use pixels of reconstructed picture blocks on left and upper sides as references to perform intra prediction. A picture block that is in a surrounding region of the current block and that is used to perform intra prediction on the current block becomes a reference block, and a pixel in the reference block is referred to as a reference pixel. Among the 35 candidate prediction modes, the direct current prediction mode is applicable to a region whose texture is flat in the current block, and all pixels in the region use an average value of reference pixels in the reference block as prediction. The planar prediction mode is applicable to a picture block whose texture changes smoothly. For the current block that meets the condition, bilinear interpolation is performed by using a reference pixel in a reference block as prediction of all pixels in the current block. In the angle prediction mode, a value of a reference pixel in a corresponding reference block is copied along an angle as prediction of all pixels in the current block by using a feature that texture of the current block is highly correlated with texture of a neighboring reconstructed picture block.

An HEVC encoder selects an optimal intra prediction mode from the 35 candidate prediction modes for the current block, and writes the optimal intra prediction mode into a video bitstream. To improve coding efficiency of intra prediction, the encoder/decoder derives three most probable modes from respective optimal intra prediction modes of reconstructed picture blocks that use intra prediction in the surrounding region. If the optimal intra prediction mode selected for the current block is one of the three most probable modes, a first index is encoded to indicate that the selected optimal intra prediction mode is one of the three most probable modes. If the selected optimal intra prediction mode is not one of the three most probable modes, a second index is encoded to indicate that the selected optimal intra prediction mode is one of the other 32 modes (modes other than the foregoing three most probable modes among the 35 candidate prediction modes). The HEVC standard uses a 5-bit fixed-length code as the foregoing second index.

A method for deriving the three most probable modes by the HEVC encoder includes: selecting optimal intra prediction modes of the left neighboring picture block and the upper neighboring picture block of the current block, and putting the optimal intra prediction modes into a set; and if the two optimal intra prediction modes are the same, retaining only one intra prediction mode in the set. If the two optimal intra prediction modes are the same and both are angle prediction modes, two angle prediction modes adjacent to an angle direction are further selected and added to the set. Otherwise, the planar prediction mode, the direct current mode, and a vertical prediction mode are sequentially selected and added to the set until a quantity of modes in the set reaches 3.

After performing entropy decoding on the bitstream, the HEVC decoder obtains mode information of the current block. The mode information includes an indicator indicating whether the optimal intra prediction mode of the current block is in the three most probable modes, an index of the optimal intra prediction mode of the current block in the three most probable modes, or an index of the optimal intra prediction mode of the current block in the other 32 modes.

Inter prediction

In a possible implementation, a set of inter prediction modes depends on available reference pictures (that is, previous at least partially decoded pictures, for example, stored in the DBP 230) and other inter prediction parameters, for example, whether the entire reference picture or only a part, for example, a search window region around the region of the current block, of the reference picture is used for searching for a best matching reference block, and/or for example, whether pixel interpolation is applied, for example, half-pixel, quarter-pixel and/or 1/16-pixel interpolation, or not.

In addition to the foregoing prediction modes, a skip mode and/or a direct mode may be applied.

For example, a merge candidate list in an extended merge prediction mode includes the following five candidate types in sequence: spatial MVP of spatially neighboring CUs, temporal MVP of collocated CUs, history-based MVP of a FIFO table, pairwise average MVP, and zero MVs. A bilateral-matching-based decoder side motion vector refinement (decoder side motion vector refinement, DMVR) may be applied to increase accuracy of the MVs of the merge mode. A merge mode with MVD (merge mode with MVD, MMVD) comes from a merge mode with motion vector differences. An MMVD flag is signaled right after sending a skip flag and a merge flag to specify whether the MMVD is used for a CU. A CU-level adaptive motion vector resolution (adaptive motion vector resolution, AMVR) scheme may be applied. AMVR allows MVD of the CU to be coded in different precision. The MVD of the current CU may be adaptively selected based on a prediction mode of the current CU. When a CU is coded in the merge mode, a combined inter/intra prediction (combined inter/intra prediction, CIIP) mode may be applied to the current CU. Weighted averaging of the inter and intra prediction signals is performed to obtain the CIIP prediction. For affine motion compensation prediction, an affine motion field of a block is described by using motion information of a motion vector of two control points (four parameters) or three control points (six parameters). Subblock-based temporal motion vector prediction (subblock-based temporal motion vector prediction, SbTMVP), which is similar to the temporal motion vector prediction (temporal motion vector prediction, TMVP) in HEVC, but predicts the motion vectors of the sub-CUs within the current CU. A bi-directional optical flow (bi-directional optical flow, BDOF), previously referred to as BIO, is a simpler version that requires less computation, especially in terms of quantity of multiplications and the size of the multiplier. Triangle partition mode, in such a mode, a CU is split evenly into two triangle-shaped partitions, using either the diagonal split or the anti-diagonal split. Besides, the bi-prediction mode is extended beyond simple averaging to allow weighted averaging of the two prediction signals.

The inter prediction unit 244 may include a motion estimation (motion estimation, ME) unit and a motion compensation (motion compensation, MC) unit (where both are not shown in FIG. 2). The motion estimation unit may be configured to receive or obtain the picture block 2030 (the current picture block 2030 of the current picture 17) and a decoded picture 231, or at least one or more previously reconstructed blocks, for example, reconstructed blocks of one or more other/different previously decoded pictures 231, for motion estimation. For example, a video sequence may include the current picture and the previously decoded picture 231, or in other words, the current picture and the previously decoded picture 231 may be a part of or form a sequence of pictures forming the video sequence.

For example, the encoder 20 may be configured to select a reference block from a plurality of reference blocks of a same picture or different pictures of a plurality of other pictures and provide a reference picture (or a reference picture index) and/or an offset (spatial offset) between a position (x and y coordinates) of the reference block and a position of the current block as inter prediction parameters to the motion estimation unit. This offset is also referred to as a motion vector (motion vector, MV).

The motion compensation unit is configured to obtain, for example, receive, an inter prediction parameter and to perform inter prediction based on or using the inter prediction parameter to obtain an inter prediction block 246. Motion compensation performed by the motion compensation unit may include extracting or generating a prediction block based on a motion/block vector determined through motion estimation, and may further include performing interpolation on sub-pixel precision. Interpolation filtering may be performed to generate a sample of another pixel from a sample of a known pixel, to potentially increase a quantity of candidate prediction blocks that may be used to encode a picture block. Upon receiving the motion vector for the PU of the current picture block, the motion compensation unit may locate the prediction block to which the motion vector points in one of the reference picture lists.

The motion compensation unit may also generate syntax elements associated with the blocks and video slices for use by video decoder 30 in decoding the picture blocks of the video slice. In addition or as an alternative to slices and corresponding syntax elements, tile groups and/or tiles and corresponding syntax elements may be generated or used.

In a process of obtaining a candidate motion vector list in an advanced motion vector prediction (advanced motion vector prediction, AMVP) mode, a motion vector (motion vector, MV) that may be added to the candidate motion vector list as an alternative includes MVs of spatially neighboring and temporally neighboring picture blocks of the current block. The MV of the spatially neighboring picture block may include an MV of a left candidate picture block of the current block and an MV of an upper candidate picture block of the current block. For example, FIG. 6 is a diagram of an example of candidate picture blocks according to an embodiment of this application. As shown in FIG. 6, a set of left candidate picture blocks includes {A0, A1}, a set of upper candidate picture blocks includes {B0, B1, B2}, and a set of temporally neighboring candidate picture blocks includes {C, T}. All the three sets may be added to the candidate motion vector list as alternatives. However, according to an existing coding standard, a maximum length of the candidate motion vector list for AMVP is 2. Therefore, it is necessary to determine to add MVs of a maximum of two picture blocks to the candidate motion vector list from the three sets in a specified order. The order may be as follows: The set of left candidate picture blocks {A0, A1} of the current block is preferentially considered (where A0 is first considered, and A1 is then considered if A0 is unavailable); then the set of upper candidate picture blocks {B0, B1, B2} of the current block is considered (where B0 is first considered, B1 is then considered if B0 is unavailable, and B2 is then considered if B1 is unavailable); and finally, the set of temporally neighboring candidate picture blocks {C, T} of the current block is considered (where T is first considered, and C is then considered if T is unavailable).

After the candidate motion vector list is obtained, an optimal MV is determined from the candidate motion vector list based on a rate distortion cost (rate distortion cost, RD cost), and a candidate motion vector with a minimum RD cost is used as a motion vector predictor (motion vector predictor, MVP) of the current block. The rate distortion cost is calculated by using the following formula: $J = SAD + \lambda R$

J represents the RD cost, SAD is a sum of absolute differences (sum of absolute differences, SAD), obtained through motion estimation based on the candidate motion vector, between a pixel value of a prediction block and a pixel value of the current block, R represents a bit rate, and $\lambda$ represents a Lagrange multiplier.

The encoder side transfers an index of the determined MVP in the candidate motion vector list to the decoder side. Further, the encoder side may perform motion search in an MVP-centered neighboring domain, to obtain an actual motion vector of the current block, calculates a motion vector difference (motion vector difference, MVD) between the MVP and the actual motion vector, and transfers the MVD to the decoder side. The decoder side parses the index, finds the corresponding MVP in the candidate motion vector list based on the index, parses the MVD, and adds the MVD and the MVP to obtain the actual motion vector of the current block.

In a process of obtaining a candidate motion information list in a merge (Merge) mode, motion information that can be added to the candidate motion information list as an alternative includes motion information of the spatially neighboring picture block or temporally neighboring picture block of the current block. The spatially neighboring picture block and the temporally neighboring picture block may be shown in FIG. 6. Spatial candidate motion information in the candidate motion information list comes from five spatially neighboring blocks (A0, A1, B0, B1, and B2). If the spatially neighboring block is unavailable or in an intra prediction mode, motion information of the spatially neighboring block is not added to the candidate motion information list. Temporal candidate motion information of the current block is obtained by scaling an MV of a block at a corresponding position in a reference frame based on picture order counts (picture order counts, POCs) of the reference frame and a current frame. Whether a block at a position T in the reference frame is available is first determined. If the block is not available, a block at a position C is selected. After the candidate motion information list is obtained, optimal motion information is determined from the candidate motion information list based on the RD cost as motion information of the current block. The encoder side transfers an index value (denoted as a merge index) of a position of the optimal motion information in the candidate motion information list to the decoder side.

Entropy encoding

The entropy encoding unit 270 is configured to apply, for example, an entropy encoding algorithm or scheme (for example, a variable length coding (variable length coding, VLC) scheme, a context adaptive VLC (context adaptive VLC, CAVLC) scheme, an arithmetic coding scheme, a binarization algorithm, context adaptive binary arithmetic coding (context adaptive binary arithmetic coding, CABAC), syntax-based context-adaptive binary arithmetic coding (syntax-based context-adaptive binary arithmetic coding, SBAC), probability interval partitioning entropy (probability interval partitioning entropy, PIPE) coding or another entropy encoding methodology or technique) to the quantized residual coefficients 2090, inter prediction parameters, intra prediction parameters, loop filter parameters and/or other syntax elements to obtain encoded picture data 21 which can be output via the output end 272, for example, in the form of an encoded bitstream 21, so that the video decoder 30 and the like can receive and use the parameters for decoding. The encoded bitstream 21 may be transmitted to the video decoder 30, or stored in a memory for later transmission or retrieval by the video decoder 30.

Another structural variation of the video encoder 20 may be used to encode the video stream. For example, a non-transform-based encoder 20 may quantize a residual signal directly without the transform processing unit 2060 for some blocks or frames. In another implementation, the encoder 20 may have the quantization unit 2080 and the dequantization unit 2100 combined into a single unit.

FIG. 4 is a block diagram of a hybrid architecture video encoder. A to-be-encoded picture is first split into non-overlapping picture blocks, and all picture blocks are sequentially processed in a specific order (for example, a row scanning order). The picture block is a set of pixels. For example, if a size of a block is N×N, it indicates that the block is a two-dimensional pixel array, and sizes of the block in both a horizontal direction and a vertical direction are N. The encoder side performs a prediction operation on the picture block to obtain a predictor of a pixel in the picture block. A set of predictors of pixels in the picture block is referred to as prediction of the picture block. Further, a difference between an original value of the pixel of the picture block and the predictor of the pixel of the picture block is calculated. A set of predicted differences of pixels in the picture block is referred to as a residual of the picture block. The residual is transformed and quantized to obtain quantized transform coefficients (quantized transform coefficients). Finally, an entropy encoding operation is performed on the quantized transform coefficients, and a bit string output after entropy encoding is written into a bitstream. In addition, dequantization and inverse transform operations are performed on the quantized transform coefficients on which transformation and quantization have been performed, to obtain a reconstructed residual, and then the reconstructed residual and the predictor of the current coding block are added to obtain reconstruction of the block. Reconstruction of the current block is to be used for predicting a subsequent coding block. The subsequent coding block may be a to-be-processed picture block in a current picture, or may be a picture block in a subsequent to-be-encoded picture. A loop filtering module removes coding distortions such as a blocking artifact and a ringing effect from the reconstructed picture block, to output a filtered reconstructed picture that may be used as an intra prediction reference for the subsequent to-be-encoded picture. Prediction in video coding may be generally classified into two types: intra prediction and inter prediction. In intra prediction, the current picture block is predicted by using the reconstruction of the left and upper encoded blocks. For each picture block, an optimal prediction mode may be selected from a plurality of candidate prediction modes to generate prediction of the block. For example, the HEVC standard specifies 35 candidate intra prediction modes. Prediction mode information is also written into the bitstream through entropy encoding. In inter prediction, reconstruction of an encoded picture is used as a reference picture, a picture block similar to a coding block in the current encoded picture is searched and determined from the reference picture, and prediction of the coding block is obtained after necessary interpolation filtering processing is performed.

Decoder and decoding method

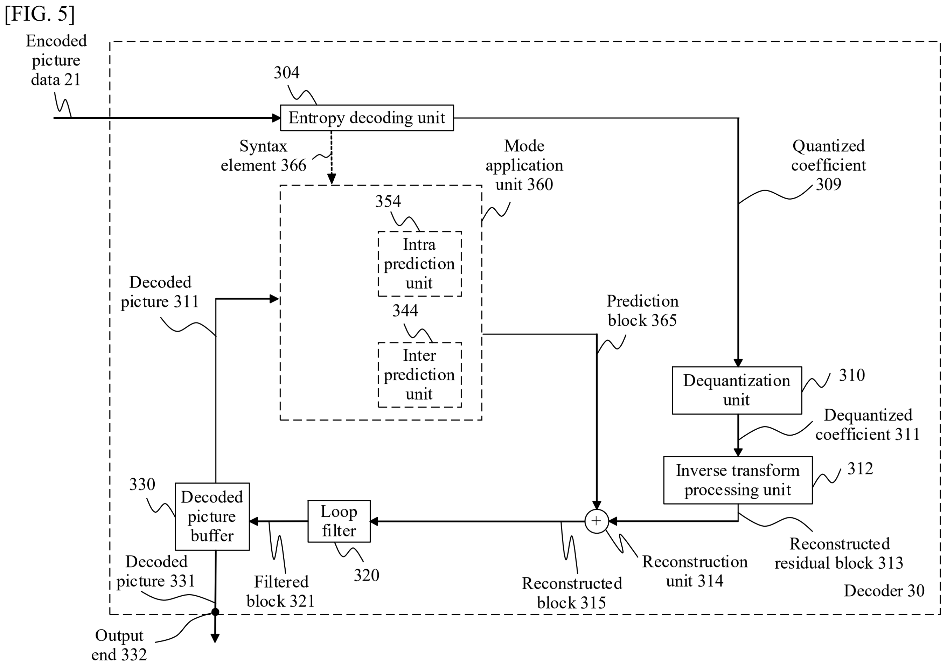

As shown in FIG. 5, the video decoder 30 is configured to receive, for example, the encoded picture data 21 (for example, the encoded bitstream 21) encoded by the encoder 20, to obtain a decoded picture 331. The encoded picture data or bitstream includes information for decoding the encoded picture data, for example, data that represents picture blocks of an encoded video slice (and/or tile groups or tiles), and related syntax elements.

In the example in FIG. 5, the decoder 30 includes an entropy decoding unit 304, a dequantization unit 310, an inverse transform processing unit 312, a reconstruction unit 314 (for example, the summator 314), a loop filter 320, a decoded picture buffer (DBP) 330, a mode application unit 360, an inter prediction unit 344, and an intra prediction unit 354. The inter prediction unit 344 may be or include a motion compensation unit. In some examples, the video decoder 30 may perform a decoding process generally reciprocal to the encoding process described with reference to the video encoder in FIG. 2.

As described for the encoder 20, the dequantization unit 2100, the inverse transform processing unit 212, the reconstruction unit 214, the loop filter 220, the decoded picture buffer DPB 230, the inter prediction unit 344, and the intra prediction unit 354 further form a "built-in decoder" of the video encoder 20. Accordingly, the dequantization unit 310 may be identical in function to the dequantization unit, the inverse transform processing unit 312 may be identical in function to the inverse transform processing unit 122, the reconstruction unit 314 may be identical in function to the reconstruction unit 214, the loop filter 320 may be identical in function to the loop filter 220, and the decoded picture buffer 330 may be identical in function to the decoded picture buffer 230. Therefore, the explanations provided for corresponding units and functions of the video encoder 20 are correspondingly applicable to corresponding units and functions of the video decoder 30.

Entropy decoding

The entropy decoding unit 304 is configured to parse the bitstream 21 (or in general encoded picture data 21) and perform entropy decoding on the encoded picture data 21 to obtain quantized coefficients 309 and/or decoded coding parameters (not shown in FIG. 3), for example, any or all of inter prediction parameters (for example, a reference picture index and a motion vector), intra prediction parameters (for example, an intra prediction mode or an index), transform parameters, quantization parameters, loop filter parameters, and/or other syntax elements. The entropy decoding unit 304 may be configured to apply a decoding algorithm or scheme corresponding to the encoding scheme of the entropy encoding unit 270 of the encoder 20. The entropy decoding unit 304 may be further configured to provide the inter prediction parameter, the intra prediction parameter, and/or another syntax element to the mode application unit 360, and provide another parameter to another unit of the decoder 30. The video decoder 30 may receive the syntax elements at the video slice level and/or the video block level. In addition or as an alternative to slices and corresponding syntax elements, tile groups and/or tiles and corresponding syntax elements may be received or used.

Dequantization

The dequantization unit 310 may be configured to receive a quantization parameter (quantization parameter, QP) (or generally, information related to the dequantization) and a quantized coefficient from the encoded picture data 21 (for example, parsed and/or decoded by the entropy decoding unit 304), and dequantize the decoded quantized coefficient 309 based on the quantization parameter, to obtain a dequantized coefficient 311. The dequantized coefficient 311 may also be referred to as a transform coefficient 311. The dequantization process may include use of a quantization parameter calculated by the video encoder 20 for each video block in a video slice to determine a degree of quantization and, likewise, a degree of dequantization that needs to be applied.

Inverse transform

The inverse transform processing unit 312 may be configured to receive the dequantized coefficients 311, also referred to as the transform coefficients 311, and apply a transform to the dequantized coefficients 311 to obtain a reconstructed residual block 213 in the pixel domain. The reconstructed residual block 213 may also be referred to as a transform block 313. The transform may be an inverse transform, for example, an inverse DCT, an inverse DST, an inverse integer transform, or a conceptually similar inverse transform process. The inverse transform processing unit 312 may be further configured to receive transform parameters or corresponding information from the encoded picture data 21 (for example, parsed and/or decoded by the entropy decoding unit 304) to determine the transform to be applied to the dequantized coefficients 311.

Reconstruction

The reconstruction unit 314 (for example, the summator 314) is configured to add the reconstructed residual block 313 to the prediction block 365 to obtain a reconstructed block 315 in the pixel domain, for example, add a sample value of the reconstructed residual block 313 and a sample value of the prediction block 365.

Filtering

The loop filter unit 320 (either in or after a coding loop) is configured to filter the reconstructed block 315 to obtain a filtered block 321, to perform smooth pixel conversion or improve video quality. The loop filter unit 320 may include one or more loop filters such as a deblocking filter, a sample-adaptive offset (sample-adaptive offset, SAO) filter or one or more other filters, for example, an adaptive loop filter (adaptive loop filter, ALF), a noise suppression filter (noise suppression filter, NSF), or any combination thereof. In an example, the loop filter unit 220 may include a deblocking filter, a SAO filter and an ALF. A sequence of a filtering process may be the deblocking filter, the SAO filter, and the ALF. For another example, a process referred to as luminance mapping with chrominance scaling (luma mapping with chroma scaling, LMCS) (that is, an adaptive in-loop reshaper) is added. This process is performed before deblocking. In another example, a deblocking filter process may be also applied to internal sub-block edges, for example, affine sub-block edges, ATMVP sub-block edges, sub-block transform (sub-block transform, SBT) edges, and intra sub-partition (intra sub-partition, ISP) edges. Although the loop filter unit 320 is shown as the loop filter in FIG. 3, in another configuration, the loop filter unit 320 may be implemented as a post loop filter.

Decoded picture buffer

A decoded video block 321 of a picture is then stored in the decoded picture buffer 330. The decoded picture buffer 330 stores a decoded picture 331 as a reference picture, and the reference picture is used for subsequent motion compensation for another picture and/or for separate output and display.

The decoder 30 is configured to output a decoded picture 311, for example, via an output end 312, for display to a user or viewing by the user.

Prediction

The inter prediction unit 344 may be identical in function to the inter prediction unit 244 (in particular to the motion compensation unit), and the intra prediction unit 354 may be identical in function to the inter prediction unit 254. The inter prediction unit 344 and the intra prediction unit 354 determine to split or partition and perform prediction based on the partitioning and/or prediction parameter or corresponding information received from the encoded picture data 21 (for example, parsed and/or decoded by the entropy decoding unit 304). The mode application unit 360 may be configured to perform prediction (intra or inter prediction) on each block based on a reconstructed picture or block or a corresponding sample (filtered or unfiltered), to obtain the prediction block 365.

When the video slice is coded as an intra coded (intra coded, I) slice, the intra prediction unit 354 of the mode application unit 360 is configured to generate the prediction block 365 for a picture block of the current video slice based on an indicated intra prediction mode and data from previously decoded blocks of the current picture. When the video picture is coded as an inter coded (that is, B or P) slice, the inter prediction unit 344 (for example, the motion compensation unit) of the mode application unit 360 is configured to generate the prediction block 365 for a video block of the current video slice based on the motion vectors and other syntax elements received from the entropy decoding unit 304. For inter prediction, such prediction blocks may be generated from one reference picture in one reference picture list. The video decoder 30 may construct reference frame lists: a list 0 and a list 1, by using a default construction technology based on reference pictures stored in the DPB 330. The same or similar may be applied for or by embodiments using tile groups (for example, video tile groups) and/or tiles (for example, video tiles) in addition or alternatively to slices (for example, video slices), for example, a video may be encoded using I, P or B tile groups and/or tiles.

The mode application unit 360 is configured to determine the predicted information for a video block of the current video slice by parsing the motion vectors or other syntax elements, and use the predicted information to generate the prediction block for the current video block being decoded. For example, the mode application unit 360 uses some of the received syntax elements to determine a prediction mode (for example, intra or inter prediction) used to encode the video blocks of the video slice, an inter prediction slice type (for example, a B slice, a P slice, or a GPB slice), construction information for one or more of the reference picture lists for the slice, motion vectors for each inter coded video block of the slice, an inter prediction status for each inter coded video block of the slice, and other information to decode the video blocks in the current video slice. The same or similar may be applied for or by embodiments using tile groups (for example, video tile groups) and/or tiles (for example, video tiles) in addition or alternatively to slices (for example, video slices), for example, a video may be encoded using I, P or B tile groups and/or tiles.

In an embodiment, the video decoder 30 in FIG. 5 may be further configured to partition and/or decode a picture by using slices (also referred to as video slices), where the picture may be partitioned or decoded by using one or more slices (typically non-overlapping). Each slice may include one or more blocks (for example, CTUs) or one or more groups of blocks (for example, tiles in the H.265/HEVC/VVC standard and bricks in the VVC standard).

In an embodiment, the video decoder 30 shown in FIG. 5 may be further configured to partition and/or decode the picture by using slices/tile groups (also referred to as video tile groups) and/or tiles (also referred to as video tiles). The picture may be partitioned or decoded by using one or more slices/tile groups (typically non-overlapping), and each slice/tile group may include, for example, one or more blocks (for example, CTUs) or one or more tiles. Each tile may be of a rectangular shape or another shape, and may include one or more complete or fractional blocks (for example, CTUs).

Other variations of the video decoder 30 may be used to decode the encoded picture data 21. For example, the decoder 30 can generate an output video stream without the loop filter unit 320. For example, a non-transform-based decoder 30 can dequantize the residual signal directly without the inverse transform processing unit 312 for some blocks or frames. In another implementation, the video decoder 30 may have the dequantization unit 310 and the inverse transform processing unit 312 combined into a single unit.

It should be understood that, in the encoder 20 and the decoder 30, a processing result of a current step may be further processed and then output to the next step. For example, after interpolation filtering, motion vector derivation, or loop filtering, a further operation, for example, a clip (clip) or shift (shift) operation, may be performed on a processing result of the interpolation filtering, motion vector derivation, or loop filtering.

It should be noted that a further operation may be performed on the derived motion vector of the current block (including but not limit to a control point motion vector in an affine mode, a sub-block motion vector and a temporal motion vector in an affine, planar, or ATMVP mode, and the like). For example, a value of a motion vector is constrained to a predefined range according to its representation bit. If the representation bit of the motion vector is bitDepth, the range is from $-2^{\wedge}(bitDepth-1)$ to $2^{\wedge}(bitDepth-1)-1$, where the "$\wedge$" represents exponentiation. For example, if bitDepth is set to 16, the range is -32768 to 32767; and if bitDepth is set to 18, the range is -131072 to 131071. For example, the value of the derived motion vector (for example, MVs of four $4\times4$ sub-blocks in one $8\times8$ block) is constrained, so that a maximum difference between integer parts of the MVs of the four $4\times4$ sub-blocks does not exceed N pixels, for example, does not exceed one pixel. Two methods for constraining the motion vector based on bitDepth are provided herein.

Although video coding is mainly described in the foregoing embodiments, it should be noted that the embodiments of the coding system 10, the encoder 20, and the decoder 30 and other embodiments described in this specification may also be used for still picture processing or coding, that is, processing or coding of a single picture independent of any preceding or consecutive pictures in video coding. Generally, the inter prediction unit 244 (the encoder) and the inter prediction unit 344 (the decoder) may not be available when picture processing is limited to a single picture 17. All other functions (also referred to as tools or technologies) of the video encoder 20 and the video decoder 30 may also be used for still picture processing, for example, residual calculation 2040/304, transform 2060, quantization 2080, dequantization 2100/310, (inverse) transform 212/312, partitioning 262/362, intra prediction 254/354, and/or loop filtering 220/320, entropy encoding 270, and entropy decoding 304.

FIG. 7 is a block diagram of a hybrid architecture video decoder. After obtaining a bitstream that is of a picture block and that is output by an encoder side through encoding, a decoder side performs entropy decoding to obtain prediction mode information and a quantized transform coefficient. The decoder performs, based on the prediction mode, a corresponding prediction operation with reference to a reference pixel in a surrounding decoded picture region, to obtain prediction of the current picture block. The decoder performs dequantization and inverse transform operations on the quantized transform coefficient obtained through entropy decoding, to obtain a reconstructed residual. Next, the prediction and the reconstructed residual of the current block are added to obtain a reconstruction of the current block. It should be noted that both the encoder and the decoder process each picture block according to a pre-agreed order. Therefore, the encoder does not need to transmit additional information about a coding block processing order to the decoder.

It should be noted that, in the hybrid architecture video coding scheme, there is a correspondence between an operation of each module in the codec and an operation of each module in the decoder. For example, in the encoder and the decoder, predictor operations are completely the same, and an entropy encoder and an entropy decoder, a transformer and an inverse transformer, a quantizer and a dequantizer, and the like are all inverse operations in pairs. Therefore, after operations such as prediction, transform, quantization, and entropy encoding at the encoder side are specified, operations such as prediction, inverse transform, dequantization, and entropy decoding at the decoder side are also determined accordingly. The reverse is also applicable.

It should be noted that FIG. 5 and FIG. 7 are diagrams of a general hybrid architecture video codec. A same functional module may have different implementations in different coding schemes. For example, an input picture is split into picture blocks. Equal-size picture splitting may be performed, or picture blocks of different sizes may be obtained through adaptive splitting based on content. The picture blocks obtained through splitting may be square or non-square. For another example, the transformer may select different transform kernels such as DCT (Discrete Cosine Transform), DST (Discrete Sine Transform) and KLT (Karhunen Loève Transform) to perform a transform operation on a residual of the input picture block, and the decoder may select a same transform kernel to perform a corresponding inverse transform operation. In addition, more functional modules or operations may be further added. For example, a loop filtering operation may be performed on an obtained reconstructed picture to improve quality of the reconstructed picture and improve prediction efficiency of a subsequent to-be-processed picture.

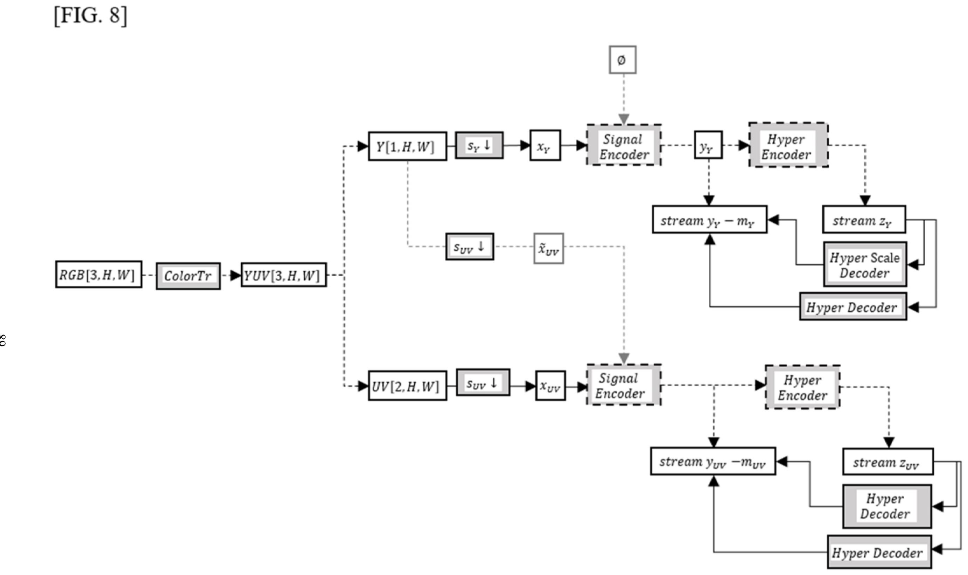

The JPEG AI standard organization uses deep learning-based end-to-end picture coding scheme. The encoder structure is as shown, where an RGB picture is converted into YUV color space. A Y component and a UV component are downsampled based on their own downsampling factors, and feature maps $y_Y$ and $y_{UV}$ are obtained through multi-layer network processing. The feature maps $y_Y$ and $y_{UV}$ are separately processed by respective hyper encoder networks to obtain hyperprior information $z_Y$ and $z_{UV}$, and the hyperprior information is quantized and written into a bitstream through lossless coding (for example, me-tANS coding). Then, the encoder needs to perform some steps completely consistent with the decoding process, and quantized hyperprior information $z_Y$ and $z_{UV}$ are respectively input into respective hyper scale decoder networks, to obtain probability distribution related information $\sigma_Y$ and $\sigma_{UV}$. Lossless coding is performed on feature residual maps $r_Y$ and $r_{UV}$ (for example, $r_Y = y_Y - m_Y$ and $r_{UV} = y_{UV} - m_{UV}$) based on $\sigma_Y$ and $\sigma_{UV}$, and the lossless coding result is written into the bitstream. In one case, the quantized hyperprior information $z_Y$ and $z_{UV}$ are respectively input into respective hyper decoder networks, to obtain predicted information $m_Y$ and $m_{UV}$ of feature maps, as shown in FIG. 8. In another case, the quantized hyperprior information $z_Y$ and $z_{UV}$ are respectively input into output information of respective hyper decoder networks, and encoded/decoded context information of the feature maps $y_Y$ and $y_{UV}$, to jointly obtain $m_Y$ and $m_{UV}$.

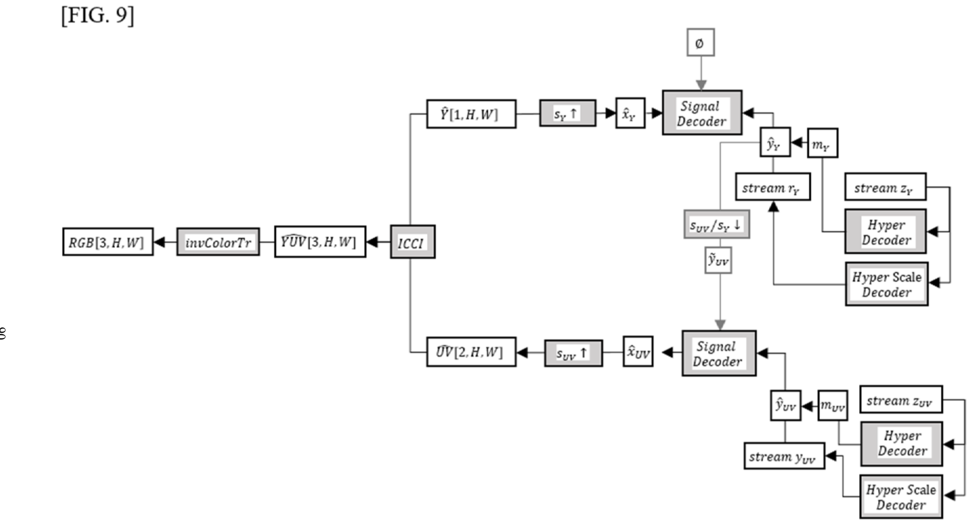

An architecture of a JPEG AI decoder is shown in FIG. 9. First, hyperprior information $z_Y$ and $z_{UV}$ are decoded from a bitstream. $z_Y$ and $z_{UV}$ are respectively input into respective hyper scale decoder networks, to obtain probability distribution related information $\sigma_Y$ and $\sigma_{UV}$; and feature residual maps $r_Y$ and $r_{UV}$ are obtained by performing entropy decoding on the bitstream based on $\sigma_Y$ and $\sigma_{UV}$. In one case, the quantized hyperprior information $z_Y$ and $z_{UV}$ are respectively input into respective hyper decoder networks, to obtain predicted information $m_Y$ and $m_{UV}$ of feature maps, that is, predicted feature maps, as shown in FIG. 9. In another case, the quantized hyperprior information $z_Y$ and $z_{UV}$ are respectively input into output information of respective hyper decoder networks, and encoded/decoded context information of the feature maps $y_Y$ and $y_{UV}$, to jointly obtain $m_Y$ and $m_{UV}$. y is obtained based on r and m, for example, $y_Y = r_Y + m_Y$ and $y_{UV} = r_{UV} + m_{UV}$. Finally, $y_Y$ and $y_{UV}$ are separately input into a decoder network to obtain a YUV domain picture. After ICCI filtering processing, the YUV domain picture is converted into an RGB domain picture for display.

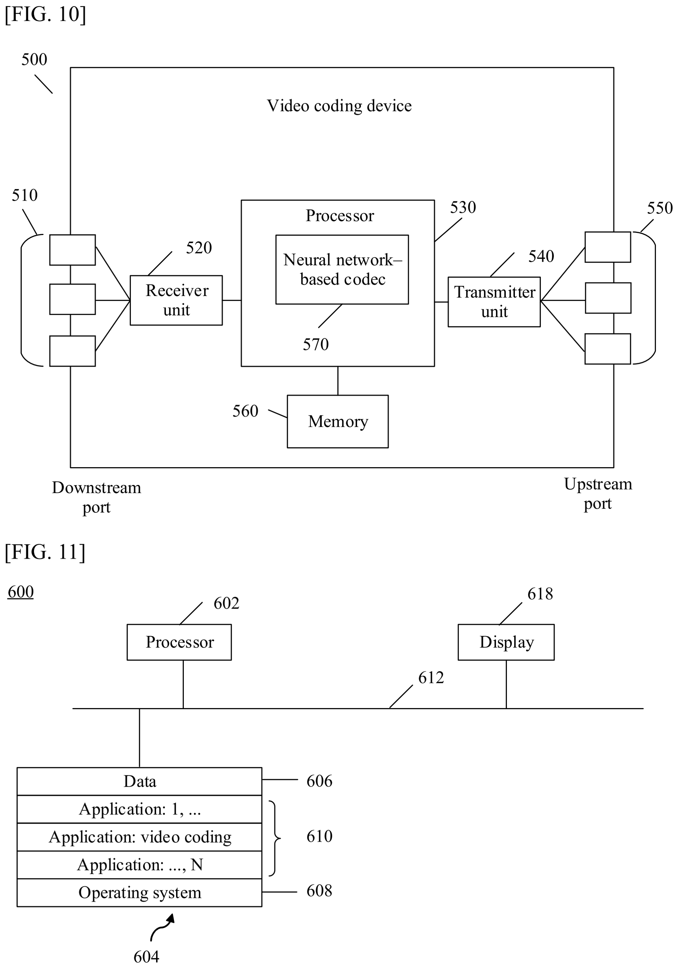

FIG. 10 is an example block diagram of a video coding device 500 according to an embodiment of this application. The video coding device 500 is applicable to implementing the disclosed embodiments described in this specification. In an embodiment, the video coding device 500 may be a decoder like the video decoder 30 in FIG. 1, or an encoder like the video encoder 20 in FIG. 2.

The video coding device 500 includes ingress ports 510 (or input ports 510) and a receiver unit (receiver unit, Rx) 520 for receiving data; a processor, a logic unit, or a central processing unit (central processing unit, CPU) 530 for processing the data, where for example, the processor 530 herein may be a neural network processing unit 530; a transmitter unit (transmitter unit, Tx) 540 and egress ports 550 (or output ports 550) for transmitting the data; and a memory 560 for storing the data. The video coding device 500 may also include optical-to-electrical (optical-to-electrical, OE) components and electrical-to-optical (electrical-to-optical, EO) components coupled to the ingress ports 510, the receiver unit 520, the transmitter unit 540, and the egress ports 550 for egress or ingress of optical or electrical signals.

The processor 530 is implemented by hardware and software. The processor 530 may be implemented as one or more processor chips, cores (for example, a multi-core processor), FPGAs, ASICs, and DSPs. The processor 530 communicates with the ingress ports 510, the receiver unit 520, the transmitter unit 540, the egress ports 550, and the memory 560. The processor 530 includes a neural network-based codec 570. The neural network-based codec 570 implements the disclosed embodiments described above. For example, the neural network-based codec 570 performs, processes, prepares, or provides various coding operations. Therefore, the neural network-based codec 570 provides a substantial improvement to functions of the video coding device 500 and affects switching of the video coding device 500 to a different state. Alternatively, the neural network-based codec 570 is implemented by using instructions stored in the memory 560 and executed by the processor 530.

The memory 560 may include one or more disks, tape drives, and solid-state drives and may be used as an overflow data storage device, to store programs when such programs are selected for execution, and to store instructions and data that are read during program execution. The memory 560 may be volatile and/or nonvolatile and may be a read-only memory (read-only memory, ROM), a random access memory (random access memory, RAM), a ternary content-addressable memory (ternary content-addressable memory, TCAM), and/or a static random access memory (static random access memory, SRAM).

FIG. 11 is an example block diagram of an apparatus 600 according to an embodiment of this application. The apparatus 600 may be used as either or both of the source device 12 and the destination device 14 in FIG. 1.

A processor 602 in the apparatus 600 may be a central processing unit. Alternatively, the processor 602 may be any other type of device or a plurality of devices, capable of manipulating or processing information existing or to be developed. Although the disclosed implementations can be implemented by using a single processor such as the processor 602 shown in the figure, advantages in speed and efficiency can be achieved by using more than one processor.

In an implementation, a memory 604 in the apparatus 600 may be a read-only memory (ROM) device or a random access memory (RAM) device. Any other appropriate type of storage device may be used as the memory 604. The memory 604 may include code and data 606 that are accessed by the processor 602 through a bus 612. The memory 604 may further include an operating system 608 and an application 610. The application 610 includes at least one program that allows the processor 602 to perform the method described in this specification. For example, the application 610 may include applications 1 to N, and further include a video coding application that performs the method described in this specification.

The apparatus 600 may further include one or more output devices, such as a display 618. In an example, the display 618 may be a touch-sensitive display that combines a display with a touch-sensitive element that is operable to sense touch inputs. The display 618 may be coupled to the processor 602 through the bus 612.

Although the bus 612 in the apparatus 600 is described in this specification as a single bus, the bus 612 may include a plurality of buses. Further, a secondary storage may be directly coupled to another component of the apparatus 600 or may be accessed via a network and may include a single integrated unit, for example, a memory card or a plurality of units, for example, a plurality of memory cards. Therefore, the apparatus 600 may have a variety of configurations.

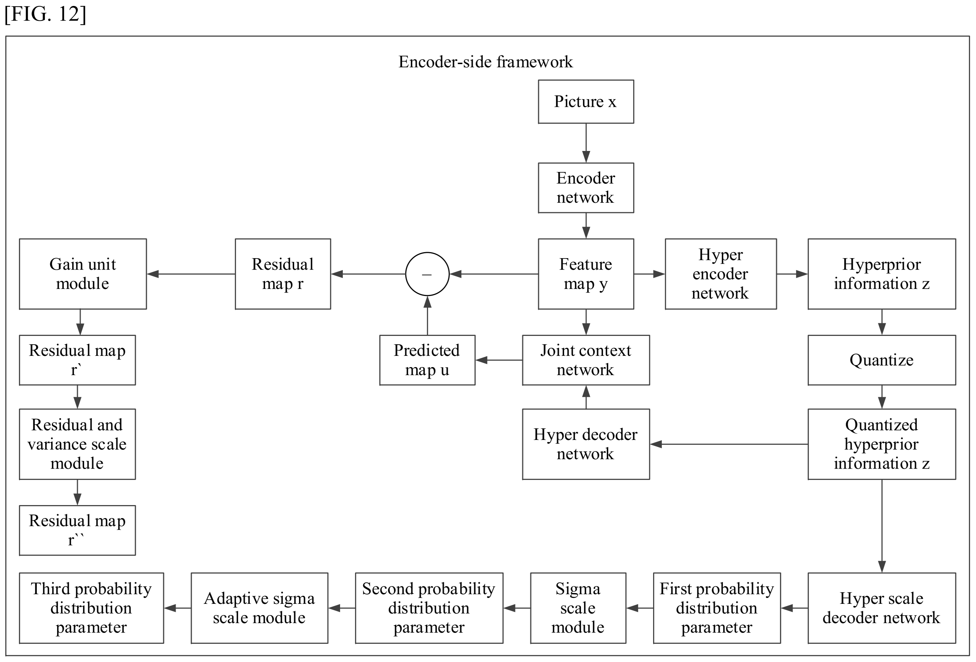

FIG. 12 is a block diagram of an encoder architecture applied to an embodiment of this application. The following describes in detail a data encoding process with reference to the encoder architecture in FIG. 12.

As shown in FIG. 12, a feature map y may be obtained by inputting a picture x into an input encoder (analysis transform) network at an encoder side. The picture x may be an entire picture, or may be a Y component or a UV component of a YUV picture. This is not specifically limited in this embodiment of this application. The obtained feature map y is input into a hyper encoder (hyper encoder) network to obtain hyperprior information z, and the hyperprior information z is quantized to obtain quantized hyperprior information z. Entropy encoding (me-tANS) is performed on the quantized hyperprior information z, and then the entropy encoding result is written into a bitstream.

In a possible implementation, the quantized hyperprior information z is input into a hyper scale decoder (hyper scale decoder) network, to obtain first probability distribution parameter. First probability distribution parameter information is input into a sigma scale (sigma scale) module to obtain a second probability distribution parameter, and the second probability distribution parameter is input into an adaptive sigma scale (adaptive sigma scale) module to obtain a third probability distribution parameter.

In another possible implementation, a predicted map $\mu$ of the feature map y is obtained based on the quantized hyperprior information z. In an example, the quantized hyperprior information z is input into the hyper decoder (hyper decoder) network to obtain a predicted map $\mu$ of the feature map y. In another example, the quantized hyperprior information z is input into the hyper decoder (hyper decoder) network, and a predicted map $\mu$ of the feature map y is obtained via a joint context network (MSM). A residual map r is obtained by calculating a residual between the feature map y and the predicted map u, the obtained residual map r is input into a gain unit (gain unit) module for scaling to obtain a residual map r', and the residual map r' is input into a residual and variance scale (residual and variance scale, RVS) module for scaling to obtain a residual map r". After the residual map r" is obtained, the residual map r'' is encoded based on the obtained third probability distribution parameter and then the encoding result is written into the bitstream.

This embodiment provides a typical implementation method. In the technical solution of this embodiment, an encoder side process of a component (the Y component or the UV component) is as follows: The picture x is input into the encoder (analysis transform) network, to obtain the feature map y. The feature map y is input into the hyper encoder (hyper encoder) network to obtain a feature map z, and me-tANS entropy encoding is performed on a quantized z and the entropy encoding result is written into the bitstream. The quantized z is input into the hyper scale decoder (hyper scale decoder) network to obtain Gaussian distribution parameter information $\sigma$. After the sigma scale (sigma scale) module and the adaptive sigma scale (Adaptive Sigma Scale) module perform scaling processing, information obtained through scaling processing is input into a subsequent module. The quantized z is input into the hyper decoder (hyper decoder) network. Optionally, the predicted map $\mu$ of the feature map y is obtained via the joint context network (MSM). The residual map r is obtained by calculating the residual between the feature map y and the predicted map $\mu$. After the gain unit (gain unit) module, the residual and variance scale (RVS) module perform scaling processing on the residual map r, a residual map obtained through scaling processing is input into the subsequent module.

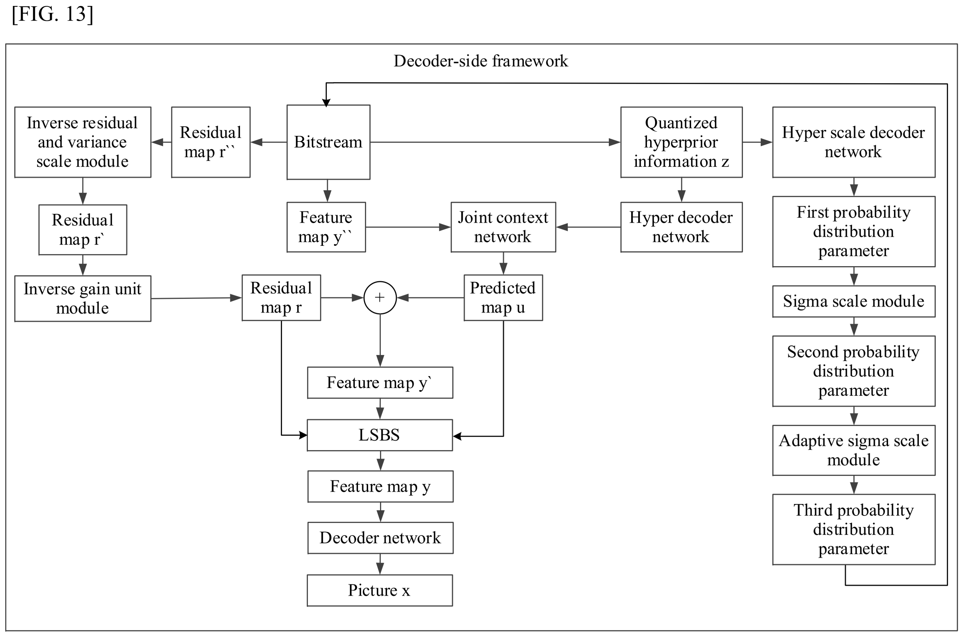

FIG. 13 is a block diagram of a decoder architecture applied to an embodiment of this application. The following describes a data decoding process in detail with reference to the decoder architecture in FIG. 13.

As shown in FIG. 13, quantized hyperprior information z is first decoded from a bitstream. In a possible implementation, the quantized hyperprior information z is input into a hyper scale decoder (hyper scale decoder) network, to obtain first probability distribution parameter. First probability distribution parameter information is input into a sigma scale (sigma scale) module to obtain a second probability distribution parameter, and the second probability distribution parameter is input into an adaptive sigma scale (adaptive sigma scale) module to obtain a third probability distribution parameter. Entropy decoding is performed on the bitstream based on the third probability distribution parameter to obtain a residual map r", the residual map r'' is input into an inverse residual and variance scale (inverse residual and variance scale, Inv RVS) module to perform dequantization on the residual map r" to obtain a residual map r', and the residual map r' is input into an inverse gain unit (Inv gain unit) module for dequantization to obtain a residual map r. In another possible implementation, a predicted map $\mu$ of a feature map y is obtained based on the quantized hyperprior information z. In an example, the quantized hyperprior information z is input into a hyper decoder (hyper decoder) network to obtain the

predicted map $\mu$ of the feature map y. In another example, the quantized hyperprior information z is input into the hyper decoder (hyper decoder) network, and the predicted map $\mu$ of the feature map y is obtained via a joint context network (MSM). A feature map y' is obtained by calculating a sum of the predicted map $\mu$ and the residual map r, and the feature map y' is refined via a latent scale before synthesis (latent scaling before synthesis, LSBS) module, to obtain the feature map y. The feature map y is input into the decoder network at a decoder side to obtain a picture x.

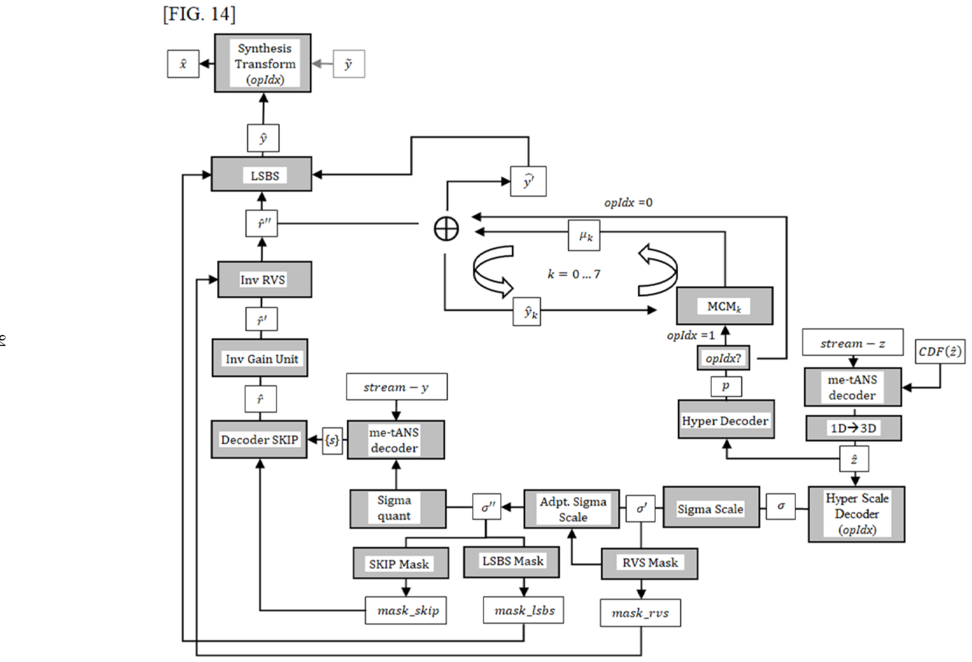

A specific operation for a decoding process of a component in JPEG AI is shown in FIG. 14. An adaptive sigma scale (Adpt. Sigma Scale) module, an inverse residual and variance scale (Inverse Residual and Variance Scale, Inv RVS) module, and a latent scale before synthesis (Latent Scaling Before Synthesis-LSBS) module are mask map-based coding tools in JPEG AI. The adaptive sigma scale (Adpt. Sigma Scale) module and the inverse residual and variance scale (Inverse Residual and Variance Scale, Inv RVS) module are two processing phases of the adaptive quantization technology at the decoder side in the JPEG AI framework. The latent scale before synthesis (Latent Scaling Before Synthesis-LSBS) module is a processing phase of the latent scaling technology at the decoder side. The adaptive quantization technology and the latent scaling technology respectively offer 3% and 2% coding performance improvement.

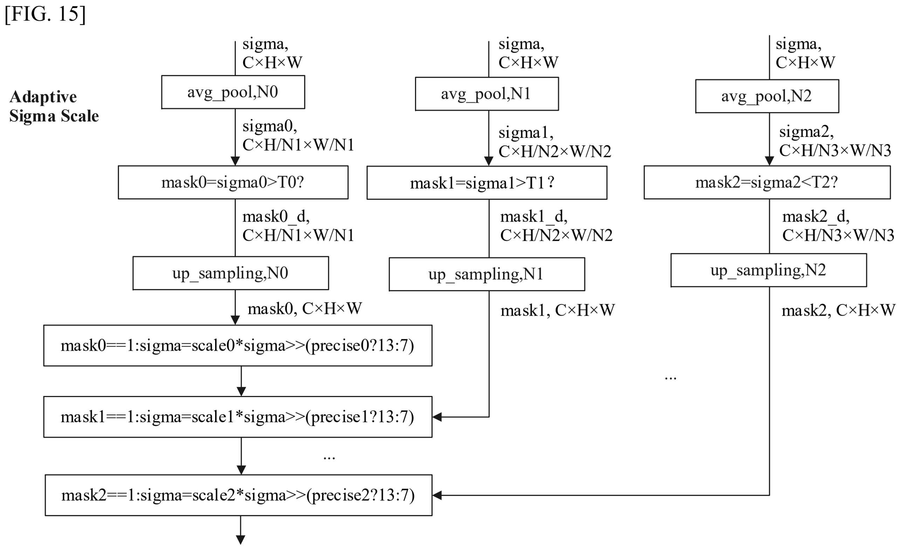

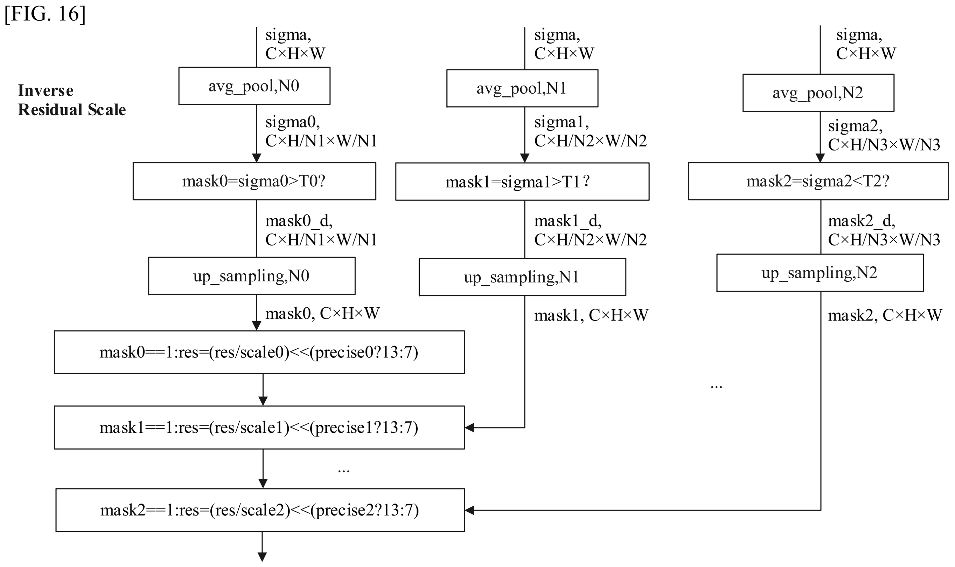

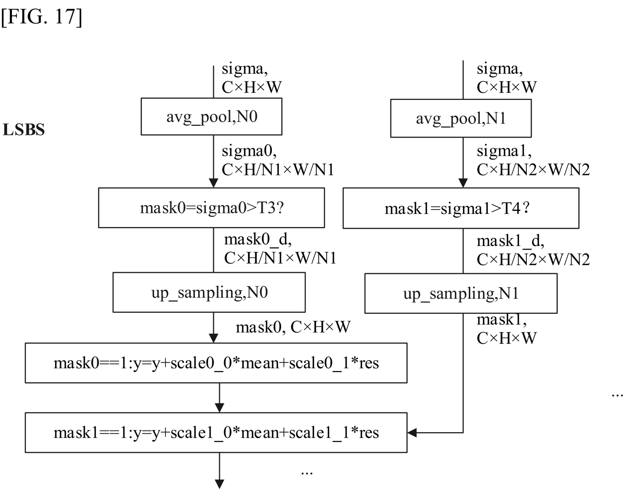

The foregoing adaptive sigma scale (adaptive sigma scale), RVS, Inv RVS and LSBS are mask map-based coding tools in JPEG AI. These tools can improve coding performance, but with higher implementation complexity. The adaptive sigma scale (adaptive sigma scale) module is used as an example. A variance tensor (sigma) of C $\times$ H $\times$ W is averaged by using N$\times$N blocks as a unit, to obtain sigma0 of C $\times$ H/N $\times$ W/N; and sigma0 is compared with a threshold T0, and mask0 of values 0/1 is output. When mask0[c,i,j] is 1, in an N$\times$N region corresponding to mask0[c,i,j], all values of sigma are multiplied by a scaling value scale0, and this process is repeated m times. In FIG. 15, an example in which the process is repeated for three times is used for description. The Inv RVS is used as an example. When mask0[c,i,j] is 1, in an N$\times$N region corresponding to mask0[c,i,j], all values in a residual feature map (res) of C $\times$ H $\times$ W are divided by a scaling value scale0, and this process is repeated m times. In FIG. 16, an example in which the process is repeated for three times is used for description. The LSBS module is used as an example. A variance tensor (sigma) of C $\times$ H $\times$ W is averaged by using N$\times$N blocks as a unit, to obtain sigma0 of C $\times$ H/N $\times$ W/N; and sigma0 is compared with a threshold T3, and mask0 of values 0/1 is output. When mask0[c,i,j] is 1, in an N$\times$N region corresponding to mask0[c,i,j], values of picture feature points in a picture feature map (y) of C $\times$ H $\times$ W are obtained by performing linear weighting on corresponding positions of the picture feature map, a residual feature map, and a predicted feature map, and this process is repeated for m times. In FIG. 17, an example in which the process is repeated for two times is used for description.

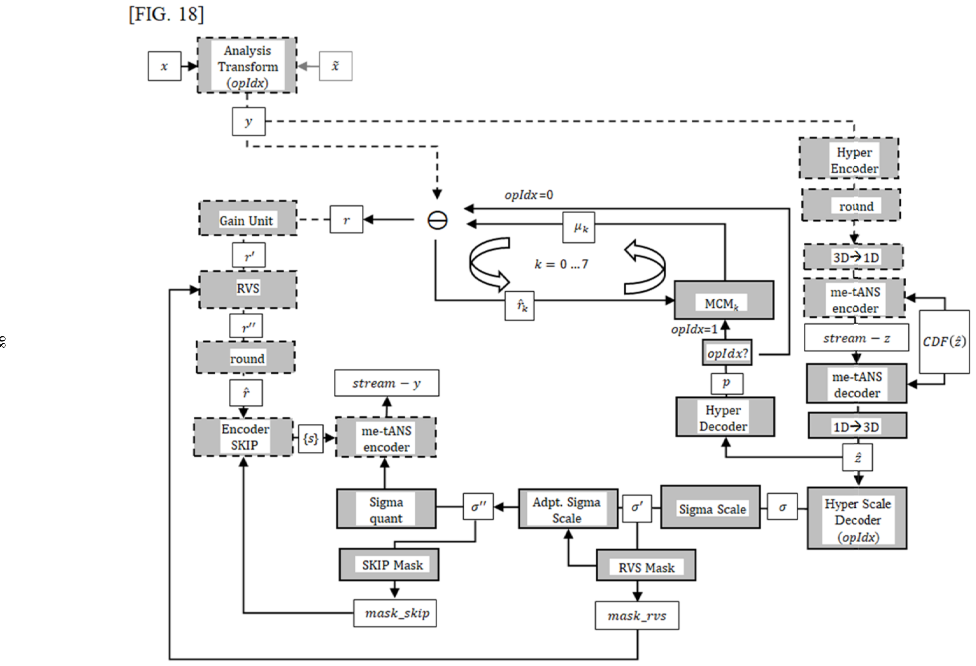

It should be understood that the latent scaling technology is used only at the decoder side, and the adaptive quantization technology is used at both the encoder side and the decoder side. FIG. 18 shows a specific procedure of an operation on a component (a Y component or a UV component) in JPEG AI. The adaptive quantization technology involves the Adpt. Sigma Scale module and the RVS module shown in FIG. 18 in a processing phase of the encoder side. Operations of the Adpt. Sigma Scale module are the same as those at the decoder side. The only difference between the RVS module and the Inv RVS module is that when mask0[c,i,j] is 1, in the N$\times$N region corresponding to mask0[c,i,j], all values in the residual feature map (res) of C $\times$ H $\times$ W are multiplied by the scaling value scale0.

It can be learned from the foregoing data scaling procedure that a process from averaging in $N_k \times N_k$ units to numerical scaling may be repeated m times. This means that, first, an averaging operation in units of different block sizes needs to be repeated m times, and second, a scaling operation needs to be performed m times for a same K $\times$ K unit in a worst case. A larger value of m indicates more repeated operations and a longer operation pipeline.

That is, the mask map-based coding tools in JPEG AI, namely, the adaptive sigma scale (Adpt. Sigma Scale) module and the latent scale before synthesis (Latent Scaling Before Synthesis-LSBS) module, significantly improve coding performance, but with higher implementation complexity. It can be learned from the flowchart that a process from averaging in $N_k \times N_k$ units to numerical scaling may be repeated m times, which means that, first, an averaging operation in units of different block sizes needs to be repeated m times, and second, a scaling operation needs to be performed m times for a same K $\times$ K unit in a worst case. A larger value of m indicates more repeated operations and a longer operation pipeline.

A technical problem to be resolved in this embodiment is to simplify linear scaling technologies, namely, adaptive quantization and latent scaling, of two mask maps generated based on variance maps, to reduce algorithm complexity without compromising coding performance.

In view of this, embodiments of this application provide an encoding and decoding method, to reduce algorithm complexity without compromising coding performance. It may also be understood that interval determining is performed based on the variance map, and scaling values at different spatial positions are derived to generate a scaling map. Linear weighting is performed based on the scaling map to obtain a final feature map value.

A system architecture in this embodiment is shown in FIG. 10. After a video is captured by using a video capture device, a series of preprocessing is performed on the video, and then compression coding is performed on the processed video to obtain an encoded bitstream. A sending module sends the bitstream to a receiving module via a transmission network. After being decoded by the decoder, the bitstream can be rendered and displayed. In addition, the bitstream obtained through video encoding may also be directly stored.

The method provided in embodiments of this application may be applied to the adaptive sigma scale (Adpt. Sigma Scale) module, the inverse residual and variance scale (Inverse Residual and Variance Scale, Inv RVS) module, and the latent scale before synthesis (Latent Scaling Before Synthesis-LSBS) module of the video picture decoder; and may be applied to the Adpt. Sigma Scale module and RVS module of the video picture encoder.

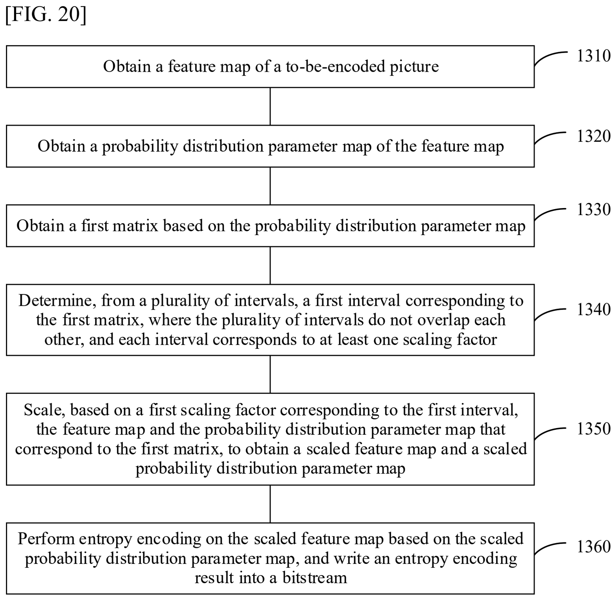

FIG. 20 is a schematic flowchart of an encoding method according to an embodiment of this application. As shown in FIG. 20, the method may include steps 1310 to 1360. The following separately describes steps 1310 to 1360 in detail.

Step 1310: Obtain a feature map of a to-be-encoded picture.

For example, as shown in FIG. 12, a feature map y may be obtained by inputting a picture x into an input encoder (analysis transform) network at an encoder side. It should be understood that the picture x may be an entire picture, or may be a Y component or a UV component of a YUV picture. This is not specifically limited in this embodiment of this application.

The feature map is not specifically limited in this embodiment of this application. The feature map may be a feature map directly obtained based on the to-be-encoded picture, or may be a residual feature map.

It should be understood that the residual feature map may also be referred to as a residual map, and is determined based on the feature map and a predicted map of the feature map (a predicted map for short). Specifically, in a possible implementation, the feature map includes a plurality of eigenvalues, the predicted map includes predicted values of the plurality of eigenvalues (predicted values for short), and the residual map includes a plurality of residual values (which may also be referred to as residual eigenvalues). The plurality of residual values are determined based on differences between predicted values and eigenvalues in the feature map at same positions as in the predicted map.

Step 1320: Obtain a probability distribution parameter map of the feature map.

In this embodiment of this application, the probability distribution parameter map includes a plurality of probability distribution parameters. A probability distribution parameter in the probability distribution parameter map may be a probability distribution parameter of an eigenvalue at a corresponding position in the feature map, or may be a probability distribution parameter of a residual value at a corresponding position in the residual feature map.

It should be understood that the probability distribution parameter may be a Gaussian distribution parameter, a Laplacian distribution parameter, or a Gaussian mixture distribution parameter. This is not specifically limited in this embodiment of this application.

It should be further understood that the probability distribution parameter may be a variance $\sigma$, an average value, or a standard deviation. This is not specifically limited in this embodiment of this application.

In this embodiment of this application, after the feature map of the to-be-encoded picture is obtained, the feature map may be input into a hyper encoder (hyper encoder) network to obtain hyperprior information z, and the probability distribution parameter is obtained based on quantized hyperprior information z via a hyper scale decoder (hyper scale decoder) network, a sigma scale (sigma scale) module, and an adaptive sigma scale (adaptive sigma scale) module. Specifically, refer to the descriptions in FIG. 12, and details are not described herein again.

Step 1330: Obtain a first matrix based on the probability distribution parameter map.

The first matrix may be a part of the probability distribution parameter map. For example, the first matrix is an N*N unit in the probability distribution parameter map, and the first matrix includes N*N probability distribution parameters, where N is an integer greater than 1.

Step 1340: Determine, from a plurality of intervals, a first interval corresponding to the first matrix, where the plurality of intervals do not overlap each other, and each interval corresponds to at least one scaling factor.

In this embodiment of this application, the plurality of intervals are split based on a plurality of thresholds. For example, a quantity of the plurality of thresholds is m, a quantity of the plurality of intervals is m+1, and m is an integer greater than 1.

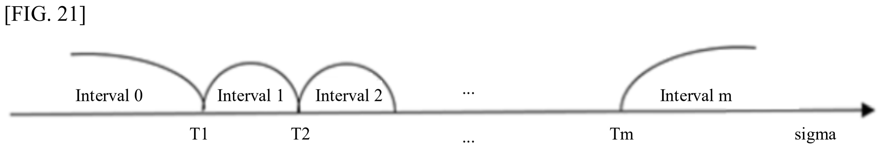

In this embodiment of this application, the plurality of intervals obtained through splitting based on the plurality of thresholds do not overlap each other. For example, as shown in FIG. 21, T1 to Tm are m thresholds, an interval 0 to an interval m are m+1 intervals, these intervals do not overlap each other, and each interval corresponds to at least one scaling factor.

In a possible implementation, a first value corresponding to the first matrix may be determined, the first value is separately compared with the plurality of thresholds, and the first interval corresponding to the first value is determined from the plurality of intervals split based on the plurality of thresholds. It should be understood that the first interval is one of a plurality of intervals. For example, as shown in FIG. 21, it is assumed that the first value is greater than the threshold T1 and greater than T2, an interval 1 in which T1 and T2 are located may be determined as the first interval corresponding to the first value.

The first value corresponding to the first matrix is not specifically limited in this embodiment of this application. In an example, the first value may be a largest value of the plurality of probability distribution parameters included in the first matrix. In another example, the first value may alternatively be an average value of the plurality of probability distribution parameters included in the first matrix.

Optionally, in this embodiment of this application, values of the plurality of thresholds and the quantity of the thresholds may be further written into a bitstream, so that a decoder side can obtain the values of the plurality of thresholds and the quantity of the thresholds from the bitstream.

Optionally, in this embodiment of this application, the scaling factor (for example, a first scaling factor) corresponding to the first interval may be further written into the bitstream, so that the decoder side can obtain the scaling factor (for example, the first scaling factor) corresponding to the first interval from the bitstream.

For example, in this embodiment of this application, the decoder side may determine, based on a syntax table, the values of the plurality of thresholds, the quantity of thresholds, related coding information, the scaling factor, and the like that are carried in the bitstream.

For example, Table 1 below shows a syntax table for an adaptive scaling technology, and Table 2 shows a syntax table for a latent scaling technology. It should be understood that the adaptive scaling technology is applied to an adaptive sigma scale (adaptive sigma scale) module or a residual and variance scale (residual and variance scale, RVS) module, and the latent scaling technology is applied to an LSBS module.

Table 1 Syntax table for the adaptive scaling technology

| rvs_header() { | Descriptor |
|---|---|
| num_rvs_params | u(1) |
| if (num_rvs_params > 0){ | |
| presice_flag_thr_rvs | u(1) |
| presice_flag_scale_rvs | u(1) |
| for (i=0; i < num_rvs_params; ++i){ | |
| if (presice_flag_thr_rvs ) { | |
| threshold_rvs[i] | u(16) |
| } | |
| else{ | |
| threshold_rvs [i] | u(8) |
| } | |
| } | |
| for (i=0; i < num_rvs_params+1; ++i) { | |
| if (presice_flag_scale_rvs ) { | |
| scale_rvs [i] | u(16) |
| } | |
| else{ | |
| scale_rvs[i] | u(8) |
| } | |
| } | |
| } | |
| } | |

Refer to Table 1, where num_rvs_params represents the threshold quantity m, threshold_rvs represents the threshold T, scale_rvs represents the scaling factor s0, and presice_flag_thr_rvsbeing 1 indicates that the threshold is encoded by using 16-bit precision, otherwise, the threshold is encoded by using 8-bit precision; and presice_flag_scale_rvs being 1 indicates that the scaling factor is encoded by using the 16-bit precision, otherwise, the scaling factor is encoded by using the 8-bit precision.

Table 2 Syntax table for the latent scaling technology

| lsbs_header() { | Descriptor |
|---|---|

(continued)

| | |
|---|---|
| num_lsbs_params | u(1) |
| if (num_isbs_params > 0){ | |
| lsbs_header() { | Descriptor |
| application_id_lsbs | u(2) |
| presice_flag_thr_lsbs | u(1) |
| presice_flag_scale_lsbs | u(1) |
| for (i=0; i < num_lsbs_params; ++i){ | |
| if (presice_flag_thr_lsbs ) { | |
| threshold_lsbs[i] | u(16) |
| } | |
| else { | |
| threshold_isbs[i] | u(8) |
| } | |
| } | |
| for (i=0; i < num_lsbs_params+1; ++i) { | |
| if (presice_flag_scale_lsbs) { | |
| scale0_lsbs[i] | u(16) |
| scale1_lsbs[i] | u(16) |
| } | |
| else { | |
| scale0_lsbs[i] | u(8) |
| scale1_lsbs[i] | u(8) |
| } | |
| } | |
| } | |
| } | |

Refer to Table 2, where num_lsbs_params represents the threshold quantity m, threshold_lsbs represents the threshold T, scale0_lsbs represents the scaling factor s0, scale1_lsbs represents the scaling factor s1, and presice_flag_thr_lsbs being 1 indicates that the threshold is encoded by using 16-bit precision, otherwise, the threshold is encoded by using 8-bit precision; and presice_flag_scale_lsbs being 1 indicates that the scaling factor is encoded by using the 16-bit precision, otherwise, the scaling factor is encoded by using the 8-bit precision. If application_id_lsbs is 0, it indicates that only the Y component is used. If application_id_lsbs is 1, it indicates that only the UV component is used. If application_id_lsbs is 2, it indicates that both the Y component and the UV component are used.

Step 1350: Scale, based on the first scaling factor corresponding to the first interval, the feature map and the probability distribution parameter map that correspond to the first matrix, to obtain a scaled feature map and a scaled probability distribution parameter map.

In this embodiment of this application, it is assumed that the scaling factor corresponding to the first interval is the first scaling factor. The following describes in detail different implementations of performing scaling by using the first scaling factor.

In a possible implementation, the feature map corresponding to the first matrix may be scaled to obtain the scaled feature map. Specifically, in an example, the first scaling factor corresponding to the first interval may be multiplied by the feature map corresponding to the first matrix, to obtain the scaled feature map.

For example, it is assumed that the feature map corresponding to the first matrix includes a plurality of eigenvalues, the plurality of eigenvalues may be separately multiplied by the first scaling factor to obtain a plurality of scaled eigenvalues. The plurality of scaled eigenvalues form the scaled feature map. It is assumed that the feature map corresponding to the first matrix includes a plurality of residual eigenvalues, the plurality of residual eigenvalues may be separately multiplied by the first scaling factor to obtain a plurality of scaled residual eigenvalues. The plurality of scaled residual eigenvalues form the scaled feature map. The foregoing process may be implemented in the residual and variance scale module.

In another possible implementation, the probability distribution parameter map corresponding to the first matrix may be further scaled, to obtain a scaled probability distribution parameter map. Specifically, in an example, the first scaling factor corresponding to the first interval may be multiplied by the probability distribution parameter map corresponding to the first matrix, to obtain the scaled probability distribution parameter map. The foregoing process may be implemented in the adaptive sigma scale module.

For example, it is assumed that the probability distribution parameter map corresponding to the first matrix includes a plurality of probability distribution parameters, the plurality of probability distribution parameters may be separately multiplied by the first scaling factor, to obtain a plurality of scaled probability distribution parameters, and the plurality of scaled probability distribution parameters form the scaled probability distribution parameter map.

Step 1360: Perform entropy encoding on the scaled feature map based on the scaled probability distribution parameter map, and write an entropy encoding result into a bitstream.

In this embodiment of this application, after the scaled probability distribution parameter map and the scaled feature map are obtained, entropy encoding may be performed on the scaled feature map based on the scaled probability distribution parameter map, and the entropy encoding result is written into the bitstream.

In an example, if the scaled feature map includes a plurality of eigenvalues, entropy encoding may be separately performed on the plurality of eigenvalues based on a plurality of probability distribution parameters in the scaled probability distribution parameter map, and the entropy encoding result is written into the bitstream.

In another example, if the scaled feature map includes a plurality of residual eigenvalues, entropy encoding may be separately performed on the plurality of residual eigenvalues based on a plurality of probability distribution parameters in the scaled probability distribution parameter map, and the entropy encoding result is written into the bitstream.

In the foregoing technical solution, threshold intervals are set to intervals that do not overlap each other, so that when the feature map or the probability distribution parameter map is scaled, scaling does not need to be repeated for multiple times. In this way, algorithm complexity can be reduced without compromising coding performance.

For example, an average value is calculated on a $C \times H \times W$ variance map by using an $N \times N$ block as a unit, to obtain a $C \times H/N \times W/N$ variance downsampling map. A value range of the variance is split into m+1 intervals based on the m thresholds, and different intervals correspond to different scaling factors. Each point on the variance downsampling map is separately compared with the m thresholds, to obtain an interval k in which each point is located, thereby obtaining a corresponding scaling factor. Linear weighting is performed on the feature map and the scaling map to obtain a final feature map.

Each point on the variance downsampling map is separately compared with the m thresholds, to obtain an interval in which each point is located, thereby obtaining the corresponding scaling factor. Specifically, one interval corresponds to at least one scaling factor.

At the encoder side, performing linear weighting on the feature map and the scaling map to obtain the final feature map specifically includes: when one interval includes one scaling factor, multiplying the residual feature map by the scaling map to obtain an updated residual feature map. When one interval includes one scaling factor, a variance feature map is multiplied by the scaling map to obtain an updated variance feature map.

At the encoder side, when one interval includes one scaling factor, the threshold quantity m, the m thresholds, and the m+1 scaling factors are written into the bitstream.

At the encoder side, when one interval includes two scaling factors, the threshold quantity m, the m thresholds, and 2*(m+1) scaling factors are written into the bitstream.

At the decoder side, the bitstream is decoded to obtain the threshold quantity m, the m thresholds, and the m+1 (or 2m+2) scaling factors.

At the decoder side, performing linear weighting on the feature map and the scaling map to obtain the final feature map specifically includes:

When one interval includes one scaling factor, the residual feature map is divided by the scaling map to obtain an updated residual feature map.

When one interval includes one scaling factor, a variance feature map is multiplied by the scaling map to obtain an updated variance feature map.

When one interval includes two scaling factors, a predicted feature map is multiplied by a first scaling map to obtain a first feature map, the residual feature map is multiplied by a second scaling map to obtain a second feature map, and a picture feature map, the first feature map, and the second feature map are summed up to obtain an updated picture feature map.

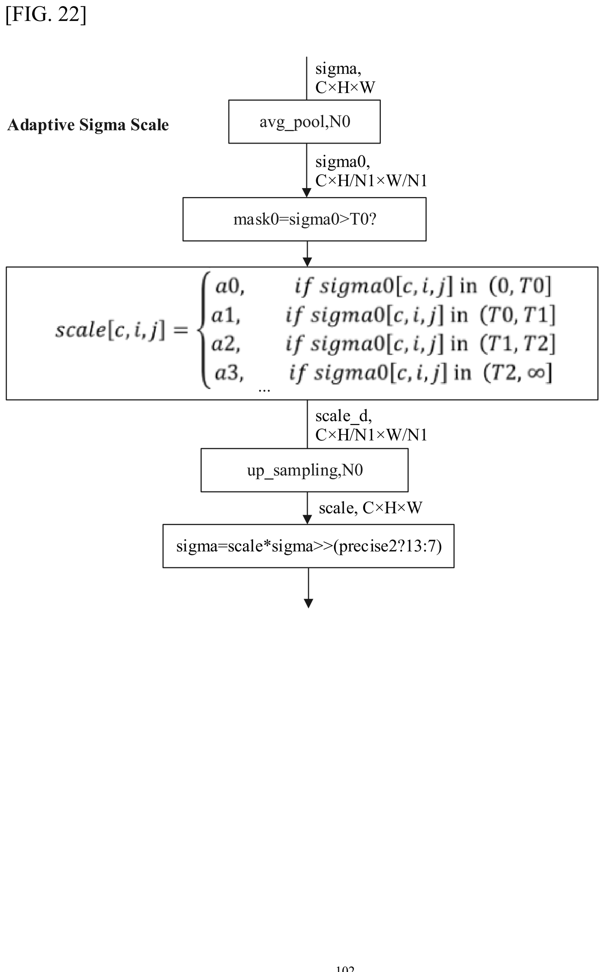

In the technology in this embodiment, the encoder side simplifies the adaptive sigma scale (Adaptive Sigma Scale) module and/or the residual and variance scale (RVS) module, to reduce algorithm complexity while maintaining coding performance. A specific procedure of the adaptive sigma scale (Adpt. Sigma Scale) module is shown in FIG. 22.

Step 1: Determine the threshold quantity m, the thresholds $T_0$ , $T_1$ ..., and $T_m$, and the scaling factors $\{s0_0\}$, $\{s0_1\}$ ..., and $\{s0_{m+1}\}$.

Step 2: Write information about the threshold quantity m, the thresholds $T_0$, $T_1$ ..., and $T_m$, and the scaling factors $\{s0_0\}$, $\{s0_1\}$, ..., and $\{s0_{m+1}\}$ into the bitstream, where this step and subsequent steps are not strictly limited in sequence. For example, a syntax element table for the adaptive scaling technology is shown in table, where num_rvs_params represents the threshold quantity m, threshold_rvs represents the threshold T, scale_rvs represents the scaling factor s0, and presice_flag_thr_rvsbeing 1 indicates that the threshold is encoded by using 16-bit precision, otherwise, the threshold is encoded by using 8-bit precision; and presice_flag_scale_rvs being 1 indicates that the scaling factor is encoded by using the 16-bit precision, otherwise, the scaling factor is encoded by using the 8-bit precision.

Step 3: Calculate an average value on a C × H × W variance map by using an N × N block as a unit, to obtain a C × H/N × W/N variance downsampling map.

Step 4: Each point on the variance downsampling map is separately compared with the m thresholds $T_0$, $T_1$, ..., and $T_m$, to obtain an interval k in which each point is located, as shown in FIG. 12.

Step 5: Obtain a corresponding scaling factor $\{S0_k, S1_k\}$ based on an interval index number k. In this way, a scaling map *scale_rvs* corresponding to the variance map is obtained. For example, when m is 3, the scaling map and the second scaling map are obtained according to the following formulas:

$$scale\_rvs[c,i,j] = \begin{cases} a0, & if\ sigma0[c,i/N,j/N]\ in\ (0,T0] \\ a1, & if\ sigma0[c,i/N,j/N]\ in\ (T0,T1] \\ a2, & if\ sigma0[c,i/N,j/N]\ in\ (T1,T2] \\ a3, & if\ sigma0[c,i/N,j/N]\ in\ (T2,\infty] \end{cases}$$

Step 6: Multiply a variance feature map σ' by the scaling map *scale_rvs* to obtain an updated variance feature map: $\sigma''[c, i, j]$ = scale_rvs[c, i, j]·σ'[c, i, j].

Step 7: Multiply a residual feature map $\hat{r}$ by the scaling map *scale_rvs* to obtain an updated residual feature map: $\hat{r}'[c, i, j]$ = $\hat{r}''[c, i, j]$·scale_rvs[c, i, j]. There is no strict limitation on a sequence of step 7 and step 6.

Step 8: Perform subsequent steps based on the updated variance feature map and the updated residual feature map, to perform entropy encoding and generate a bitstream.

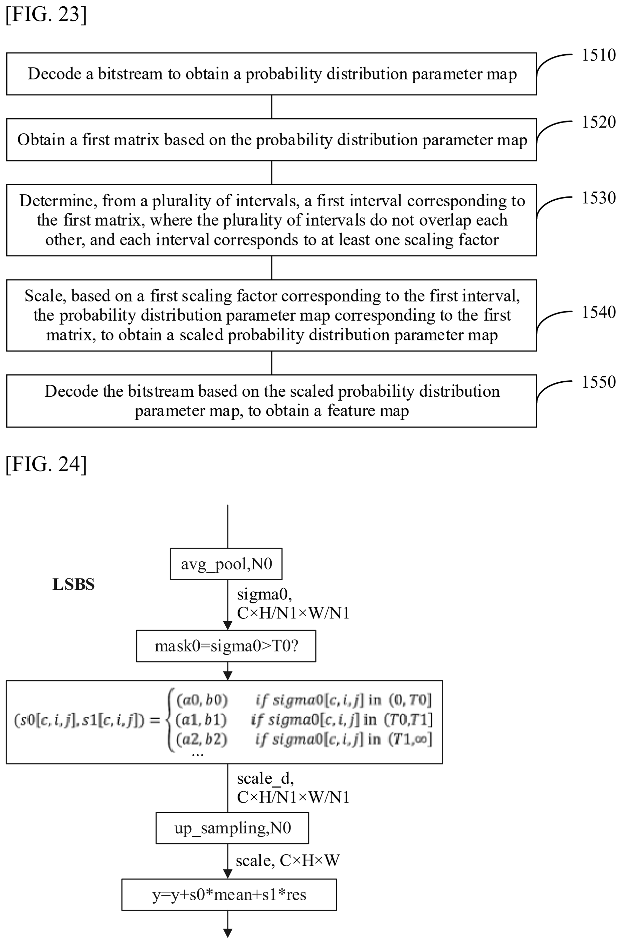

FIG. 23 is a schematic flowchart of a decoding method according to an embodiment of this application. As shown in FIG. 23, the method may include steps 1510 to 1550. The following separately describes steps 1510 to 1550 in detail.

Step 1510: Decode a bitstream to obtain a probability distribution parameter map.

In this embodiment of this application, after obtaining the bitstream, a decoder side may decode the bitstream to obtain the probability distribution parameter map. Specifically, in a possible implementation, refer to FIG. 9. The decoder side may decode the bitstream to obtain quantized hyperprior information z, and obtain the probability distribution parameter map based on the quantized hyperprior information z via a hyper scale decoder (hyper scale decoder) network, a sigma scale (sigma scale) module, and an adaptive sigma scale (adaptive sigma scale) module. For a specific implementation process, refer to the description in FIG. 13. Details are not described herein again.

Step 1520: Obtain a first matrix based on the probability distribution parameter map.

Step 1520 corresponds to step 1330. For details, refer to the description in step 1330, and details are not described herein again.

Step 1530: Determine, from a plurality of intervals, a first interval corresponding to the first matrix, where the plurality of intervals do not overlap each other, and each interval corresponds to at least one scaling factor.

Step 1530 corresponds to step 1340. For details, refer to the description in step 1330, and details are not described herein again.

It should be noted that, if an encoder side writes the value of each threshold and the quantity of thresholds into the bitstream, the decoder side may decode the bitstream to obtain the value of each threshold and the quantity of thresholds, to determine the plurality of intervals based on the quantity of thresholds and the value of each threshold.

Specifically, during decoding, the decoder side may obtain the quantity of thresholds and the value of each threshold through decoding based on the syntax table for the adaptive scaling technology in Table 1.

Step 1540: Scale, based on the first scaling factor corresponding to the first interval, the probability distribution parameter map corresponding to the first matrix, to obtain a scaled probability distribution parameter map.

Before step 1540, the decoder side needs to obtain the first scaling factor corresponding to the first interval. In a possible implementation, if the encoder side further writes the first scaling factor corresponding to the first interval into the bitstream, the decoder side may decode the bitstream to obtain the first scaling factor corresponding to the first interval. Specifically, the decoder side obtains the first scaling factor through decoding based on the syntax table for the adaptive scaling technology in Table 1.

A process of obtaining the scaled probability distribution parameter map based on the first scaling factor in step 1540 is the same as that in step 1350. For details, refer to the description in step 1350. Details are not described herein again.

Step 1550: Decode the bitstream based on the scaled probability distribution parameter map, to obtain a feature map.

In this embodiment of this application, after the scaled probability distribution parameter map is obtained, the bitstream may be decoded based on the scaled probability distribution parameter map, to obtain the feature map.

In an example, it is assumed that the encoder side separately performs, based on a plurality of probability distribution parameters in the scaled probability distribution parameter map, entropy encoding on a plurality of eigenvalues included in a scaled feature map, the decoder side decodes the bitstream based on the scaled probability distribution parameter map, to obtain a feature map including a plurality of eigenvalues. The foregoing process may be implemented in the adaptive sigma scale module at the decoder side.

In another example, it is assumed that the encoder side separately performs, based on the plurality of probability distribution parameters in the scaled probability distribution parameter map, entropy encoding on a plurality of residual eigenvalues included in the scaled feature map, the decoder side decodes the bitstream based on the scaled probability distribution parameter map, to obtain a feature map including a plurality of residual eigenvalues. The foregoing process may be implemented in an inverse residual and variance scale Inv RVS module at the decoder side.

In this embodiment of this application, the decoder side may further divide the feature map (the scaled feature map) obtained through decoding by the first scaling factor corresponding to the first interval, to obtain a feature map before scaling. Specifically, the plurality of eigenvalues or residual eigenvalues included in the feature map may be separately divided by the first scaling factor, to obtain a plurality of eigenvalues before scaling or a plurality of residual eigenvalues before scaling. The plurality of eigenvalues before scaling or the plurality of residual eigenvalues before scaling form the feature map before scaling.

It should be noted that, if the feature map obtained through decoding includes the residual eigenvalues, the decoder side further needs to obtain the eigenvalues based on the residual eigenvalues and predicted values in a predicted map. A method for obtaining the predicted map by the decoder side is the same as the method for obtaining the predicted map by the encoder side. For details, refer to the foregoing description. Details are not described herein again.

The foregoing method may be further applied to a latent scale module, for example, an LSBS module in FIG. 13, configured to refine the foregoing obtained feature map. In a possible implementation, it is assumed that a scaling factor corresponding to the first interval includes a scaling factor 1 and a scaling factor 2, a predicted feature map (a predicted map for short) is multiplied by the scaling factor 1 to obtain a feature map 1, and a residual feature map (a residual map for short) is multiplied by the scaling factor 1 to obtain a feature map 2. The feature map 1 and the feature map 2 are added to the foregoing obtained feature map to obtain an updated feature map.

It should be understood that the residual map may be a residual map before scaling, or may be a scaled residual map. This is not specifically limited in this embodiment of this application.

For example, a decoding side procedure of a component (a Y component or a UV component) in the technical solution in this embodiment is shown in FIG. 24. A feature map z is obtained by decoding a bitstream, and z is input into a hyper scale decoder (hyper scale decoder) network to obtain Gaussian distribution parameter information $\sigma$. After a sigma scale (sigma scale) module and an adaptive sigma scale (Adaptive Sigma Scale) module perform scaling processing, information obtained through scaling processing is input into a subsequent module. A feature residual map r is obtained by decoding the bitstream based on the processed $\sigma$. After an inverse gain unit (inv gain unit) module and an inverse residual and variance scale (Inv RVS) module perform scaling and inverse quantization processing on the residual map r, a residual map obtained through scaling and inverse quantization processing is input into a subsequent module.

In the technology in this embodiment, the decoder side simplifies the adaptive sigma scale (Adaptive Sigma Scale) module and/or the residual and variance scale (Inv RVS) module, and operations of the adaptive sigma scale (Adaptive Sigma Scale) module at the decoder side are the same as those at the encoder side.

Step 1: Decode the bitstream based on the syntax table shown in table, to obtain a threshold quantity m, thresholds $T_0$, $T_1$ ..., and $T_m$, and scaling factors $\{s0_0\}$, $\{s0_1\}$, ..., and $\{s0_{m+1}\}$.

Step 2: Calculate an average value on a C × H × W variance map by using an N × N block as a unit, to obtain a C × H/N × W/N variance downsampling map.

(Same as Step 3 at the encoder side).

Step 3: Each point on the variance downsampling map is separately compared with the m thresholds $T_0$, $T_1$ ..., and $T_m$, to obtain an interval k in which each point is located, as shown in FIG. 21 (same as Step 4 at the encoder side).

Step 4: Obtain a corresponding scaling factor $\{S0_k, S1_k\}$ based on an interval index number k. In this way, a scaling map *scale_rvs* corresponding to the variance map is obtained. For example, when m is 3, the scaling map and a second scaling map are obtained according to the following formulas (same as Step 5 at the encoder side):

$$scale\_rvs[c,i,j] = \begin{cases} a0, & if\ sigma0[c,i/N,j/N]\ in\ (0,T0] \\ a1, & if\ sigma0[c,i/N,j/N]\ in\ (T0,T1] \\ a2, & if\ sigma0[c,i/N,j/N]\ in\ (T1,T2] \\ a3, & if\ sigma0[c,i/N,j/N]\ in\ (T2,\infty] \end{cases}$$

Step 5: Multiply a variance feature map σ' by the scaling map *scale_rvs* to obtain an updated variance feature map: σ" [c, i, j] = *scale_rvs*[c, i, j]·σ' [c, i, j].

Step 6: Decode the bitstream based on the updated variance map to obtain a residual feature map.

Step 7: Divide the residual feature map $\hat{r}$ by the scaling map *scale_rvs* to obtain an updated residual feature map: $\hat{r}$" [c, i, j] = $\hat{r}$'[c, i, j]/*scale_rvs*[c, i, j].

Step 8: Obtain a reconstructed picture based on the updated residual feature map and a processing module like a subsequent decoder network.

Compared with the conventional technology, the technology in this embodiment significantly reduces algorithm complexity while achieving the same coding performance.

This embodiment provides a typical LSBS implementation method. A specific procedure of the decoder side in the technical solution of this embodiment is as follows:

Encoder side:

Step 1: Obtain a threshold quantity m.

Step 2: Obtain m+1 thresholds $T_0$, $T_1$, ..., and $T_m$.

Step 3: Obtain scaling factors {$S0_0$, $S1_0$}, {$S0_1$, $S1_1$}, ..., and {$S0_m$, $S1_m$} of m+1 intervals.

Step 4: Write the threshold quantity m, the thresholds $T_0$ , $T_1$ , ..., and $T_m$, and the scaling factors {$S0_0$, $S1_0$}, {$S0_1$, $S1_1$}, ..., and {$S0_m$, $S1_m$} into a bitstream.

This step and subsequent steps are not strictly limited in sequence. For example, a syntax table for the latent scaling technology is shown in table, where num_lsbs_params represents the threshold quantity m, threshold_lsbs represents the threshold T, scale0_lsbs represents the scaling factor s0 , scale1_lsbs represents the scaling factor s1 , and presice_flag_thr_lsbs being 1 indicates that the threshold is encoded by using 16-bit precision, otherwise, the threshold is encoded by using 8-bit precision; and presice_flag_scale_lsbs being 1 indicates that the scaling factor is encoded by using the 16-bit precision, otherwise, the scaling factor is encoded by using the 8-bit precision. If application_id_lsbs is 0, it indicates that only the Y component is used. If application_id_lsbs is 1, it indicates that only the UV component is used. If application_id_lsbs is 2, it indicates that both the Y component and the UV component are used.

Decoder side:

Step 1: Decode the bitstream based on the syntax table shown in table, to obtain the threshold quantity m, the thresholds $T_0$, $T_1$ ..., and $T_m$, and the scaling factors {$s0_0$, $s1_0$}, {$s0_1$, $s1_1$}, ..., and {$s0_{m+1}$, $s1_{m+1}$}.

Step 2: Calculate an average value on a C × H × W variance map by using an N × N block as a unit, to obtain a C × H/N × W/N variance downsampling map.

Step 3: Each point on the variance downsampling map is separately compared with the m thresholds $T_0$, $T_1$, ..., and $T_m$, to obtain an interval k in which each point is located, as shown in FIG. 21.

Step 4: Obtain a corresponding scaling factor {$S0_k$, $S1_k$} based on an interval index number k. Therefore, a first scaling map scale_lsbs 0 and a second scaling map scale_lsbs 1 that correspond to the variance map are obtained. For example, when m is 2, the first scaling map and the second scaling map are obtained according to the following formulas:

$$(scale\_lsbs0[c,i,j], scale\_lsbs1[c,i,j]) = \begin{cases} (a0,b0) & if\ sigma0[c,i/N,j/N]\ in\ (0,T0] \\ (a1,b1) & if\ sigma0[c,i/N,j/N]\ in\ (T0,T1] \\ (a2,b2) & if\ sigma0[c,i/N,j/N]\ in\ (T1,\infty] \end{cases}$$

Step 5: Multiply a predicted feature map μ by the first scaling map scale_lsbs0 to obtain a first feature map, multiply a

residual feature map $\hat{r}$ by the second scaling map scale_lsbs1 to obtain a second feature map, and sum up a picture feature map $\hat{y}$, the first feature map, and the second feature map to obtain an updated picture feature map:

$$\hat{y}[c, i, j] = \hat{y}[c, i, j] + \text{scale\_lsbs0}[c, i, j] \cdot \mu[c, i, j] + \text{scale\_lsbs1}[c, i, j] \cdot [c, i, j]).$$

Calculate an average value on a C × H × W variance map by using an N × N block as a unit, to obtain a C × H/N × W/N variance downsampling map. A value range of the variance is split into m+1 intervals based on the m thresholds, and different intervals correspond to different scaling factors. Each point on the variance downsampling map is separately compared with the m thresholds, to obtain an interval k in which each point is located, thereby obtaining a corresponding scaling factor. Linear weighting is performed on the feature map and the scaling map to obtain a final feature map.

Beneficial effect corresponding to the key technical point in this embodiment is to reduce complexity of the adaptive quantization technology and the latent scaling technology while maintaining coding performance.

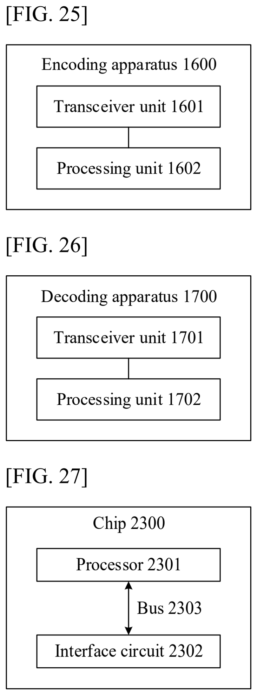

The following describes, with reference to FIG. 25, an encoding apparatus configured to perform the foregoing encoding method.

It may be understood that, to implement the foregoing function, the encoding apparatus includes a corresponding hardware and/or software module for performing the function. With reference to example algorithm steps described in embodiments disclosed in this specification, embodiments of this application can be implemented in the form of hardware or a combination of hardware and computer software. Whether a function is performed by hardware or hardware driven by computer software depends on particular applications and design constraints of the technical solutions. A person skilled in the art may use different methods to implement the described functions for each particular application with reference to embodiments, but it should not be considered that the implementation goes beyond the scope of embodiments of this application.

In embodiments of this application, the encoding apparatus may be divided into functional modules based on the foregoing method examples. For example, each functional module may be obtained through division based on each corresponding function, or two or more functions may be integrated into one processing module. The integrated module may be implemented in a form of hardware. It should be noted that module division in embodiments is an example and is merely logical function division. In practice, there may be another division manner.

When each functional module is obtained through division based on each corresponding function, FIG. 25 is a diagram of a possible composition of the encoding apparatus in the foregoing embodiment. As shown in FIG. 25, the encoding apparatus 1600 may include a transceiver unit 1601 and a processing unit 1602. The processing unit 1602 is configured to obtain a feature map of a to-be-encoded picture. The processing unit 1602 is further configured to obtain a probability distribution parameter map of the feature map. The processing unit 1602 is further configured to obtain a first matrix based on the probability distribution parameter map. The processing unit 1602 is further configured to determine, from a plurality of intervals, a first interval corresponding to the first matrix, where the plurality of intervals do not overlap each other, and each interval corresponds to at least one scaling factor. The processing unit 1602 is further configured to scale, based on a first scaling factor corresponding to the first interval, an eigenvalue that is in the feature map and that corresponds to the first matrix, to obtain a scaled feature map. The processing unit 1602 is further configured to scale, based on the first scaling factor corresponding to the first interval, a probability distribution parameter that is in the probability distribution parameter map and that corresponds to the first matrix, to obtain a scaled probability distribution parameter map. The processing unit 1602 is further configured to: perform entropy encoding on the scaled feature map based on the scaled probability distribution parameter map, and write an entropy encoding result into a bitstream. The transceiver unit 1601 is configured to send the bitstream.

Optionally, the plurality of intervals are split based on a plurality of thresholds, a quantity of the plurality of thresholds is m, a quantity of the plurality of intervals is m+1, and m is an integer greater than 1.

Optionally, the processing unit 1602 is specifically configured to: compare a first value of the first matrix with at least one of the plurality of thresholds, to determine, from the plurality of intervals, the first interval corresponding to the first value.

Optionally, the processing unit 1602 is further configured to write the quantity m of the plurality of thresholds and a value of each threshold into the bitstream.

Optionally, the processing unit 1602 is further configured to write the first scaling factor into the bitstream.

Optionally, the processing unit 1602 is specifically configured to multiply the first scaling factor corresponding to the first interval by the eigenvalue that is in the feature map and that corresponds to the first matrix, to obtain the scaled feature map.

Optionally, the processing unit 1602 is specifically configured to: multiply the first scaling factor corresponding to the first interval by the probability distribution parameter that is in the probability distribution parameter map and that corresponds to the first matrix, to obtain the scaled probability distribution parameter map.

Optionally, the probability distribution parameter in the probability distribution parameter map is a Gaussian distribution parameter, and the first value of the first matrix is an average value or a largest value of Gaussian distribution parameters included in the probability distribution parameter map.

Optionally, the apparatus 1600 is applied to an adaptive sigma scale module or a residual and variance scale module.

Optionally, the feature map is a residual feature map, and the eigenvalue that is in the feature map and that corresponds to the first matrix is a residual eigenvalue.

The following describes, with reference to FIG. 26, a decoding apparatus configured to perform the decoding method.

It may be understood that, to implement the foregoing function, the decoding apparatus includes a corresponding hardware and/or software module for performing the function. With reference to the example algorithm steps described in embodiments disclosed in this specification, embodiments of this application can be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application with reference to embodiments, but it should not be considered that the implementation goes beyond the scope of embodiments of this application.

In embodiments of this application, the decoding apparatus may be divided into functional modules based on the foregoing method examples. For example, each functional module may be obtained through division based on each corresponding function, or two or more functions may be integrated into one processing module. The integrated module may be implemented in a form of hardware. It should be noted that module division in embodiments is an example and is merely logical function division. In practice, there may be another division manner.

When each functional module is obtained through division based on each corresponding function, FIG. 26 is a diagram of a possible composition of the decoding apparatus in the foregoing embodiment. As shown in FIG. 26, the decoding apparatus 1700 may include a transceiver unit 1701 and a processing unit 1702. The transceiver unit 1701 is configured to obtain a bitstream. The processing unit 1702 is configured to decode the bitstream to obtain a probability distribution parameter map. The processing unit 1702 is further configured to obtain a first matrix based on the probability distribution parameter map. The processing unit 1702 is further configured to determine, from a plurality of intervals, a first interval corresponding to the first matrix, where the plurality of intervals do not overlap each other, and each interval corresponds to at least one scaling factor. The processing unit 1702 is further configured to scale, based on a first scaling factor corresponding to the first interval, a probability distribution parameter that is in the probability distribution parameter map and that corresponds to the first matrix, to obtain a scaled probability distribution parameter map. The processing unit 1702 is further configured to decode the bitstream based on the scaled probability distribution parameter map, to obtain a feature map.

Optionally, the processing unit 1702 is further configured to decode the bitstream to obtain a quantity m of a plurality of thresholds and a value of each threshold, where the plurality of intervals are split based on the plurality of thresholds, a quantity of the plurality of intervals is m+1, and m is an integer greater than 1.

Optionally, the processing unit 1702 is specifically configured to: compare a first value of the first matrix with at least one of the plurality of thresholds, to determine, from the plurality of intervals, the first interval corresponding to the first value.

Optionally, the processing unit 1702 is further configured to decode the bitstream to obtain the first scaling factor.

Optionally, the processing unit 1702 is specifically configured to: multiply the first scaling factor corresponding to the first interval by the probability distribution parameter that is in the probability distribution parameter map and that corresponds to the first matrix, to obtain the scaled probability distribution parameter map.

Optionally, the probability distribution parameter in the probability distribution parameter map is a Gaussian distribution parameter, and the first value of the first matrix is an average value or a largest value of Gaussian distribution parameters included in the probability distribution parameter map.

Optionally, the processing unit 1702 is further configured to divide the feature map by the first scaling factor corresponding to the first interval, to obtain a feature map before scaling.

Optionally, the apparatus 1700 is applied to an adaptive sigma scale module or an inverse residual and variance scale module.

Optionally, the feature map is a residual feature map, and the residual feature map includes a residual eigenvalue.

Optionally, the feature map includes an eigenvalue, the apparatus 1700 is applied to a latent scale module, and the first interval corresponds to the first scaling factor and a second scaling factor; the processing unit 1702 is further configured to obtain a predicted map and a residual map of the feature map; the processing unit 1702 is further configured to scale, based on the first scaling factor corresponding to the first interval, a predicted eigenvalue that is in the predicted map and that corresponds to the first matrix, to obtain a scaled predicted feature map; the processing unit 1702 is further configured to scale, based on the second scaling factor corresponding to the first interval, a residual eigenvalue that is in the residual map and that corresponds to the first matrix, to obtain a scaled residual feature map; and the processing unit 1702 is further configured to update the feature map based on the scaled predicted map and the scaled residual map, to obtain an updated feature map.

An embodiment of this application further provides an encoding apparatus. The apparatus includes at least one processor. When the at least one processor executes program code or instructions, the foregoing related method steps are implemented to implement the encoding method in the foregoing embodiment.

Optionally, the apparatus may further include at least one memory, and the at least one memory is configured to store the program code or the instructions.

An embodiment of this application further provides a decoding apparatus. The apparatus includes at least one processor. When the at least one processor executes program code or instructions, the foregoing related method steps are implemented to implement the decoding method in the foregoing embodiment.

Optionally, the apparatus may further include at least one memory, and the at least one memory is configured to store the program code or the instructions.

An embodiment of this application further provides a bitstream. The bitstream includes data obtained by performing entropy encoding on a scaled feature map based on a scaled probability distribution parameter map, where the scaled probability distribution parameter map is obtained by scaling, based on a first scaling factor corresponding to a first interval, a probability distribution parameter that is in a probability distribution parameter map and that corresponds to a first matrix, the scaled feature map is obtained by scaling, based on the first scaling factor corresponding to the first interval, an eigenvalue that is in a feature map and that corresponds to the first matrix, the first scaling factor is a scaling factor of the first interval that is in a plurality of intervals and that corresponds to the first matrix, the plurality of intervals do not overlap each other, each interval corresponds to at least one scaling factor, the first matrix is obtained based on the probability distribution parameter map of the feature map, and the feature map is obtained based on a to-be-encoded picture.

An embodiment of this application further provides a computer storage medium. The computer storage medium stores computer instructions. When the computer instructions are run on an encoding apparatus, the encoding apparatus is enabled to perform the foregoing related method steps to implement the encoding and decoding method in the foregoing embodiments.

An embodiment of this application further provides a computer program product. When the computer program product runs on a computer, the computer is enabled to perform the foregoing related steps, to implement the encoding and decoding method in the foregoing embodiments.

An embodiment of this application further provides an encoding and decoding apparatus. The apparatus may be specifically a chip, an integrated circuit, a component, or a module. Specifically, the apparatus may include a connected processor and a memory configured to store instructions, or the apparatus includes at least one processor, configured to obtain instructions from an external memory. When the apparatus runs, the processor may execute the instructions, to enable the chip to perform the encoding and decoding method in the foregoing method embodiments.

FIG. 27 is a diagram of a structure of a chip 2300. The chip 2300 includes one or more processors 2301 and an interface circuit 2302. Optionally, the chip 2300 may further include a bus 2303.

The processor 2301 may be an integrated circuit chip and has a signal processing capability. In an implementation process, the steps of the foregoing encoding and decoding method may be implemented by using an integrated logic circuit of hardware in the processor 2301, or by using instructions in a form of software.

Optionally, the processor 2301 may be a general-purpose processor, a digital signal processor (digital signal processing, DSP), an application-specific integrated circuit (application specific integrated circuit, ASIC), a field-programmable gate array (field-programmable gate array, FPGA) or another programmable logic device, a discrete gate or a transistor logic device, or a discrete hardware component. The processor 2301 may implement or perform the methods and steps that are disclosed in embodiments of this application. The general-purpose processor may be a microprocessor, or the processor may be any conventional processor, or the like.

The interface circuit 2302 may be configured to send or receive data, instructions, or information. The processor 2301 may process data, instructions, or other information received through the interface circuit 2302, and may send processed information through the interface circuit 2302.

Optionally, the chip further includes a memory. The memory may include a read-only memory and a random access memory, and provide operation instructions and data for the processor. A part of the memory may further include a non-volatile random access memory (non-volatile random access memory, NVRAM).

Optionally, the memory stores an executable software module or a data structure, and the processor may perform a corresponding operation by invoking the operation instructions stored in the memory (the operation instructions may be stored in an operating system).

Optionally, the chip may be used in the encoding apparatus or a DOP in embodiments of this application. Optionally, the interface circuit 2302 may be configured to output an execution result of the processor 2301. For the encoding and decoding method provided in one or more of embodiments of this application, refer to the foregoing embodiments. Details are not described herein again.

It should be noted that functions corresponding to the processor 2301 and the interface circuit 2302 may be implemented by using a hardware design, or may be implemented by using a software design, or may be implemented by using a combination of software and hardware. This is not limited herein.

The apparatus, the computer storage medium, the computer program product, or the chip provided in embodiments are all configured to perform the corresponding methods provided above. Therefore, for beneficial effect that can be achieved by the apparatus, the computer storage medium, the computer program product, or the chip, refer to beneficial effect of the corresponding methods provided above. Details are not described herein again.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of embodiments of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in embodiments of this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The foregoing units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit.

When the functions are implemented in a form of software functional unit and sold or used as an independent product, the functions may be stored in a computer-readable storage medium. Based on such an understanding, the technical solutions of embodiments of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The storage medium includes: any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of embodiments of this application. However, the protection scope of embodiments of this application is not limited thereto. Any change or replacement readily figured out by a person skilled in the art within the technical scope disclosed in embodiments of this application shall fall within the protection scope of embodiments of this application. Therefore, the protection scope of embodiments of this application shall be subject to the protection scope of the claims.

**Claims**

1.  An encoding method, wherein the method comprises:

    obtaining a feature map of a to-be-encoded picture;
    obtaining a probability distribution parameter map of the feature map;
    obtaining a first matrix based on the probability distribution parameter map;

determining, from a plurality of intervals, a first interval corresponding to the first matrix, wherein the plurality of intervals do not overlap each other, and each interval corresponds to at least one scaling factor;

scaling, based on a first scaling factor corresponding to the first interval, an eigenvalue that is in the feature map and that corresponds to the first matrix, to obtain a scaled feature map;

scaling, based on the first scaling factor corresponding to the first interval, a probability distribution parameter that is in the probability distribution parameter map and that corresponds to the first matrix, to obtain a scaled probability distribution parameter map; and

performing entropy encoding on the scaled feature map based on the scaled probability distribution parameter map, and writing an entropy encoding result into a bitstream.

2. The method according to claim 1, wherein the plurality of intervals are split based on a plurality of thresholds, a quantity of the plurality of thresholds is m, a quantity of the plurality of intervals is m+1, and m is an integer greater than 1.

3. The method according to claim 2, wherein determining, from the plurality of intervals, the first interval corresponding to the first matrix comprises:
comparing a first value of the first matrix with at least one of the plurality of thresholds, to determine, from the plurality of intervals, the first interval corresponding to the first value.

4. The method according to claim 2 or 3, wherein the method further comprises:
writing the quantity m of the plurality of thresholds and a value of each threshold into the bitstream.

5. The method according to any one of claims 1 to 4, wherein the method further comprises:
writing the first scaling factor into the bitstream.

6. The method according to any one of claims 1 to 5, wherein scaling, based on the first scaling factor corresponding to the first interval, the eigenvalue that is in the feature map and that corresponds to the first matrix, to obtain the scaled feature map comprises:
multiplying the first scaling factor corresponding to the first interval by the eigenvalue that is in the feature map and that corresponds to the first matrix, to obtain the scaled feature map.

7. The method according to any one of claims 1 to 6, wherein scaling, based on the first scaling factor corresponding to the first interval, the probability distribution parameter that is in the probability distribution parameter map and that corresponds to the first matrix, to obtain the scaled probability distribution parameter map comprises:
multiplying the first scaling factor corresponding to the first interval by the probability distribution parameter that is in the probability distribution parameter map and that corresponds to the first matrix, to obtain the scaled probability distribution parameter map.

8. The method according to claim 7, wherein the probability distribution parameter in the probability distribution parameter map is a Gaussian distribution parameter, and the first value of the first matrix is an average value or a largest value of Gaussian distribution parameters comprised in the probability distribution parameter map.

9. The method according to any one of claims 1 to 8, wherein the method is applied to an adaptive sigma scale module or a residual and variance scale module.

10. The method according to any one of claims 1 to 9, wherein the feature map is a residual feature map, and the eigenvalue that is in the feature map and that corresponds to the first matrix is a residual eigenvalue.

11. A decoding method, wherein the method comprises:

decoding a bitstream to obtain a probability distribution parameter map;
obtaining a first matrix based on the probability distribution parameter map;
determining, from a plurality of intervals, a first interval corresponding to the first matrix, wherein the plurality of intervals do not overlap each other, and each interval corresponds to at least one scaling factor;
scaling, based on a first scaling factor corresponding to the first interval, a probability distribution parameter that is in the probability distribution parameter map and that corresponds to the first matrix, to obtain a scaled probability distribution parameter map; and
decoding the bitstream based on the scaled probability distribution parameter map, to obtain a feature map.

12. The method according to claim 11, wherein the method further comprises:
decoding the bitstream to obtain a quantity m of a plurality of thresholds and a value of each threshold, wherein the plurality of intervals are split based on the plurality of thresholds, a quantity of the plurality of intervals is m+1, and m is an integer greater than 1.

13. The method according to claim 12, wherein determining, from the plurality of intervals, the first interval corresponding to the first matrix comprises:
comparing a first value of the first matrix with at least one of the plurality of thresholds, to determine, from the plurality of intervals, the first interval corresponding to the first value.

14. The method according to any one of claims 11 to 13, wherein the method further comprises:
decoding the bitstream to obtain the first scaling factor.

15. The method according to any one of claims 11 to 14, wherein scaling, based on the first scaling factor corresponding to the first interval, the probability distribution parameter that is in the probability distribution parameter map and that corresponds to the first matrix, to obtain the scaled probability distribution parameter map comprises:
multiplying the first scaling factor corresponding to the first interval by the probability distribution parameter that is in the probability distribution parameter map and that corresponds to the first matrix, to obtain the scaled probability distribution parameter map.

16. The method according to claim 15, wherein the probability distribution parameter in the probability distribution parameter map is a Gaussian distribution parameter, and the first value of the first matrix is an average value or a largest value of Gaussian distribution parameters comprised in the probability distribution parameter map.

17. The method according to any one of claims 11 to 16, wherein the method further comprises:
dividing the feature map by the first scaling factor corresponding to the first interval, to obtain a feature map before scaling.

18. The method according to any one of claims 11 to 17, wherein the method is applied to an adaptive sigma scale module or an inverse residual and variance scale module.

19. The method according to any one of claims 11 to 18, wherein the feature map is a residual feature map, and the residual feature map comprises a residual eigenvalue.

20. The method according to any one of claims 11 to 18, wherein the feature map comprises an eigenvalue, the method is applied to a latent scale module, the first interval corresponds to the first scaling factor and a second scaling factor, and the method further comprises:

obtaining a predicted map and a residual map of the feature map;
scaling, based on the first scaling factor corresponding to the first interval, a predicted eigenvalue that is in the predicted map and that corresponds to the first matrix, to obtain a scaled predicted feature map;
scaling, based on the second scaling factor corresponding to the first interval, a residual eigenvalue that is in the residual map and that corresponds to the first matrix, to obtain a scaled residual feature map; and
updating the feature map based on the scaled predicted map and the scaled residual map, to obtain an updated feature map.

21. An encoding apparatus, comprising a transceiver unit and a processing unit, wherein

the processing unit is configured to: obtain a feature map of a to-be-encoded picture, and obtain a probability distribution parameter map of the feature map; and further configured to: obtain a first matrix based on the probability distribution parameter map; determine, from a plurality of intervals, a first interval corresponding to the first matrix, wherein the plurality of intervals do not overlap each other, and each interval corresponds to at least one scaling factor; scale, based on a first scaling factor corresponding to the first interval, an eigenvalue that is in the feature map and that corresponds to the first matrix, to obtain a scaled feature map; scale, based on the first scaling factor corresponding to the first interval, a probability distribution parameter that is in the probability distribution parameter map and that corresponds to the first matrix, to obtain a scaled probability distribution parameter map; and perform entropy encoding on the scaled feature map based on the scaled probability distribution parameter map, and write an entropy encoding result into a bitstream; and

the transceiver unit is configured to send the bitstream.

22. The apparatus according to claim 21, wherein the plurality of intervals are split based on a plurality of thresholds, a quantity of the plurality of thresholds is m, a quantity of the plurality of intervals is m+1, and m is an integer greater than 1.

23. The apparatus according to claim 22, wherein the processing unit is specifically configured to:
compare a first value of the first matrix with at least one of the plurality of thresholds, to determine, from the plurality of intervals, the first interval corresponding to the first value.

24. The apparatus according to claim 22 or 23, wherein
the processing unit is further configured to write the quantity m of the plurality of thresholds and a value of each threshold into the bitstream.

25. The apparatus according to any one of claims 21 to 24, wherein
the processing unit is further configured to write the first scaling factor into the bitstream.

26. The apparatus according to any one of claims 21 to 25, wherein the processing unit is specifically configured to:
multiply the first scaling factor corresponding to the first interval by the eigenvalue that is in the feature map and that corresponds to the first matrix, to obtain the scaled feature map.

27. The apparatus according to any one of claims 21 to 26, wherein the processing unit is specifically configured to:
multiply the first scaling factor corresponding to the first interval by the probability distribution parameter that is in the probability distribution parameter map and that corresponds to the first matrix, to obtain the scaled probability distribution parameter map.

28. The apparatus according to claim 27, wherein the probability distribution parameter in the probability distribution parameter map is a Gaussian distribution parameter, and the first value of the first matrix is an average value or a largest value of Gaussian distribution parameters comprised in the probability distribution parameter map.

29. The apparatus according to any one of claims 21 to 28, wherein the apparatus is applied to an adaptive sigma scale module or a residual and variance scale module.

30. The apparatus according to any one of claims 21 to 29, wherein the feature map is a residual feature map, and the eigenvalue that is in the feature map and that corresponds to the first matrix is a residual eigenvalue.

31. A decoding apparatus, comprising a transceiver unit and a processing unit, wherein

the transceiver unit is configured to obtain a bitstream; and
the processing unit is configured to decode the bitstream to obtain a probability distribution parameter map; and further configured to: obtain a first matrix based on the probability distribution parameter map; determine, from a plurality of intervals, a first interval corresponding to the first matrix, wherein the plurality of intervals do not overlap each other, and each interval corresponds to at least one scaling factor; scale, based on a first scaling factor corresponding to the first interval, a probability distribution parameter that is in the probability distribution parameter map and that corresponds to the first matrix, to obtain a scaled probability distribution parameter map; and decode the bitstream based on the scaled probability distribution parameter map, to obtain a feature map.

32. The apparatus according to claim 31, wherein
the processing unit is further configured to decode the bitstream to obtain a quantity m of a plurality of thresholds and a value of each threshold, wherein the plurality of intervals are split based on the plurality of thresholds, a quantity of the plurality of intervals is m+1, and m is an integer greater than 1.

33. The apparatus according to claim 32, wherein the processing unit is specifically configured to:
compare a first value of the first matrix with at least one of the plurality of thresholds, to determine, from the plurality of intervals, the first interval corresponding to the first value.

34. The apparatus according to any one of claims 31 to 33, wherein

the processing unit is further configured to decode the bitstream to obtain the first scaling factor.

35. The apparatus according to any one of claims 31 to 34, wherein the processing unit is specifically configured to: multiply the first scaling factor corresponding to the first interval by the probability distribution parameter that is in the probability distribution parameter map and that corresponds to the first matrix, to obtain the scaled probability distribution parameter map.

36. The apparatus according to claim 35, wherein the probability distribution parameter in the probability distribution parameter map is a Gaussian distribution parameter, and the first value of the first matrix is an average value or a largest value of Gaussian distribution parameters comprised in the probability distribution parameter map.

37. The apparatus according to any one of claims 31 to 36, wherein
the processing unit is further configured to divide the feature map by the first scaling factor corresponding to the first interval, to obtain a feature map before scaling.

38. The apparatus according to any one of claims 31 to 37, wherein the apparatus is applied to an adaptive sigma scale module or an inverse residual and variance scale module.

39. The apparatus according to any one of claims 31 to 38, wherein the feature map is a residual feature map, and the residual feature map comprises a residual eigenvalue.

40. The apparatus according to any one of claims 31 to 38, wherein the feature map comprises an eigenvalue, the apparatus is applied to a latent scale module, and the first interval corresponds to the first scaling factor and a second scaling factor;

the processing unit is further configured to obtain a predicted map and a residual map of the feature map;
the processing unit is further configured to scale, based on the first scaling factor corresponding to the first interval, a predicted eigenvalue that is in the predicted map and that corresponds to the first matrix, to obtain a scaled predicted feature map;
the processing unit is further configured to scale, based on the second scaling factor corresponding to the first interval, a residual eigenvalue that is in the residual map and that corresponds to the first matrix, to obtain a scaled residual feature map; and
the processing unit is further configured to update the feature map based on the scaled predicted map and the scaled residual map, to obtain an updated feature map.

41. An encoding apparatus, comprising at least one processor and a memory, wherein the at least one processor executes a program or instructions stored in the memory, to enable the encoding apparatus to implement the method according to any one of claims 1 to 10.

42. A decoding apparatus, comprising at least one processor and a memory, wherein the at least one processor executes a program or instructions stored in the memory, to enable the decoding apparatus to implement the method according to any one of claims 11 to 20.

43. A bitstream, comprising data obtained by performing entropy encoding on a scaled feature map based on a scaled probability distribution parameter map, wherein the scaled probability distribution parameter map is obtained by scaling, based on a first scaling factor corresponding to a first interval, a probability distribution parameter that is in a probability distribution parameter map and that corresponds to a first matrix, the scaled feature map is obtained by scaling, based on the first scaling factor corresponding to the first interval, an eigenvalue that is in a feature map and that corresponds to the first matrix, the first scaling factor is a scaling factor of the first interval that is in a plurality of intervals and that corresponds to the first matrix, the plurality of intervals do not overlap each other, each interval corresponds to at least one scaling factor, the first matrix is obtained based on the probability distribution parameter map of the feature map, and the feature map is obtained based on a to-be-encoded picture.

44. A computer-readable storage medium, configured to store a computer program, wherein when the computer program is run on a computer or a processor, the computer or the processor is enabled to implement the method according to any one of claims 1 to 10 or the method according to any one of claims 11 to 20.

45. A computer program product, wherein the computer program product comprises instructions, and when the instructions are run on a computer or a processor, the computer or the processor is enabled to implement the method according to any one of claims 1 to 10 or the method according to any one of claims 11 to 20.

[FIG. 1]

10

Source device 12

Picture source 16

Raw picture data 17

Preprocessor 18

Preprocessed picture data 19

Encoder 20

Encoded picture data 21

Communication interface 22

Training engine 25

Communication channel 13

Destination device 14

Display device 34

Post-processed picture data 33

Post-processor 32

Decoded picture data 31

Decoder 30

Encoded picture data 21

Communication interface 28

EP 4 697 728 A1

[FIG. 2]

[FIG. 3]

Encoder 20

EP 4 697 728 A1

45

[FIG. 4]

Video data/Video picture block

112

Residual block

Transformer 101

Quantizer 102

Intra predictor 109

108

Inter predictor 110

Prediction block

Syntax element

Quantized residual transform coefficient

Entropy encoder 103

Memory 107 (reference picture)

Reconstructed picture block

Decoded residual block

Inverse transformer 105

Dequantizer 104

Loop filter 106

Filtered and reconstructed picture block

111

100

Encoded bitstream

Post-processing entity 41

EP 4 697 728 A1

46

[FIG. 5]

[FIG. 6]

| B2 | | B1 | B0 |
|---|---|---|---|

C

A1

A0 | T

[FIG. 7]

[FIG. 8]

[FIG. 9]

EP 4 697 728 A1

[FIG. 10]

[FIG. 11]

[FIG. 12]

Encoder-side framework

Picture x → Encoder network → Feature map y → Hyper encoder network → Hyperprior information z → Quantize → Quantized hyperprior information z → Hyper scale decoder network → First probability distribution parameter → Sigma scale module → Second probability distribution parameter → Adaptive sigma scale module → Third probability distribution parameter

Feature map y → Joint context network ← Hyper decoder network ← Quantized hyperprior information z

Joint context network → Predicted map u → (−) ← Feature map y

(−) → Residual map r → Gain unit module → Residual map r` → Residual and variance scale module → Residual map r``

[FIG. 13]

Decoder-side framework

EP 4 697 728 A1

EP 4 697 728 A1

[FIG. 14]

[FIG. 15]

**Adaptive Sigma Scale**

sigma, C×H×W

avg_pool,N0

sigma0, C×H/N1×W/N1

mask0=sigma0>T0?

mask0_d, C×H/N1×W/N1

up_sampling,N0

mask0, C×H×W

mask0==1:sigma=scale0*sigma>>(precise0?13:7)

sigma, C×H×W

avg_pool,N1

sigma1, C×H/N2×W/N2

mask1=sigma1>T1?

mask1_d, C×H/N2×W/N2

up_sampling,N1

mask1, C×H×W

mask1==1:sigma=scale1*sigma>>(precise1?13:7)

sigma, C×H×W

avg_pool,N2

sigma2, C×H/N3×W/N3

mask2=sigma2<T2?

mask2_d, C×H/N3×W/N3

up_sampling,N2

mask2, C×H×W

mask2==1:sigma=scale2*sigma>>(precise2?13:7)

[FIG. 16]

**Inverse Residual Scale**

sigma, C×H×W

| avg_pool,N0 |

sigma0, C×H/N1×W/N1

| mask0=sigma0>T0? |

mask0_d, C×H/N1×W/N1

| up_sampling,N0 |

mask0, C×H×W

| mask0==1:res=(res/scale0)<<(precise0?13:7) |

| mask1==1:res=(res/scale1)<<(precise1?13:7) |

...

| mask2==1:res=(res/scale2)<<(precise2?13:7) |

sigma, C×H×W

| avg_pool,N1 |

sigma1, C×H/N2×W/N2

| mask1=sigma1>T1? |

mask1_d, C×H/N2×W/N2

| up_sampling,N1 |

mask1, C×H×W

sigma, C×H×W

| avg_pool,N2 |

sigma2, C×H/N3×W/N3

| mask2=sigma2<T2? |

mask2_d, C×H/N3×W/N3

| up_sampling,N2 |

mask2, C×H×W

...

[FIG. 17]

[FIG. 18]

EP 4 697 728 A1

[FIG. 19]

[FIG. 20]

| Obtain a feature map of a to-be-encoded picture | 1310 |

| Obtain a probability distribution parameter map of the feature map | 1320 |

| Obtain a first matrix based on the probability distribution parameter map | 1330 |

| Determine, from a plurality of intervals, a first interval corresponding to the first matrix, where the plurality of intervals do not overlap each other, and each interval corresponds to at least one scaling factor | 1340 |

| Scale, based on a first scaling factor corresponding to the first interval, the feature map and the probability distribution parameter map that correspond to the first matrix, to obtain a scaled feature map and a scaled probability distribution parameter map | 1350 |

| Perform entropy encoding on the scaled feature map based on the scaled probability distribution parameter map, and write an entropy encoding result into a bitstream | 1360 |

EP 4 697 728 A1

[FIG. 21]

Interval 0    Interval 1    Interval 2    ...    Interval m

T1    T2    ...    Tm    sigma

[FIG. 22]

**Adaptive Sigma Scale**

sigma,
C×H×W

avg_pool,N0

sigma0,
C×H/N1×W/N1

mask0=sigma0>T0?

$$scale[c,i,j] = \begin{cases} a0, & if\ sigma0[c,i,j]\ in\ (0,T0] \\ a1, & if\ sigma0[c,i,j]\ in\ (T0,T1] \\ a2, & if\ sigma0[c,i,j]\ in\ (T1,T2] \\ a3, & if\ sigma0[c,i,j]\ in\ (T2,\infty] \\ \ ... \end{cases}$$

scale_d,
C×H/N1×W/N1

up_sampling,N0

scale, C×H×W

sigma=scale*sigma>>(precise2?13:7)

[FIG. 23]

| Decode a bitstream to obtain a probability distribution parameter map | 1510 |

| Obtain a first matrix based on the probability distribution parameter map | 1520 |

| Determine, from a plurality of intervals, a first interval corresponding to the first matrix, where the plurality of intervals do not overlap each other, and each interval corresponds to at least one scaling factor | 1530 |

| Scale, based on a first scaling factor corresponding to the first interval, the probability distribution parameter map corresponding to the first matrix, to obtain a scaled probability distribution parameter map | 1540 |

| Decode the bitstream based on the scaled probability distribution parameter map, to obtain a feature map | 1550 |

[FIG. 24]

**LSBS**

avg_pool,N0

sigma0,
$C \times H/N1 \times W/N1$

mask0=sigma0>T0?

$$(s0[c,i,j], s1[c,i,j]) = \begin{cases} (a0,b0) & \text{if } sigma0[c,i,j] \text{ in } (0,T0] \\ (a1,b1) & \text{if } sigma0[c,i,j] \text{ in } (T0,T1] \\ (a2,b2) & \text{if } sigma0[c,i,j] \text{ in } (T1,\infty] \\ \dots \end{cases}$$

scale_d,
$C \times H/N1 \times W/N1$

up_sampling,N0

scale, $C \times H \times W$

y=y+s0*mean+s1*res

[FIG. 25]

Encoding apparatus 1600

Transceiver unit 1601

Processing unit 1602

[FIG. 26]

Decoding apparatus 1700

Transceiver unit 1701

Processing unit 1702

[FIG. 27]

Chip 2300

Processor 2301

Bus 2303

Interface circuit 2302

# EP 4 697 728 A1

## INTERNATIONAL SEARCH REPORT

| | International application No. |
|---|---|
| | **PCT/CN2024/084940** |

### A. CLASSIFICATION OF SUBJECT MATTER

H04N19/91(2014.01)i

According to International Patent Classification (IPC) or to both national classification and IPC

### B. FIELDS SEARCHED

Minimum documentation searched (classification system followed by classification symbols)

IPC:H04N

Documentation searched other than minimum documentation to the extent that such documents are included in the fields searched

Electronic data base consulted during the international search (name of data base and, where practicable, search terms used)

CNABS, CNTXT, ENTXT, VEN, CNKI, JVET: 编码, 解码, 译码, 图像, 特征图, 概率分布, 矩阵, 缩放因子, 参数图, 熵编码, 码流, encoding, decoding, coding, image, feature map, probability distribution, matrix, scaling factor, parameter map, entropy coding, bit stream

### C. DOCUMENTS CONSIDERED TO BE RELEVANT

| Category* | Citation of document, with indication, where appropriate, of the relevant passages | Relevant to claim No. |
|---|---|---|
| A | CN 116112673 A (HUAWEI TECHNOLOGIES CO., LTD.) 12 May 2023 (2023-05-12) description, paragraphs [0112], [0113] and [0142] | 1-45 |
| A | CN 115604485 A (HUAWEI TECHNOLOGIES CO., LTD. et al.) 13 January 2023 (2023-01-13) entire document | 1-45 |
| A | US 2013114709 A1 (CANON, K.K.) 09 May 2013 (2013-05-09) entire document | 1-45 |
| A | CN 114095728 A (ZHEJIANG DAHUA TECHNOLOGY CO., LTD.) 25 February 2022 (2022-02-25) entire document | 1-45 |
| A | BROSS, B. et al. "Versatile Video Coding (Draft 6)" *Joint Video Experts Team (JVET) of ITU-T SG 16 WP 3 and ISO/IEC JTC 1/SC 29/WG 11 15th Meeting: Gothenburg, SE, 3–12 July 2019, JVET-O2001-vE,* 12 July 2019 (2019-07-12), entire document | 1-45 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **23 April 2024** | **01 June 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
**Information on patent family members**

International application No.

**PCT/CN2024/084940**

| Patent document cited in search report | | | Publication date (day/month/year) | Patent family member(s) | | | Publication date (day/month/year) |
|---|---|---|---|---|---|---|---|
| CN | 116112673 | A | 12 May 2023 | WO | 2023082955 | A1 | 19 May 2023 |
| CN | 115604485 | A | 13 January 2023 | WO | 2023279961 | A1 | 12 January 2023 |
| US | 2013114709 | A1 | 09 May 2013 | US | 9271001 | B2 | 23 February 2016 |
| | | | | JP | 2013123201 | A | 20 June 2013 |
| | | | | JP | 5871628 | B2 | 01 March 2016 |
| CN | 114095728 | A | 25 February 2022 | CN | 114095728 | B | 15 July 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310854045
- CN 202311052220